(19)

Europäisches
Patentamt
European
Patent Office
Office européen
des brevets

(11) **EP 4 387 180 A1**

(12) **EUROPEAN PATENT APPLICATION**
published in accordance with Art. 153(4) EPC

(43) Date of publication:
**19.06.2024 Bulletin 2024/25**

(21) Application number: **22869145.7**

(22) Date of filing: **09.09.2022**

(51) International Patent Classification (IPC):
*H04L 27/26* (2006.01)

(52) Cooperative Patent Classification (CPC):
**H04L 5/00; H04L 27/26; H04W 4/02; H04W 4/06;
H04W 56/00**

(86) International application number:
**PCT/CN2022/118178**

(87) International publication number:
**WO 2023/040776 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.09.2021 CN 202111113069
15.10.2021 CN 202111204080**

(71) Applicant: **Huawei Technologies Co., Ltd.
Shenzhen, Guangdong 518129 (CN)**

(72) Inventors:
• **DUAN, Ruiyang**
  **Shenzhen, Guangdong 518129 (CN)**
• **WANG, Bichai**
  **Shenzhen, Guangdong 518129 (CN)**
• **LI, Xueru**
  **Shenzhen, Guangdong 518129 (CN)**

(74) Representative: **Körber, Martin Hans et al
Mitscherlich PartmbB
Patent- und Rechtsanwälte
Karlstraße 7
80333 München (DE)**

(54) **SIGNAL TRANSMISSION METHOD, APPARATUS AND SYSTEM**

(57)     This application provides a signal transmission method, an apparatus, and a system, to improve a preamble capacity in a preamble group, so that synchronous ranging of more apparatuses may be supported. The method includes: A second device generates a first signal, and sends the first signal to a first device. Correspondingly, after receiving the first signal, the first device processes the first signal based on a target preamble. The first signal includes a preamble symbol determined based on a target preamble whose length is N, and the target preamble belongs to a target preamble group including L preambles, where L is a positive integer greater than or equal to 3, and N is equal to 31, 91, 121, 127, or 133. When N is equal to 31, the target preamble group includes at least one of the following four preambles:
+0000-0++0-0+000+-+0++++-00-00-;
-0-00+000+0++-++0+-00+-0000++0;
0+0++00++-+-000++0+-0+0-0000-0;                 and
0++-00+-0---++0+000+00+0+0-+000, where + represents 1, and - represents -1.

Second device m

First device

S401: Generate a first signal, where the first signal includes a preamble symbol determined based on a target preamble whose length is N, and the target preamble belongs to a target preamble group including L preambles, where L is a positive integer greater than or equal to 3, and N is equal to 31, 91, 121, 127, or 133

S402: First signal

S403: Process the first signal based on the target preamble

FIG. 4

## Description

This application claims priorities to Chinese Patent Application No. 202111113069.1, filed with the China National Intellectual Property Administration on September 18, 2021 and entitled "ULTRA-WIDEBAND RANGING SEQUENCE GROUPING AND SELECTION METHOD", and to Chinese Patent Application No. 202111204080.9, filed with the China National Intellectual Property Administration on October 15, 2021 and entitled "SIGNAL TRANSMISSION METHOD, APPARATUS, AND SYSTEM", both of which are incorporated herein by reference in their entireties.

## TECHNICAL FIELD

Embodiments of this application relate to the field of wireless communication, and in particular, to a signal transmission method, an apparatus, and a system.

## BACKGROUND

An ultra-wideband (ultra-wideband, UWB) signal has a strong anti-multipath interference capability and ultra-high temporal resolution, and has unique advantages in high precision short-range ranging. UWB ranging is mainly implemented by a preamble (Preamble Code) in a synchronization header (synchronization header, SHR) of a physical layer protocol data unit (physical layer protocol data unit, PPDU). A basic principle is as follows: A sending apparatus repeatedly sends a preamble symbol (Preamble Symbol) generated after zero extension is performed on a preamble. After receiving the preamble symbol, a receiving apparatus performs periodic autocorrelation with a local preamble. A transmission delay of a signal is deduced by detecting a location of a maximum autocorrelation peak, to complete ranging.

In existing 802.15.4 and 802.15.4z standards of the Institute of Electrical and Electronics Engineers (institute of electrical and electronics engineers, IEEE), four groups of preambles whose lengths are 31 are defined, and each group includes two preambles. Preambles in a same group may be used in a same channel.

Based on a definition of an existing standard, a preamble group with a length of 31 supports synchronous ranging of two apparatuses, and cannot support synchronous ranging of a large quantity of apparatuses.

## SUMMARY

This application provides a signal transmission method, an apparatus, and a system, to improve a preamble capacity in a preamble group, so that synchronous ranging of more apparatuses may be supported.

According to a first aspect, a signal transmission method is provided. The method may be performed by a second device, may be performed by a component of a second device, for example, a processor, a chip, or a chip system, or may be implemented by a logical module or software that can implement all or some functions of a second device. The method includes: generating a first signal, and sending the first signal to a first device. The first signal includes a preamble symbol determined based on a target preamble whose length is N, and the target preamble belongs to a target preamble group including L preambles, where L is a positive integer greater than or equal to 3.

When N is equal to 31, the target preamble group includes at least one of four preambles, and the four preambles are as follows:

```
+0000-0++0-0+000+-+0++++-00-00-;
-0-00+000+0++-++0+-00+--0000++0;
0+0++00++-+-000++0+--0+0-0000-0; and
0++-00+-0---++0+000+00+0+0-+000.
```

Alternatively, when N is equal to 31, the target preamble group includes at least three of 20 preambles, and the 20 preambles are as follows:

```
-+0--+-++00+---++-++++-+0+++0-0;
++-+++--0+++0+0-+0++-+--00--+-+;
+-+++--+0+-+----0+++-++0+0-+00+;
0-++-+++-+0-++++--0-+---+0+0++0;
00++-0--++++++-+++-0++-0--+-+-0+;
0+00+-++0+-+-+++++--0---+0---+++-;
00++0--++-0-0-+-+0-++++++--+-++;
+++++0+0---+0+--++-+-+--++00+-0;
+++-0---0+-++-0+-+-+++--+++00+0;
```

00+0-+-0++-0++-0+-+++0-++++-++----;
00++-+--++++++-0+-+-0-0-++--0++;
-+00++--+-+-++-+0+---0+0+++++0;
0+00+++--+++-+-+0-++-+0---0-+++;
----++-++++-0+++-+0-++0-+-+0+00;
-0+++0+-++++-++---+00++-+--0+-0;
+-+--00--+-++0+-0+0+++0--+++-++;
-+++--0+--0--+++++-+-+0++-+00+0;
00+0-+-+-0-++0-+++-+++++-0--++;
++0+0+---+-0--++++-0+-+++-++-00; and
+00+-0+0++-+++0----+-+0+--+++-+.

+ represents 1, and - represents -1.

Based on this solution, the preamble group provided in this application includes at least three preambles whose lengths are 31, thereby improving a preamble capacity in the preamble group. Based on the preamble group provided in this application, when preambles in a same preamble group are used for synchronous ranging on a same channel, synchronous ranging of at least three apparatuses on the same channel can be supported, thereby improving a quantity of apparatuses that can perform synchronous ranging on the same channel. Compared with a method of ranging a plurality of apparatuses by using time division multiplexing in a conventional technology, the method of this application can reduce a ranging delay.

According to a second aspect, a signal transmission method is provided. The method may be performed by a first device, may be performed by a component of a first device, for example, a processor, a chip, or a chip system, or may be implemented by a logical module or software that can implement all or some functions of a first device. The method includes: receiving a first signal from a second device, and processing the first signal based on a target preamble. The first signal includes a preamble symbol determined based on a target preamble whose length is N, and the target preamble belongs to a target preamble group including L preambles, where L is a positive integer greater than or equal to 3.

When N is equal to 31, the target preamble group includes at least one of four preambles, and the four preambles are as follows:

+0000-0++0-0+000+-+0++++-00-00-;
-0-00+000+0++-++0+-00+--0000++0;
0+0++00++-+-000++0+--0+0-0000-0; and
0++-00+-0---++0+000+00+0+0-+000.

Alternatively, when N is equal to 31, the target preamble group includes at least three of 20 preambles, and the 20 preambles are as follows:

-+0--+-++00+---++-++++-+0+++0-0;
++-+++--0+++0+0-+0++-+--00--+-+;
+-+++--+0+-+----0+++-++0+0-+00+;
0-++-+++-+0-++++--0-+----+0+0++0;
00++--0-+++++-+++-0++-0--+-+-0+;
0+00+-++0+-+-++++++--0--+0--+++-;
00++0--++-0-0-+-+0-++++++--+-++;
+++++0+0----+0+--++-+-+--++00+-0;
+++-0---0+-++-0+-+-+++--+++00+0;
00+0-+-0++-0+-+++0-++++-++----;
00++-+--++++++-0+-+-0-0-++--0++;
-+00++--+-+-++-+0+---0+0+++++0;
0+00+++--+++-+-+0-++-+0----0-+++;
----++-++++-0+++-+0-++0-+-+0+00;
-0+++0+-++++-++---+00++-+--0+-0;
+-+--00--+-++0+-0+0+++0--+++-++;
-+++--0+--0--+++++-+-+0++-+00+0;
00+0-+-+--0-++0-+++-+++++-0--++;
++0+0+---+-0--++++-0+-+++-++-00; and
+00+-0+0++-+++0----+-+0+--+++-+.

+ represents 1, and - represents -1. For technical effects brought by the second aspect, refer to technical effects brought by the first aspect. Details are not described herein again.

With reference to the first aspect or the second aspect, in some implementations, the target preamble group is one of a first preamble group and a second preamble group.

The first preamble group includes at least one of first two preambles in the four preambles and at least one of the following preambles:

    -0000-0+0--+0++000-+-++00++0+00;
    0+0-0+++0+-000+-+++00-+0-00-000;
    00+0+-0+0+000-++0-+---00+00++00; and
    0000+-0+0+00+000+0++---0-+00-++.

The second preamble group includes at least one of last two preambles in the four preambles and at least one of the following preambles:

    0-00-0+-00+++-+000-+0+++0-0+000;
    -00-00-++++0+-+000+0-0++0-0000+;
    000++00+00---+-0++-000+0+0-+0+0; and
    ++0000---+00-+0++-++0+000+00-0-0.

Alternatively, the first preamble group includes at least three of first 10 preambles in the 20 preambles, and the second preamble group includes at least three of last 10 preambles in the 20 preambles.

Based on this implementation, preambles in preamble groups and preambles between groups have a low periodic cross-correlation level. When a plurality of preamble groups are used for ranging, intra-channel and inter-channel interference may be reduced.

With reference to the first aspect or the second aspect, in some implementations, the first preamble group and the second preamble group are used for K channels, where K is a positive integer greater than or equal to 2.

With reference to the first aspect or the second aspect, in some implementations, K is equal to 3, the first preamble group is used for a first channel and a third channel that are on an ultra-wideband frequency band, and the second preamble group is used for a second channel that is on an ultra-wideband frequency band, where the first channel and the third channel are not adjacent. Based on this implementation, two channels that use a same preamble group are not adjacent, so that interference between channels may be reduced.

According to a third aspect, a signal transmission method is provided. The method may be performed by a second device, may be performed by a component of a second device, for example, a processor, a chip, or a chip system, or may be implemented by a logical module or software that can implement all or some functions of a second device. The method includes: generating a first signal, and sending the first signal to a first device. The first signal includes a preamble symbol determined based on a target preamble whose length is N, and the target preamble belongs to a target preamble group including L preambles, where L is a positive integer greater than or equal to 3.

When N is equal to 91, the target preamble group includes at least one of 10 preambles, and the 10 preambles are as follows:

    +0+-+-+-+++++-+++-----0+--+-++0++-++++-0-++++-++---+--+--++---0+-+++----0-+0+--+++-++-00-++0;
    ++--00-++-+++-+0+-0----+++-+0---++-+--+---++-++++-0-++++-++0++-+--+0----+++-++++++-+-+-+0+0;
    -+-+0++-++-+0+0--+-0+-+---+-+---++-+--+++++-+++0-----+-+++--++-00++0-++--+++0++-+-+++++0-;
    -++0--0+++-+++--++-0-+-0+-+-00++--++-+---+++++++++++--+--++-++-+-0+0-+-++++----0-++--0-+-+;
    +-+-+0+----++-++------0+-+++-+++-+++++0+-+-+0-+-+++---+++++-+-++-++-00--++0--0++--+++-+0+0-;
    -+--++-+-+++++---+-+0++---+-+-+0-+-----+0--+++00++--+-++++++-++-+0--0+0+-++++-0+++0-+----++-;
    +++++++-0+-+-++0--+-0-+-+---+++--+++0++---0-+-+---00+0-+++-0-+++--+--+-+-++0++-++-+--+++;
    0---0---+++--+++++0+--0+--+00+-++-++++++--++---+-+++++-+--+--++++0-0+++-+-++--+0+-+-+-0----+-+;
    +++++--+++-+--++-+--+0-+++++++-----++-++00++0--++-+--0-+-++-+-+-0++---0+----++-0-0-+-+0+++-++; and
    +0+++---+--0+-0+-++-+++-+00++-0-0++++-++-+-+-+-+++0+-----+0+-+---++0-+-+---++-+++--+++++.

+ represents 1, and - represents -1.

Based on this solution, the preamble group provided in this application includes at least three preambles whose lengths are 91. Based on the preamble group, when preambles in a same preamble group are used for synchronous ranging on a same channel, synchronous ranging of at least three apparatuses on the same channel can be supported. In addition, a cross-correlation between preambles in the 10 preambles is low. Compared with a preamble whose length is 91 in a conventional technology, this can reduce interference between preambles.

According to a fourth aspect, a signal transmission method is provided. The method may be performed by a first device, may be performed by a component of a first device, for example, a processor, a chip, or a chip system, or may be implemented by a logical module or software that can implement all or some functions of a first device. The method includes: receiving a first signal from a second device, and processing the first signal based on a target preamble. The first signal includes a preamble symbol determined based on a target preamble whose length is N, and the target preamble belongs to a target preamble group including L preambles, where L is a positive integer greater than or equal to 3.

When N is equal to 91, the target preamble group includes at least one of 10 preambles, and the 10 preambles are as follows:

```
+0+-+-+-+++++-+++----0+--+-++0++-++++-0-++++-++---+--+--++---0+-+++----0-+0+--+++-++-00-++0;
++-00-++-+++--+0+-0-----+++-+0----++-+--+---++-++++-0-++++-++0++-+--+0----+++-+++++-+-+-+0+0;
-+-+0++-++-+0+0--+-0+-+---+-+---++-+--+++++-+++0-----+-+++-++-00++0-++--+++0++-+-+++++0-;
-++0--0+++-+++--++-0-+-0+-+-00++--++-+---+++++++++++--+--++-++-+-0+0-+-++++----0-++--0-+-+;
+-+----0+-++-++------0+-+++-+++-+++++0+-+-+0-+-+++---+++++--+-++-++--00-++0--0++--+++-+0+0-;
-+--++-+-+++++---+-+0++---+-+-+0-+----+0--+++00++-+--+++++++-++-+0--0+0+-++++-0+++0-+---++-;
++++++++-0+-+-++0--+-0-+-+---+++-+++0++-0---+-++---00+0-+++-0-++++-+--+-+-++0++-++-+--+++;
0--0-+++--+++++0+--0+-+00+-++-+++++++--++--+-++++-+--+--++++0-0+++-+-++--+0+-+-+-0----+-+;
+++++--+++-+--++-+--+0-++++++------++-++00++0--++-+--0-+-++-+-+-0++---0+---++-0-0-+-+0+++-++; and
+0+++---+--0+-0+-++-+++-+00++-0-0++++-++-+--+-+--+++0+-----+0+-+---++0--+-+--++-+++-+++++.
```

+ represents 1, and - represents -1. For technical effects brought by the fourth aspect, refer to technical effects brought by the third aspect. Details are not described herein again.

With reference to the third aspect or the fourth aspect, in some implementations, the target preamble group is one of a first preamble group, a second preamble group, and a third preamble group.

The first preamble group includes at least one of first four preambles in the 10 preambles and at least one of the following preambles:

```
-0++++++-+-++0+++--++-0++00--++-----+++-+-0+++-+++++--+-++---+-+---+-+0-+--0+0+-++-++0+-+-; and
+-+-0-++---0----++++-+-0+0-+-++-++-+--++++++++++++---+-++-++00-+-+0-+-0-++--+++-+++0--0++-.
```

The second preamble group includes at least one of a fifth preamble, a sixth preamble, or a seventh preamble in the 10 preambles, and at least one of the following preambles:

```
+++--+--++-++0++-+-+--+--+++---0-+++-0+00---++-+--0-++0+++--+++---+-+-0-+--0++-+-+0-+++++++;
-0+0+-+++--++0--0++-00--++-++-+-+++++---+++-+-0+-+-+0+++++-+++-+++-+0------++-++-+0----+-+; and
-+++---+-0+++0-+++++-+0+0--0+-++-+++++--+-++00+++---0+----+-0+-+-+---++0+-+---+++++-+-++--+-.
```

The third preamble group includes at least one of last three preambles in the 10 preambles and at least one of the following preambles:

```
+-+----0-+-+-+0+--++-+-+++0-0++++--+--+-++++-+---++--+++++++-++-+00+--+0--+0+++++--+++--0--0;
++-+++0+-+-0-0-++----+0---++0-+-+-++-+-0--+-++---0++00++-++-++++++-0+--+-++-+-+++--+++++; and
+++++--+++-++---+-+--0++---+-+0+-----+0+++--+-+--+-++-++++0-0-++00+-+++-++-+0-+0--+--+++0+.
```

Based on this implementation, preambles in preamble groups and preambles between groups have a low periodic cross-correlation level. When a plurality of preamble groups are used for ranging, intra-channel and inter-channel interference may be reduced.

According to a fifth aspect, a signal transmission method is provided. The method may be performed by a second device, may be performed by a component of a second device, for example, a processor, a chip, or a chip system, or may be implemented by a logical module or software that can implement all or some functions of a second device. The method includes: generating a first signal, and sending the first signal to a first device. The first signal includes a preamble symbol determined based on a target preamble whose length is N, and the target preamble belongs to a target preamble group including L preambles, where L is a positive integer greater than or equal to 3.

When N is equal to 121, the target preamble group includes at least three of 42 preambles, and the 42 preambles are as follows:

```
+0+-000-0+++00++--++-+-+---+0---++0+-0++-0-0+---+-0000-+0-+-+++0+-000-+00-0-0+0++++00-++0++-0+0+++-
0-00-0--0++-+-000++0+;
```

EP 4 387 180 A1

-0+00+0-0++0++00-++--000+0-000++0+0+--+-0-+0+-0+-++-+-00++0+0+0++--+----++0---0--0-++000-+0+-
++000+-0-00++-+++-00+++-+-;

0+-+-+0-0+-0-0+0+-+0+00-+0-+00+0-+0+0+++-0++++--++--00--++0++++-0-000-+00+-+--0+++0+--0+++00++-+0-
+0-----+-00+---0+00000;

-+++-00---+0-++--00++0---00--+++++00+-0+0++0+00+0+-++--000+0+0-0+0+-0++00+++--00-000+--0--+-+-+-
+0++---++-+-0-+0-000++0+0+;

-0+0--++-0-00+++++-+0-0-0-+++00-0-+--0++0-+00----+-0-0+-00-++0++++--+00++0-+-+++0-+-+000+--+0++-0+++-
+0-+0+000000-0+00+-;

0+000-++++0+-+++-++00--+-0-0-++0++-+---0++--+0+0+-0-0-0--+-+-0-00++-0+00--+0++++00000++-++--0++-
0-0+-0+--+00++00++0-00-0;

-000++0+00+0-+-0+---++++00-000-0-+00-+---0--+00+-0--0+++-0++00+++0-0+00-++-0-0-0++-+-++0+-+-0-++-++-
0+-0+0+++++-+0000+-;

+000++00+++00+0+0++-+-++0--0-+++-0000+--0+0+0++0----+00-0+--0+0-+++--+0++-+----0-++00+0++-+-+-0-
+00-00-0+-++--00-+-00++0;

++0--+0++-00+0--0-+-++000-+++++----0000+-+000-0--+-0-00----+++-+++-++0-0+0-0++-0-+-++0++-0+0-+00-
++-0+-+0-0-00+0+00++00;

-+--0++-000++00+-+0+0+0-0-0+0++-0+0+++--00-++-+++-0000+-0-00-+00++++---+0---0+-0-----+0-+0+--+0++0+-
0+0+-0++00000+-+;

----00++-000++0-++--0-+0---0+0000+--+0+-+00-00-+00+++++-+0++-+-+++0+++-0+-0-00+-+-+0-0+--0+-++-
++000+0+0++00+0--0-0+0+;

000+000+++-0--+0-+-0+00+0+-0+++-++---+-+0-0++-+-+++0+00--0-0+++00+0-00++--+0++++--+0+0-0+-+0+-
000--0--00+----000++-+0-+;

-00000+++---0-++--0+000+---+0-0-0+00+++00--0+++0+++-+000++0-+-0+-0+00-+0++0-++-0++++-+--+-----+0-0-
+0+00+-+-0+---00+-+0+0+;

--0000++0-+++++0+0+0-+0++0+-++--+--+--00++0-0++++000+---+-+0+-+-+0+0-0+0+-00+--+00-0+-+0+++----
00++0--+-0-00-00++-0+-000;

--+0--++000+--0--+-++-+++00-0+0000+++-0----0+0-+-00+-+-+0+0-+++-+++++0-+--0++00+-0+0+++0+0+00--0-
+0+-+0-+0+00+0+--+000-00;

++++0-0--++00++0+-0++00-+-000+--0--0+++0+0000+0--+00+-00+++++-+0++-+++-0+-0-+--0+-+-0+00+00-0-++-
+-++---000--+-0-0-0+0-;

+-+00-0---+++0000++0-+--+0++++-+-+++--0+-+++++0--0-0+00-+0-0-0-+0+---++-+0-+00+---00----0---00++-++0+-
+0+00+000-0+++-0++-000-;

+00+++0+--++0+0-+++-0--0--+--+00+0+0+++++----0+++-+--000+-00+0-0++--+-0+00-++0-0-+---00++-0+-0-+0--
0+-+-+0000+000++00+-+0;

+0+0-0---0+00++0+0+000++-++-+0---+0-0+-+-+00-0-+0-+++0+++----+-++0+-+++++00+-00-00+-+0+--+0000+0---
0+-0--++--0+++000-++00----;

-0+00++00-00+++++-0-++---0+++000+-0+-++0+-+0--0+----0--0-0++-+-+00+0-+00-++00+-+-+0+++--+---+-
000+0+0++-0+0-0-+0+0000++-;

-0+0-0-0-+--000---++-+-++-0-00+00+0-+-+0--+-0-+0-+++-+++0+-+++++00-+00+--0+0000+0+++0--0--+000-+-
00++0-+0++00++--0-0++++;

+---0++00+++---+----0-0+++++-00+0+0++-+00+---0+-+0-0-+0--++-0+-0--00++-0-000+0-++-+--++0++0-0+00+00-
+000+-++0000++0+-+-+0;

0+-+-+0++0000++-+000+-00+00+0-0++0++---+-++-0+000-0-++00----0-+0-++--0+-0-0+-+0---+00+-++0+0+00-
+++++0-0----+---+++00++0--+;

-++0000+0+-0-0+0-++0+0+000-+---+-+++0+-+-+00++-00+-0+00+--+-++0-0--0----+0-+-+0++-+0-0000+++0---++-
0-+++++00-00++00+0-;

++000-0+0+++-0+-+-+0+-++00+00+--+-00----+-++--+0+0-0+0--0+-0+000+-+0-0++-+++++0---0--+00--+++--0-
+0000++00-+0++0+0+00-0-+;

+-+00++000+0000+-+-+0-+0-+-0+-++00---+-0-0++-00+0-+--++0-0+00-+000--+-+++0----+++++0+0+00+--+--0--0-
+++-0+0++--+0+++00+0;

-000-++0-+++0-000+00+0+-+0++-++00--0---00--+00+-0+-++--+0+-0-0-0+-00+0-0-0--0+0+++++-0+0-+++-+-
++++0+--+-0++0000+++--0-00+-+;

-000+--+0+00-0+-+0+-0--00+0+0+++0+0-+00++0--+-0+++++--+++-0+0+-+-+00-+----0+0--0-+++0000+0-00+++-
++-+--0--+000++-0+--00;

-++0+00+-0+++++-0+00-0+0+-0+--+-+00++0-0+-+0----000+++-+-++----0+-+-0++000-00+0+0-+-00+0-
++000+++-00+0-0++---00-+0;

+-0-00+0+0++0+-00++0000+-0--+++--00+--0---0+++++-++0-+-+000+0-+0--0+-0+0+--++-+-----00-+--+00+00++-
+0+-+-+0-+++0+0-000++;

6

0++00-+-00--++-+0-00-00+-0-+-+-++0+00++-0----+-++0+--+++-0+0--+0-00+----0++0+0+0--+0000-+++0--0-++--+-++0+0+00+++00++000+;

-0-00+00-+00-0--+0--00-+0-0+00+--+++0-00000+---0-+-0+-+++++0++-+0-0+0-+0+--+++-00+---00+-000--0+++0-++-+-+0-++++0+0-+-+;

-0-0-0-000-++0-+0-00++--0+++++00---+++-00+--0-0++0+0+0-+0--+0-00+++-++-+++-+0++0+00-00+--+-++-+-+0++00+-+--+0000-++00--0;

+0---00+-+00-00+-++000++0+--+-0+-++00---0--++-++0+0-+++--0+-+00-0+0-0-00+0+++++-0+++-+--0+00++0+-++++-0000-0-+00-0+--0;

+-00--+00+0+0++0000+00+++-+0-00+-+--+-0+-0-+++-+0++-0-0++00++0-00+++-++-0+++--0-0-0+---+00---00+0++--+---+-+0+000++0+0--;

+0+0+-+00--+0-+-+00+0+-0-0+-----+--+-++++0-++-0++0+-00+0-+0-+-0++000+-+++0+++0--00+++00+0-0-0+---+000+0-++-0---+++00000-;

+0++000-+-++0--0-00-0-+++0+0-++0++-00++++0+0-0-00+-000-+0+++---+-0+-0000-+---+0-0-++0-+0++---0+--+-+-++--++00+++0-000-+0+;

-+-+++00-+++-++00-0-+000++-+0+-000++-0---0---0++----+-++0+0+0++00--+-++-+0-+0+-0-+--+0+0++000-0+000--++-00++0++0-0+00+0-;

00-00-0++00++00+--+0-+0-0-++0--++-++00000++++0+--00+0-++00--0-+-+--0-0-0-+0+0+--++0---+-++0++-0-0-+-00++-+++-+0++++-000+;

+000--00--++++0+-0++00+-++-+-0-+0++--0-0++-+++-++0++-0--+0+-0000+++-+000-00-0+00-+++0++-+-0-+++-000+0--0+0-0+0+-0+----0--;

+000+0+0-+-00-0-++0+0----++0+0---++-+-+-0--0+++-+00+-0+-++000++0+0++0--0-++-00+0+++00+---++0-++00-00+--+000-00-+0--+--+++0+0; and

00++00+0+00-0-0+-+0-++-00+-0+0-0++0++-+-0-++0+-0++0-0++-+++-+++--00-0--+-0-000+-+0000----++++++-000++-+-0--0+00-++0+--0++.

Based on this solution, this application provides a preamble whose length is 121 and a preamble group including at least three preambles, thereby improving a preamble capacity in the preamble group. Based on the preamble group provided in this application, when preambles in a same preamble group are used for synchronous ranging on a same channel, synchronous ranging of at least three apparatuses on the same channel can be supported, thereby improving a quantity of apparatuses that can perform synchronous ranging on the same channel. Compared with a method of ranging a plurality of apparatuses by using time division multiplexing in a conventional technology, the method of this application can reduce a ranging delay. In addition, a cross-correlation between preambles in the 42 preambles is low, and interference between preambles can be reduced.

According to a sixth aspect, a signal transmission method is provided. The method may be performed by a first device, may be performed by a component of a first device, for example, a processor, a chip, or a chip system, or may be implemented by a logical module or software that can implement all or some functions of a first device. The method includes: receiving a first signal from a second device, and processing the first signal based on a target preamble. The first signal includes a preamble symbol determined based on a target preamble whose length is N, and the target preamble belongs to a target preamble group including L preambles, where L is a positive integer greater than or equal to 3.

When N is equal to 121, the target preamble group includes at least three of 42 preambles, and the 42 preambles are as follows:

+0+-000-0+++00++--++-+-+-+0---++0+-0++-0-0+---+-0000-+0-+-+++0+-000-+00-0-0+0++++00-++0++-0+0+++-0-00-0--0++-+-000++0+;

-0+00+0-0++0++00-++--000+0-000++0+0+--+-0-+0+-0+-++-+-00++0+0+0++--+----++0---0---0-++000-+0+-++000+-0-00++-+++-00+++-+-;

0+-+-+0-0+-0-0+0+-+0+00-0-+00+0+-0+0+++-0+++--++--00-++0++++-0-000-+00+-+--0+++0+--0+++00++-+0-+0-----+-00+---0+00000;

-+++-00-+0--++--00++0---00--+++++00+-0+0++0+00+-++--000+0+0-0+0-0+00+++--00-000+--0--+-+-+-+0++---++-+-0-+0-000++0+0+;

-0+0--++-0-00+++++-+0-0-0-+++00-0-+--0++0-+00-+-0-----0+-00-++0+++++-+00++0-+-+++0-+-+000+-+0++-0+++-+0-+0+000000-0+00+-;

0+000-+++++0+-+++-++00--+-0-0-++0++-+-+---0++--+0+0+--0-0-0-+-+-0-00++-0+00--+0++++00000++-++--0++-0-0+-0+--+00++00++0-00-0;

-000++0+00+0-+-0+---++++00-000-0-+00-+---0--+00+-0-0+++-0++00+++-0-0+00--++-0-0-0++-+-++0+-+-0-++-++--0+-0+0+++++-+0000+-;

+000++00+++00+0+0++-+--++-0--0+++-0000+--0+0+0++0----+00-0+--0+0-+++--+0++-+----0-++00+0++-+-+-0-+00-00-0+-++--00-+-00++0;

++0--+0++-00+0--0-+-++000-+++++----0000+-+000-0-+-0-00----+++-+++-++0-0++0-+0++-0-+-++0++-0+0-+00-++-0+-+0-0-00+0+00++00;

-+--0++-000++00+-+0+0+0--0-0+0++-0+0+++--00-++-+++-0000-+0-00-+00++++---+0---0+-0-----+0-++-+0+-+0++0+-0+0+-0++00000+-+;

----00++-000++0--++--0-+0---0-+0000+--+0+-+00-00-+00+++++-+0++-+-+++0+++-0+-0-00+-+-+0-0+--0+-++-++000+0+0++00+0--0-0+0+;

000+000+++-0--+0-+-+0+00+0+-0+++-++---+-+0-0++-+-+++0+00---0-0++00+0+-00++-+0++++-+0+0-0+-+0+-000-0-00+-000++-+0-+;

-00000+++---0-++-+0+000+---+0-0-0+00+++00--0+++0+++-+000++0-+-0+-0+00-+0++0-++-0++++-+--+-----+0-0-+0+00+-+--0+-00+-+0+0+;

--0000++0-+++++0+0+0-+0++0+-++--+-+--00++0-0++++000+---+-+0+-+-+0+0-0+0+-00+--+00-0+-+0+++----00++0-+-0-00-00++-0+-000;

--+0--++000+--0-+-++-+++00-0+0000+++-0--0+0----+-00+-+-+0+0-+++-+++++0+--0++00+-0+0+++0+0+00--0-+0+-+0-+00+0+--+000-00;

+++++0-0--++00++0+-0++00-+-000+--0--0+++0+0000+0--+00+-00+++++-+0+++-+++-0+-0-+--0+-+-0+00+00-0-++-+-++---000--+-0-0-0+0-;

+-+00-0-+++0000++0--+-+0++++-+-+++--0+0-+++++0--0-0+00-+0-0-0-+0+---++-+0-+00+---00----0---00++-++0+-+0+00+000-0+++-0++-000-;

+00+++0+--++0+0-+++-0--0--+---+00+0+0+++++----0+++-+--000+-00+0-0++-+-0+00-++0-0-+---00++-0+-0-+0--0+-+-+0000+000++00-+-+0;

+0+0-0---0+00++0+0+000++-++-+0---0-0+-+-+00-0-+0-+++0+++----+-++0+-+++++00+-00-00+-+0+--+0000+0---0+-0--++--0++000-++00----;

-0+00++00-00+++++-0-++---0+++000+-0+-++0+-+0--0+----0--0-0++-+-+00+0-+00-++00+-+-+0+++--+---+-000+0+0++-0+0-0-+0+0000++-;

-0+0-0-0-+--000---++-+-++-0-00+00+0-+-+0-+-0-+0-+++-+++0+-+++++00-+00+—0+0000+0+++0—0—+000-+-00++0-+0++00++—0-0++++;

+--0++00+++---+----0-0+++++-00+0+0++-+00+-0+---+0-0-+0--++-0+-0--00++-0-000+0-++-+—++0++0-0+00+00-+000+-++0000++0+-+-+0;

0+-+-+0++0000++-+000+-00+00+0-0++0++--+-++-0+000-0-++00----0-+0-++--0+-0-0+-+0---+00+-++0+0+00-+++++0-0----+---+++00++0--+;

-+++0000+0+-0-0+0-++0+0+000-+---+--+++0+-+-+00++-00+-0+00+--+-++0-0--0----+0--0+-+0++-+0-+000+++0---++-0-+++++00-00++00+0-;

++000-0+0+++-0+-+-+0+-++00+00+--+-00----+-++--+0+0-+0--0+-0+000+-+0-0++-+++++0---0--+00--+++--0-+0000++00-+0++0+0+00-0-+;

+-+00++000+0000+-+-+0--0+-0-+0-++00---+-0-0++-00+0--+-++0-0+00-+000--+-+++0----+++++0+0+00+--+--0--0-+++-0+0++--+0+++00+0;

-000-++0-+++0-000+00+0+-+0++-++00--0---00--+00+-0+-++--+0+-0-0-0+-00+0-0--0++++++-0+0--+++-+-++++0+---+-0++0000+++--0-00+-+;

-000+--+0+00+-0+-+0+-0--00+0+0+++0+0-+00++0--+-0+++++--+++-0+0+-+-+00-+----0+0--0-+++0000+0-00+++-++-+--0--+000++--0+--00;

-+++0+00+-0++++++-0+00-+0+0+-0+--+-+-+00++0-0+-+0----000+++-+-++----0+-+-0++000-00+0+0-+-00+0-++000+++-00+0-0+++----00-+0;

+-0-00+0+0++0+-00++0000+-0--+++--00+--0---0+++++-++0-0+-+000+0-+0--0+-0+0+--++-+----00-+--+00+00++-+0+-+-+0-+++0+0-000++;

0++00-+-00--++-+0-00-00+-0-+-+-++0+00++-0----+-++0+--+++-0+0--+0-00+----0++0+0+0-+0000-+++0--0-++--+-+++0+0+00+++00++000+;

-0-00+00-+00-0--+0--00-+0-0+00+--+++0-00000+---0-+-0+-+++++0++-+0-0+0-+0+--+++-00+---00+++000--0+++0-++-+-+0-++++0+0-+-+;

-0-0-0-000-++0-+0-00++---0+++++00----+++-00+---0-0++0+0+0-+0---+0-00+++-++-+++-+0+0+00-00+--+-++-+-+0++00+-+--+0000-++00--0;

+0---00+-+00-00+-++000++0-+--+-0+-++00---0--++-++0+-0-++++-0+-+00-0+0-0-00+0+++++-0+++-+--0+00++0+-++++-0000-0-+00-0+--0;

+-00--+00+0+0++0000+00+++-+0-00+-+--+-0+-0-+++-+0++-0-0++00++0-00+++-++-0+++--0-0-0+---+00---00+0++--+---+-+0+000++0+0--;

+0+0+-+00-+0--+-+00+0+-0-0+-----+-+-++++0-++-0++0+-00+0-+-0-+0++000+-+++0+++0--00+++00+0-0-0+---+000+0--++-0---+++00000-;

+0++000-+-++0--0-00-0-+++0+0-++0+-00++++0+0-0-00+-000-+0+++---+-0+-0000-+---+0-0-++0-+0++---+0--+-+-++--++00+++0-000-+0+;

-+-+++00-+++-++00-0-+000++-+0+-000++-0---0---0++----+-++0+0+0++00—+-++-+0-+0+-0-
+—+0+0++000-0+000—++-00++0++0-0+00+0-;

00-00-0++00++00+--+0-+0-0-++0--++-++00000++++0+--00+0-++00--0-+-+--0-0-0-+0+0+--++0---+-++0++-0-0-+--
00++-+++-+0++++-000+;

+000--00--++++0+-0-++00+-++-+-0-+0++--0-0++-+++-++0++-0--+0+-0000+++-+000-00-0+00-+++0++-+-0-+++-
000+0--0+0-0+0+-0+----0--;

+000+0+-+-00-0----++0+0---++-+-+-0--0+++-+00++-0+-++000++0+0++0--0-+-00+0+++00+---++0-++00-00+--
+000-00-+0--+--+++0+0; and

00++00+0+00-0-0+-+0-++-00+-0+0-++0++-+-0-++0+-0++0-0++-+++-+++--00-0--+-0-000+-+0000----++++++-
000++-+-0--0+00-++0+--0++.

For technical effects brought by the sixth aspect, refer to technical effects brought by the fifth aspect. Details are not described herein again.

With reference to the fifth aspect or the sixth aspect, in some implementations, the target preamble group is one of a first preamble group, a second preamble group, and a third preamble group. The first preamble group includes at least three of first 14 preambles in the 42 preambles; the second preamble group includes at least three of middle 14 preambles in the 42 preambles; and the third preamble group includes at least three of last 14 preambles in the 42 preambles.

Based on this implementation, preambles in preamble groups and preambles between groups have a low periodic cross-correlation level. When a plurality of preamble groups are used for ranging, intra-channel and inter-channel interference may be reduced.

According to a seventh aspect, a signal transmission method is provided. The method may be performed by a second device, may be performed by a component of a second device, for example, a processor, a chip, or a chip system, or may be implemented by a logical module or software that can implement all or some functions of a second device. The method includes: generating a first signal, and sending the first signal to a first device. The first signal includes a preamble symbol determined based on a target preamble whose length is N, and the target preamble belongs to a target preamble group including L preambles, where L is a positive integer greater than or equal to 3.

When N is equal to 127, the target preamble group includes at least one of 14 preambles, and the 14 preambles are as follows:

-00000-++0-0000-00-+-000—0-00+00+0++-0-+0++-00—0++00+0+0-+0-0+-+-+0++++0000-
+000+000-0+00—00++—0+0-0+000+-+++++00-000000-0+;

++0+0000-00+++000++0+00+00-0+-—0-+0-+-00—0+-00-0+0-+0+0+-+—0++—        0000+-000+000-0+00++00-
+—0+0-0-000++++-+-00+000000+0—00000+;

-+00000+0-000-+0++0-000000++0000+00+00+++++-+0+---+000+--0-0-0+00-0+0++—0-00+-00+-+00+-0-0+-
000+000+0++-0—00-0000-++-00+0++0-;

+00-00+-++0-0+00000-0-+-+00---0----+++0+-00+0-+000-+00+-0++0+000+--+-0000++-
000+0+00++000000++0-0--+0-00+0-0+0++0+--00+0000+000;

0-+0+00000+--+-0+++000000-0+0-+0----+--00++0-+0-0-0+000+00-00++00+--+000-+-0---0+0-+-+0+00+0+-
00+0-00+++00-000++000+0+++0000-000;

0000++0000-0-000-+-+00-000+0--00--+0+0+00--++-0+0000+-+000+00+00-0—0-0+-0-+++0-
+000+++0+00-0—+0++-00++00-0+0+0-++-+++000000+0;

+0000+00--+0++0+0-0+00-0+--0-0++000000++00+0+000-++0000-+-+000+0++0-+00+-000+-0+00-+0+++----0---
00+-+-0-00000+0-0++-+00-00+000;

0-000+-000-0--+0000+0000+-0+00000+++--0++000000+0+0++0+++----00-+0+-0+0-0+000-00+00-+00++-
+000+++0+--0-0-+-+0-00-0+-00+0-00++-0;

----+-0-0+0-00+-00-++0---0+00+0-+000+-0++++0+-0-0-+0++00-00+000-+0000+0-
+—+00+0+0+++00++0-000-00+—+000+0+0000+-00000+000000+;

+00+-000-0-+-0-0++0-+-00000--00--0+0-00+-+00+++-0+-0+0000+0+0-0-+0+00-0-000++0+-+000++---
++0000+++0+--+00+0-+00+00-00+000000+000;

+000+0---0+0+-0++00000-+00--0-0-00-++00++--0++0+0000-0-0+-++0+00-0-000-+0+-+000--++-++0000+++0-
+-+00+0++00+00+000000-000-00-;

00-++00-0+00-+0-00-0+-+-0-0--+0+++000+-++00+-00+00-000+0-0+-0+-00----+++0++0+0+000000++0--
+++00000+0-+0000+0000+--0-000-+000-;

-+0+-00+0000—++00-0++0—+00000-0-000-+0-+-0-000000+-0000+00+00+++-++-0+++--
000+++0+0-0-00-0-0++++0+00-+00+-+00--0-0+-000-000+0+; and

-0+0++0+++00+0000-000+00-00—++0+0+00000-0-+++00—+0-+—+—0-+00-0+-000—00++0-+0+000+-+-
+0000+++000-0+00-+000000++0-0+-—0+00-0.

Based on this solution, the preamble group provided in this application includes at least three preambles whose lengths are 217. Based on the preamble group, when preambles in a same preamble group are used for synchronous ranging on a same channel, synchronous ranging of at least three apparatuses on the same channel can be supported. In addition, a cross-correlation between preambles in the 14 preambles is low. Compared with a preamble whose length is 127 in a conventional technology, this can reduce interference between preambles.

According to an eighth aspect, a signal transmission method is provided. The method may be performed by a first device, may be performed by a component of a first device, for example, a processor, a chip, or a chip system, or may be implemented by a logical module or software that can implement all or some functions of a first device. The method includes: receiving a first signal from a second device, and processing the first signal based on a target preamble. The first signal includes a preamble symbol determined based on a target preamble whose length is N, and the target preamble belongs to a target preamble group including L preambles, where L is a positive integer greater than or equal to 3.

When N is equal to 127, the target preamble group includes at least one of 14 preambles, and the 14 preambles are as follows:

-00000-++0-0000-00-+-000--0-00+00+0++-0-+0++-00--0++00+0+0-+0-0+-+-+0++++0000-
+000+000-0+00—00++—0+0-0+000+-+++++00-000000-0+;
++0+0000-00+++000++0+00+00-0+—0-+0-+-00—0+-00-0+0-+0+0+-+—0++—      0000+-000+000-0+00++00-
+—0+0-0-000++++-+-00+000000+0—00000+;
-+00000+0-000-+0++0-000000++0000+00+00+++++-0+---+000+--0-0-0+00-0+0++—0-00+-00+-+00+-0-0+-
000+000+0++-0—00-0000-++-00+0++0-;
+00-00+-++0-0+00000-0-+-+00---0---+++0+-00+0-+000-+00+-0++0+000+--+-0000++-000+0+00++000000++0-0--
+0-00+0-0+0++0+--00+0000+000;
0-+0+00000+--+-0++000000-0+0-+0----+--00++0+-0+0-0+000+00-00++00+--+000-+-0-0+0---+-+0+00+0+-
00+0-00+++00-000++000+0+++0000-000;
0000++0000-0-000-+-+00-000+0—00—+0+0+00—++-0+0000+-+000+00+00—      0—0-0+-0-+++0-
+000++0+00-0—+0++-00++00-0+0+0-++-+++000000+0;
+0000+00--+0++0+0-0+00-0+-0-0+++000000++00+0+000-++0000-+-+000+0++0-+00+-000+-0+00-+0+++----0---
00+-+-0-00000+0-0++-+00-00+000;
0-000+-000-0--+0000+0000+-0+00000+++--0++000000+0+0++0+++----00-+0+-0+0-0+000-00+00-+00++-
+000+++0+--0-0-+-+0-00-0+-00+0-00++-0;
----+-0-0+0-00+-00-++0---0+00+0-+000+-0++++0+-0-0-+0++00-00+000-+0000+0-
+—+00+0+0+++00++0-000-00+—+000+0+0000+-00000+000000+;
+00+-000-0-+-0-0++0-+-00000--00--0+0-00+-+00+++-0+-0+0000+0+0-0-+0+00-0-000++0+-+000++---
++0000+++0+--+00+0-+00+00+000000+000;
+000+0---0+0+-0++00000-+00--0-0-00-++00++--0++0+0000-0-0+0+-++0+00-0-000-+0+-+000-++-++0000+++0-
+-+00+0+++00+00+000000-000-00-;
00-++00-0+00-+0-00-0+-+-0-0--+0+++000+-++00+-00+00-000+0-0+0-+0+-00----+++0++0+0+000000++0--
+++00000+0-+0000+0000+--0-000-+000-;
-+0+-00+0000—++00-0++0—+00000-0-000-+0-+0-000000+-0000+00+00+++-++-0+++--
000+++0+0-0-00-0-0+++++0+00-+00+-+00--0-0+-000-000+0+; and
-0+0++0+++00+0000-000+00-00--++0+0+00000-0-+++00--+0-+--+--0-+00-0+-000—00++0-+0+000+-+-
+0000+++000-0+00-+000000++0-0+—0+00-0.

For technical effects brought by the eighth aspect, refer to technical effects brought by the seventh aspect. Details are not described herein again.

With reference to the seventh aspect or the eighth aspect, in some implementations, the target preamble group is one of a first preamble group, a second preamble group, and a third preamble group.

The first preamble group includes at least one of first six preambles in the 14 preambles and at least one of the following preambles:

+00+00+-0+00++--0+++0000+++----000+++0+-000+0+00+0+-++-0-0-0-0000+0-+0+-++00+--00+0-0++00-
+00000+-0-+0-0+-+0-000--00-000-000000;
+0+0+-0-000++-+00000+00--0+-0000-0-000000+--0-+0+--++00+-++0+00+00+0-0-+-0-0+0+00+++000++00+0-
+00--000-0++-+0--+00+000+0000+; and
+000000++0+0-+-0-00-0+0+0++0+--00+0000-000+00+00-+++0-0+00000+0++-+00++-0+-+++--0--00-0--000+-
00+-0-+0+000++---0000++-000-0+00-.

The second preamble group includes at least one of a seventh preamble and an eighth preamble in the 10 preambles and at least one of the following preambles:

+-0+00+00+0-00-+++00+000-+0+0-0000+++++-+0+--0+-0++--0-000+0-+00+0+----000-000000-+00+-0++000++-00++-0-0-+-0000+00--00000-0+0+0;

000-000-00--000-0+-+0-0+-0-+00000+-00++0-0+00--+00++-+0+-0+0000-0-0-0-++-+0+00+0+000-+0+++000----+++0000+++0--++00+0-+00+00+000;

++-00000+-0-000000-00-+-++-+000-0+0+0+++-00--00+0+000+000--0000-++0-++++0-0++0+0-00-+0++00++-0++0+-+0-00+00-0--000-+-00+0000-0;

-00+0-000-++0000----++000+0+-0-+00-+000--0-00--0-+++-+0-++00+-++0+00000+0-0+++-00+00+000-0000+00--+0++0+0+0-00-0-+-0+0++000000+;

0-0000--0+00000+---+0++000000-0+0-+0---+-+00-+0++0+0+0+000-00-00-+00+-++000-+-0-++0-0++++0-00-0++00+0+00++-00+000+-000-0-+000;

-00+-0-+0-00+0+0000+0+-0000++00+0+++++-0-0+-0--+0++--000-0+000+0+0-+-000000+-+-0--00++000-00+00++-00--++-00-00000+000++0-0+0; and

+0000+000+00+--0+-++0-000--00+-0+00++000+++00+0+0-0-+-0-0+00+00+0++----+00++--+0+-0--+000000-0-0000-+0--00+00000+-++000-0-+0+0+.

The third preamble group includes at least one of last six preambles in the 10 preambles and at least one of the following preambles:

0-0000+00-+-000--0-00+00-0+-+0++0-++00++0+-00-0+0++0-0++++-0++-0000--000+000+0+00--00-+++0+0+0-000+-++-+-00-000000-0-+00000-++;

+---0-000-+000+00-++00+0+00++0-00-0++++0-0++-0-+-000++-+00+-00-00-000+0+0+0++0+-00++-+-0+-0+0-000000++0+---+00000+0--0000-0000; and

+0+0-00000--00+0000-+-0-0-++00-++000++0-+00+-000000-000----+0+00+-0+000-0--++0-+0--+0+-+++++0000-0+0+-000+00+++-00-0+00+00+0-+0.

Based on this implementation, preambles in preamble groups and preambles between groups have a low periodic cross-correlation level. When a plurality of preamble groups are used for ranging, intra-channel and inter-channel interference may be reduced.

According to a ninth aspect, a signal transmission method is provided. The method may be performed by a second device, may be performed by a component of a second device, for example, a processor, a chip, or a chip system, or may be implemented by a logical module or software that can implement all or some functions of a second device. The method includes: generating a first signal, and sending the first signal to a first device. The first signal includes a preamble symbol determined based on a target preamble whose length is N, and the target preamble belongs to a target preamble group including L preambles, where L is a positive integer greater than or equal to 3.

When N is equal to 133, the target preamble group includes at least three of 45 preambles, and the 45 preambles are as follows:

-+-+--+----0-+-0+--0-++--+++-+-+--++++-+--++0-0-++++-0---0---+++0--+-+++-++-0++-++++----+-0+-++-++++---+++-+++++++-++--++-+----+-+00+++;

++---0+---+-0+++0+0++0-++++++++---+00+-++--+-++-++++---+-+--++0--+--++--++0+++++---+0+++--+-++---+-+----+-+---+0-+-+++-0-+-+----++-+++-;

++--0+++-+--+++0-++++--++-+++--+0-+++00+0-+-+++-+-+-0+-+----+-+++---+-+-+++++++-++-+0++--++---+-+-----++-++-+0-++0---+----0-++++++--0--;

-+--+++++----+-+++++++-++-++----+-+--+++-++-0+0+++0-+-++++-+-+++----0+---0-+--++-+--0-+0--+--+--++--0+++-+++--+-+0++---+00++-+++-+0+-;

--+--+-0-+--+0----++++++++-+-+-++0--++++-+----+0+----++-+-+-++---+00+--+-+--++++--++-+++++-++---++-0+--+++-++0+0+++0--0+-+-+++0++-++;

+-0++00++++-0+-++--++-+--++-+--++-+-----++0-0++---++++-+-0-----+-+--+-+-+0+-++--++-++--+++-++--0+-++++++++++--++---0-+++0+---+-+-0--+++;

++-++0+++-+-+0--0+++0+0++-+++--+0-++---++-++++-++-++++--+-+-+00+------++-+-+-++----+0+---+-++++-0++-+-+-+++++++++----0+-+-0-+-+-;

--+0+-+++-++00+---++0+-+-+++-+++0--++-+-+--0+-0-+-++-+--0-+0----+++-+-++++-+-0+++0+0-++-+++--+-+----++-++-+++++++-+----+++++--+-;

+++++--+++0+00+-++-+-+0-+---+++++++0++---0--+-0++-++----++-+-+---++++0+-+-+++0+-+-+-0++----++---+--+++-+---+++-++-+--++-+0-+-0++-;

+++00+-+---+-++--++-+++++++-+++---++++-++-+0-+----++++--++0-++-+++-+--0+++--0---0-++++-0-0+++--+-++++--+-

+-+++--++-0-+0--+-0----+--+-+-;
+-0-+0--++-++++-+-++0+0-+++-0-----+-++-++--+-0+++-+++-+++-++--0+++-+---0-+------+-++0-+++-+--+--+++++---
++++-++-+-+-+++00+-+0++-+;
++00++0-+-+-++0+-+++-+-0-+++0----+-++-+--++-+0-++++----+---++---+--+0+-+++++-++-++--+0-+-+++---+-0+0-
++ +-+++-+++++-+++---0+++;
+--+-++---+00+-0-+-+++---++0---+---+++++++---+-++++-+---+-++-0+-++-+-----+----+-++0+0-+++-+-0-++-+++-0++--
0--++-0++++-+0++++-++++-+-+;
+--0+0--0--+++0-----+0+++-+++--+--++++--+0-+--+----0-+-++-+++++-+00-+-+-+++++-+++++-++++-++++---+++-+-+--+-
+++--+0-++-+-0-+-0+---++-++-+++;
+++-+++++--+-+--++0--0+---0---++--+-++---00++---+++++++--+--+--+   -+++-++-++++-+-0-++-+-+-+---+0+++++++--+-
+0+-+-+0-++0--+--+0+0+++--++;
+-+-++-+--0++0+++++++-+--0----0+-++----++++-++--0+++0+0+--++-+-+-++-+--+++-+-+++++++++--++-+-+++-+-++--
0+-+++---00--+-+-0--++----+++-0;
++++++++++0+--+-+-+---+-++-++-+-++-+++0-+++---+++0+-0--+-+-+-----+--++0--+0---+--+---+++-+++-+-0+0++++-
+00++--0+-++++++---+0+-+-++;
+00+-++------+++++-+-+-+++-0-++++-+---0----++-+0++-++-+--+++----+-+-+++0--++--0-+-++-+-+-+++++++-+-
0+++-++0-++0+0++0-++-++--++--;
+-+-+--+++-+++-+0++-+--0-+-++-+0+0+++-+++++-00-+-0+-++--+---++0++--++-+---+-+++-+-+-0-++-+-++-++--
++++----+++-0++0--+++0+++----+;
-++-++-+0--0--++-+++-0+++-++-+++---+-++++----++-++0-++++----+-+-0-+++-+--+-+0-+++00--++-+0+0---+-+-
++++++-++-+-++0++-0+++--+;
-+++---++++-++00-++++-+-++-+--+-+--++-+++---+-0---+++++-0+0++-0+-0+-+++++0+---+--++--0-+--0+--+-+-+-+++-
++-+-+0----+++--+--0+++++++;
--++--++-++-0++0+0++-0++-+++0-+-+++++-+-+-++-+-0---++--0+++-+-+----+++--+-++-++0+-++-----0+---+-++++-0-
+++-+-+-++++++------++-+00+;
--++--++-++-0++0+0++-0++-+++0-+-+++++-+-+--++-+-0---++--0+++-+-+----+++-+-++-++0+-++-----0+-+-++++-0-
+++-+-+-++++++------++-+00+;
---++--+-+0+---+++++-+0--++00+++++0+0-+--+++-+++---+--+---0+-0++-+---+--+-+--0-+0+++---+++-0+++-++-+--
++-++-+---+-+-+--+0+++++++++;
--+++0+00+-+-++--++-+++---+++---0-+-+0--+++-+-+0-+---0--++-+0-+-+++++-++++-+++----+-+++++++--++-+-
+++++0+-+0--++++-+-++-+0--+----0--+;
-0++++++-+--++0+++--+++-0-+------++-+-+0+-0-+++----+-+++-+0-++00+-+++0+0-++++++-++-+-++-+-+--+-++-+++-
++0--+--+-+++---++-0+++---+--;
++--+++0+0+--+--0++-0+-+-+0+-+--++++++0+---+-+-+-++-0-+-++++-++-+++--+--+--+-++++++++----++00---++-+--
++-+---0---+0--0++-+-+--++++-+++;
+-0---++++0+-+-+++-+--+-0++-0-+++-+--+--+-+++++++--++++-++++-+-++--++--0-++++0--+--0++--+---0--+-0-
+++++-+-+++--+-++--+-00+0-+++--;
-+---++--0-+++++++---++++-+-+++++-+-++++-0+++-+-+--0---+--++-+++--0+00++++--0---++-++-+--0-++---+++-+-
++--+0-++0+--+0----+0-+++-+-+-;
--+++-0+00-+---++-+--+++-+-+++++-0-+--0----+--++0--+--0++++--0-++-++-+-+++++-++++-++++++++-+---+--+-+++-0-
++0-+--+-+++-+-+0++++--0-+;
++0+----0-+-+++00++-0-+-+--+-++++-+-++-0--0++++---+--+++-++++++++++-+++++----+-+-+0++---++--0+--+--+-
0+0-+--+-+---+-+-0++++--++-++--;
+-+-++++-++++0+-++++0-++--0--++0-+++-++-0-+-+++-0+0++-+----+--+-++-+0-++-+--+--++++-+---++++++++---+--
0++---+++-+-0-+00+---++-+--+;
++--0+--+-+++--+-++-+++-0++++-+-+++-++++-+0+++00+-+-+---+-0-0++-+---0+++-++0+-++-++-++------+++++++--+--
0--++-0-+0-+++--+++++---+-+-+----;
-+-+++-+++++---+-++-+-+++--0++++-++--+++-++-++++0+0-+---+-0++++--+0++-+0+--++0-----+0+--+-+-+-+-+--++--
++++00+-0-+-++++-++--0--+----;
--0--+++++++-0----+---0++-0+-++-++-----+-+---++--++0+-++-++++++-+-+---+++-+----+-0-+-+-+++-+-0+00+++-0+-
+++-++--++++-0+++--+-+++0--++;
----+-+---+-++++--+++-0+-0-++-0--+--+++++++------++-++-+0++-+++0---+--++0-0-+--+-+-+00+++0+-++++-+++-+--
++++0-+++-++-+-+++-+--+0--++;
--++--++-++++0-+-+---+-+-0+0-+--+--+0--++---++0+-+-+----+++++-++++++++++---+++-+---+++0--0-++-+-++++-
+--++-+-0-++00+++-+-0----+0++;
+-++-++------++00+++0+-+-+-0-+0+++++-++++-++--0+0+++-+0---+++-++--+0-++--+---++-+--+++0+--+-++-
0+++++--+--+-+0---+--+-+-++++-+++-;
+++-++-++---+0-+-0-+-++--0+--+++-+--+-+-++++---++++-++++-+++++-+-+-00+-+++++-++-+-0----+-+-0+--++++--+--

+++-+++0+-----0+++--0--0+0--+;

+++0---+++-+++++-+++-+-----++-0+0-+---+++--+-0+--++-++-++++-+0+--+----++---+----++++-0+-+-++--+-++-+----0+++-0-+-+++-+0++-+-+-0++00++;

++0-++---0--+---+---0+---++-+-+++--+0-+++00+0-+++++-+--+0++-++++---+-++-+-++--++++---+0-++-++-+++-+-+-+-+-++++-0--+0++-+----0--+++++;

++0--+++++++---+--+0+-0+-+--++-+-+--+0+++++-+-+0+----+-++-0+++++++++---++0-+-+-+++0++++--+0++-++-++-++---+----+-++------+-0+0-++-+00-;

++++++-0----+-++0+--0-++++-+-+-+-+++-++-++-0+---++++--++-+-++-+---++++--++0+--+-+++++-0+00+++-0+--+++-+-++---+0---+---+--0---++-0++;

+-++--+++---+0+++-+0+-+-++-++--+-----++-+0+-+-+--+-0+-++0+++--+++-++-+++++0-0++--0-+-++++00++0--++-+--++++++--+-+++-0+----+-+-and

--+++++++-+-+-+++--+0+-+-++---+-++-+++++-+-+-+0--0--+-+++++-0-0-++0---+++-++-++++-+--+0-+----0----0++--+--++0-++++-+00+--+-+++++--++.

Based on this solution, this application provides a preamble whose length is 131 and a preamble group including at least three preambles, thereby improving a preamble capacity in the preamble group. Based on the preamble group provided in this application, when preambles in a same preamble group are used for synchronous ranging on a same channel, synchronous ranging of at least three apparatuses on the same channel can be supported, thereby improving a quantity of apparatuses that can perform synchronous ranging on the same channel. Compared with a method of ranging a plurality of apparatuses by using time division multiplexing in a conventional technology, the method of this application can reduce a ranging delay. In addition, a cross-correlation between preambles in the 45 preambles is low, and interference between preambles can be reduced.

According to a tenth aspect, a signal transmission method is provided. The method may be performed by a first device, may be performed by a component of a first device, for example, a processor, a chip, or a chip system, or may be implemented by a logical module or software that can implement all or some functions of a first device. The method includes: receiving a first signal from a second device, and processing the first signal based on a target preamble. The first signal includes a preamble symbol determined based on a target preamble whose length is N, and the target preamble belongs to a target preamble group including L preambles, where L is a positive integer greater than or equal to 3.

When N is equal to 133, the target preamble group includes at least three of 45 preambles, and the 45 preambles are as follows:

-+-+--+---0-+--0+-0-++--+++-+-+--++++-+--++0-0-++++-0---0--+++0-+-+++-++-0++-++++----+-0+-++-++++---+++-+++++++-++--++-+---+-+00+++;

++---0+---+-0+++0+0++0-+++++++---+00+-++--+-++-++++---+-+--++0--+--++--++0+++++---+0+++--+-++-+----+--+---+-+0-+-+++-0-+-+----++-+++-;

++--0+++-+--+++0-++++--++-+++-+0-+++00+0-+-+++-+-+-0+-+----+-+++---+-+-+++++++-++-+0+++--++-++-+-----++-++-+0-++0---+----0-++++++--0--;

-+--+++++----+-+++++++-++-++----+-+--+++-++-0+0+++0-+-++++-+-+++----0+---0-+--++-+--0-+0--+-+--++--0+++-+++--+-+0++---+00++-+++-+0+--;

--+--+-0-+-+0----++++++++-+-++0--++++--+---+0+----++-+-+-++   --+00+--+-+--++++--++-+++++-++---++-0+--+++-++0+0+++0--0+-+-+++0++-++;

+-0++00++++-0+-++-++--+-++-+-++-+-----++0-0++---++++-+-0-----+-+-+-+-+0+-++-++-++---+++-++--0+-+++++++++--++---0-+++0+---+-+-0--+++;

++-++0+++-+-+0--0+++0+0++-+++--+0-++--++-++++-++-++++--+-+-+00+------++-+-+-++----+0+---+--++++--0++-+-+-+++++++++----0+-+-0-+--+--;

--+0+-+++-++00+---++0+-+-+++-+++0--++-+-+--0+-0-+-++-+-0-+0----+++-+-++++-+-0+++0+0-++-+++--+-+----++-++-++++++++-+----+++++--+-+;

+++++--+++0+00+-++-+-+0-+---+++++++0++---0--+-0++--++----++-+-+---++++0+-+-+++0+-+-+-0++----++---+--+++-+---+++-++-+--++-+0-+-0++-;

+++00+-+---+-++--++-+++++++-+++---++++-++-+0-+----++++--++0-++-+++-+--0+++--0---0-++++-0-0++--+-++++---+--+-+++--++-0-+0--+-0----+--+-+-;

+-0-+0--++-+++++-+-++0+0-+++-0-----+-++-++--+-0+++-+++-+++-++--0+++-+---0-+------+--++0-+++-+--+--+++++---++++-++-+-+-+++00+-+0++-+;

++00++0-+-+-++0+-+++-+-0-+++0----+-++--++-+-+0-++++----+---++----+--+0+-+++++-++-++--+0-+--+++---+-0+0-++ +-+++-+++++-+++---0+++;

+--+-++---+00+-0-+-+++---++0--+---+++++++---+-++++-+---+-++-0+-++-++-----+----+-++0+0-+++-+-0-++-+++-0++--0--++-0++++-+0++++-++++-+-+;

+--0+0--0--+++0-----+0+++-+++--+--++++--+0-+--+----0-+-++-+++++-+00-+-+-+++++-++++-++++---+++-+-+--+-

+++--+0--++-+-0-+-0+---++-++-+++;
+++-++++--+-+--++0--0+---0---++--+-++---00++----++++++++--+--+--+--+++-++-++++-+-0-++-+-+-+---+0++++++--+-+0+-+-+0-++0--+--+0+0+++--++;
+-+-++--+--0++0++++++-+--0----0+-++----++++-++--0+++0+0+--++-+-++-+--+++-+-+++++++--++-+-+++-+-++--0+-+++---00--+-+-0--++----+++-0;
+++++++++0+--+-+-+---+-++-++--+-++-+++0-+++---+++0+-0--+-+--+-----+-++0--+0---+--+---+++-+++--+-0+0++++-+00++--0+-++++++---+0+-+-++;
+00+-++-------+++++-+-+-+++-0-++++-+----+0-----++-+0++-++-+--+++----+-+-+++0--++--0-+-++--+-+-+++++++-+-0+++-++0-++0+0++0-++-++--++--;
+-+-+--+++-+++-+0++-+--0-+-++--+0+0+++-+++++-00-+-0+-++--+---++0++--++---+-+++-+-+-0-++-+-++-++--++++----+++-0++0--+++0+++----+;
-++--++-+0--0--++--+++-0+++-++-+++---+-++++----++-++0-+++   ---+-+-+-0-+++-+--+-+0-+++00--++-+0+0---+-+-++++++-++-+-++0++-0+++--+;
-+++---++++-++00-++++-+-++-+--+-+--++-+++---+-0---+++++-0+0++-0+-0+-+++++0+---+--++--0-+--0+--+-+-+-+++-++-+-+0----+++--+--0+++++++;
--++--++-++-0++0+0++-0++-+++0-+-++++++-+-+--++-+-0---++--0+++-+-+----+++-+-++-++0+-++-----0+-+-++++-0-+++-+-+-+++++-----++-+00+;
--++--++-++-0++0+0++-0++-+++0-+-++++++-+-+--++-+-0---++--0+++-+-+----+++-+-++-++0+-++-----0+-+-++++-0-+++-+-+-+++++-----++-+00+;
----++-+--+0+---+++++-+0--++00+-++++0+0-+--+++-+++---+--+--0+-0++-+---+--+-+--0-+0+++---+++-0+++-++-+---++-++-+--+-+-+--+0+++++++++;
--+++0+00+-+-++--++-+++---+++---0-+-+0--+++-+-+0-+---0--++-+0-+-+++++-+++-+++----+-+++++++--++-+-+++++0+-+0--++++-+-++-+0--+----0--+;
-0+++++-+--++0+++--+++-0-+------++-+-+0+-0--+++---+-+++-+0-++00+-+++0+0-++++++-++-+-++-+-+-+--++-+++-++0--+--+-+++---++-0+++---+--;
++---+++0+0+---+---0++-0+-+-+0+-+--++++++0+   +-+-+-++-0-+-++++-++-+++--+--+--+--+++++++----++00---++-+---++---0--+0--0++-+-+--++++-+++;
+-0---++++0+-+-+++-+--+-0++-0-+++-+--+--+-+++++++--++++-++++-+-++-++--0-++++0--+--0++--+----0--+-0-++++++-+-+++--+-++--+-00+0-+++--;
-+---++--0-+++++++---++++-+-+++++-+-+++-0+++-+-+--0---+--++-+++-0+00++++--0---++-++-+--0-++--+++-+-++--+0-++0+--+0----+0-+++-+-+-;
--+++-0+00-+---++-+-+++-+-+++++-0-+--0----+--++0--+--0++++--0-++-++-+-++++-++++-++++++++-+--+-+-+++-0-++0-+--+-+++-+-+0++++--0-+;
++0+----0-+-+++00++-0-+-++--+-++++-+-++-0--0++++---+--+++-++++++++++-+++++----+-+-+0++   ++--0+---+---+-0+0-+---+-+ +-+-0++++-++---++--;
+-+-++++-++++0+-++++0-++--0--++0-+++-++-0-+-+++-0+0++-+----+--+-++-+0-++-+---+--+++-+---++++++++---+--0++---+++-+-0-+00+---++-+--+-+;
++--0+--+-+++--+-++-+++-0++++--+-+++-++++-+0+++00+-+-+---+-0-0++-+---0+++-++0+-++-++  ++++++--+--0--++-0-+0-+++--++++-+---+-+----;
-+-+++-+++++---+-++-+-+++--0++++-++--+++-++-+++0+0-+---+-0++++--+0++-+0+--++0-----+0+--+--+-+-+-+--++-++++00+-0-+-++++-++--0--+----;
--0--+++++++-0----+---0++-0+-++-++-----+-+---++--++0+-++-+++++++-+-+---+++-+----+-+0-+-+-+++-+-0+00+++-0+-+++-++--++++-0+++--+-+++0--++;
---+-+---+-++++--+++-0+-0-++-0--+--+++++++       ++-++-+0++-+++0---+-++0-0-+---+-+-+00+++0+-++++-+++-+--++++0-+++-++-+-+++-+--+0--++;
--++--++-++++0-+-+---+-+-0+0-+--+-+0--++----++0+-+-+----+++++-++++++++++--+++-+---++++0--0-++-+-++++-+--++-+-0-++00+++-+-0----+0++;
+-++-++-----++00+++0+-+-+0-+0+++++-++++-++--0+0+++-+0---+++-++---+0-++--+---++-+---+++0+--+-++-0++++--+--+-+0--+--+-+-++++-+++-;
+++-++-++--+0-+-0-+-++--0+--++-+--+-+--+-+++---++++-++++-+++++-+-+-00+-++++++-++-+-0----+--+-+-0+--+++++--+--+++-+++0+-----0+++--0--0+0--+;
+++0---+++-+++++-+++-+------++-0+0-+---+++-+-0+--++-++-+++++-+0+--+----++---+----++++-0+-+-++-+-++-+----0+++-0-+-+++-+0++-+-+-0++00++;
++0-++---0--+--+---0+---++-+-+++--+0-+++00+0-+++++-+--+0++-++++---+-++-+-++-+++-----+0-++-++-+++-+-+-+-++++-0--+0++-+----0--+++++;
++0--+++++++---+--+0+-0+-+--++-+-+--+0+++++-+-+0+----+-++-0+++++++++---++0-+-+-+++--++++-+0++--++-++-++----+---+-++------+-0+0-++-+00-;
++++++--0----+-++0+--0-+++++-+-+-+-++-++-++-0+---++++--++-+-++-+---++++--++0+--+-+-++++--0+00+++-0+--

+++-+-++---+0---+---+--0---++-0++;

+-++--+++---+0+++-+0+-+-++--++-+-----++-+0+-+-+--+-0+-++0+++--+++-++-+++++0-0++--0-+-++++00++0--++-+--

++++++--+-+++-0+----+-+--; and

--++++++-+-+-+++--+0+-+-++---+-++-+++++-+-+-+0--0--+-+++++-0-0-++0---+++-++--++++-+--+0-+----0----0++--+--++0-++++-+00+--+-+++++--++.

For technical effects brought by the tenth aspect, refer to technical effects brought by the ninth aspect. Details are not described herein again.

With reference to the ninth aspect or the tenth aspect, in some implementations, the target preamble group is one of a first preamble group, a second preamble group, and a third preamble group. The first preamble group includes at least three of first 15 preambles in the 45 preambles; the second preamble group includes at least three of middle 15 preambles in the 45 preambles; and the third preamble group includes at least three of last 15 preambles in the 45 preambles.

Based on this implementation, preambles in preamble groups and preambles between groups have a low periodic cross-correlation level. When a plurality of preamble groups are used for ranging, intra-channel and inter-channel interference may be reduced.

With reference to the third aspect to the tenth aspect, in some implementations, the first preamble group, the second preamble group, and the third preamble group are used for K channels, where K is a positive integer greater than or equal to 2. Based on this implementation, the preamble group provided in this application can be used for ranging of K channels.

With reference to the third aspect to the tenth aspect, in some implementations, K is equal to 3, the first preamble group is used for a first channel, the second preamble group is used for a second channel, and the third preamble group is used for a third channel.

With reference to the first aspect, the third aspect, the fifth aspect, the seventh aspect, or the ninth aspect, in some implementations, the method further includes: receiving control information from a first device, where the control information indicates the target preamble, and the control information includes at least one of the following: the length of the target preamble, an index of the target preamble, or an index of the target preamble group. The generating a first signal includes: generating the first signal based on the control information. Based on this implementation, the second device generates the first signal based on the control information of the first device, so that the first device may select a target preamble corresponding to the first signal when subsequently processing the first signal, thereby improving accuracy of the solution.

With reference to the first aspect, the third aspect, the fifth aspect, the seventh aspect, or the ninth aspect, in some implementations, the sending the first signal to a first device includes: receiving a second signal from the first device, and sending the first signal to the first device based on the second signal.

With reference to the first aspect, the third aspect, the fifth aspect, the seventh aspect, or the ninth aspect, in some implementations, the target preamble is an unused preamble in the target preamble group. Based on this implementation, the unused preamble is selected to generate the first signal, so that interference between the first signal and a signal corresponding to a used preamble can be reduced.

With reference to the second aspect, the fourth aspect, the sixth aspect, the eighth aspect, or the tenth aspect, in some implementations, before the receiving a first signal from a second device, the method further includes: sending control information to the second device, where the control information indicates the target preamble, and the control information includes at least one of the following: the length N of the target preamble, an index of the target preamble, or an index of the target preamble group.

With reference to the second aspect, the fourth aspect, the sixth aspect, the eighth aspect, or the tenth aspect, in some implementations, before the receiving a first signal from a second device, the method further includes: sending a second signal, where the second signal is used to trigger sending of the first signal.

With reference to the second aspect, the fourth aspect, the sixth aspect, the eighth aspect, or the tenth aspect, in some implementations, the target preamble group is a preamble corresponding to a target channel. The method further includes: performing monitoring on the target channel, and determining an unused preamble in the target preamble group, where the target preamble is one preamble in the unused preamble.

According to an eleventh aspect, a communication apparatus is provided, to implement the foregoing methods. The communication apparatus may be the second device in the first aspect, the third aspect, the fifth aspect, the seventh aspect, or the ninth aspect, or an apparatus included in the second device, for example, a chip. Alternatively, the communication apparatus may be the first device in the second aspect, the fourth aspect, the sixth aspect, the eighth aspect, or the tenth aspect, or an apparatus included in the first device, for example, a chip. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

In some possible designs, the communication apparatus may include a transceiver module and a processing module. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface. The processing module may be configured to implement a processing function in any one of the foregoing aspects and any one of the possible implementations of the foregoing aspects.

In some possible designs, the transceiver module includes a sending module and a receiving module that are configured to respectively implement a sending function and a receiving function in any one of the foregoing aspects and any one of the possible implementations of the foregoing aspects.

According to a twelfth aspect, a communication apparatus is provided, including a processor and a communication interface. The communication interface is configured to communicate with a module other than the communication apparatus. The processor is configured to execute a computer program or instructions, so that the communication apparatus performs the method in any one of the foregoing aspects. The communication apparatus may be the second device in the first aspect to the fifth aspect, or an apparatus included in the second device, for example, a chip. Alternatively, the communication apparatus may be the first device in the sixth aspect to the tenth aspect, or an apparatus included in the first device, for example, a chip.

According to a thirteenth aspect, a communication apparatus is provided, including an interface circuit and a processor. The interface circuit is a code/data read and write interface circuit. The interface circuit is configured to receive computer-executable instructions (the computer-executable instructions are stored in a memory, may be read directly from the memory, or may be read through another device) and transmit the computer-executable instructions to the processor. The processor is configured to execute the computer-executable instructions to enable the communication apparatus to perform the method in any of the foregoing aspects. The communication apparatus may be the second device in the first aspect to the fifth aspect, or an apparatus included in the second device, for example, a chip. Alternatively, the communication apparatus may be the first device in the sixth aspect to the tenth aspect, or an apparatus included in the first device, for example, a chip.

According to a fourteenth aspect, a communication apparatus is provided, including at least one processor. The processor is configured to execute a computer program or instructions, to enable the communication apparatus to perform the method in any one of the foregoing aspects. The communication apparatus may be the second device in the first aspect to the fifth aspect, or an apparatus included in the second device, for example, a chip. Alternatively, the communication apparatus may be the first device in the sixth aspect to the tenth aspect, or an apparatus included in the first device, for example, a chip.

In some possible designs, the communication apparatus further includes a memory. The memory is configured to store necessary program instructions and data. The memory may be coupled to the processor, or may be independent of the processor.

In some possible designs, the communication apparatus may be a chip or a chip system. When the apparatus is a chip system, the chip system may include a chip, or may include a chip and another discrete device.

According to a fifteenth aspect, a computer-readable storage medium is provided. The computer-readable storage medium stores instructions, and when the instructions are run on a communication apparatus, the method in any one of the foregoing aspects is performed.

According to a sixteenth aspect, a computer program product including instructions is provided. When the computer program product is run on a communication apparatus, the method in any one of the foregoing aspects is performed.

It may be understood that when the communication apparatus provided in any one of the eleventh aspect to the sixteenth aspect is a chip, the sending action/function may be understood as outputting information, and the receiving action/function may be understood as inputting information.

For technical effects brought by any one of the designs in the eleventh aspect to the sixteenth aspect, refer to technical effects brought by different designs in the first aspect to the tenth aspect. Details are not described herein again.

According to a seventeenth aspect, a communication system is provided. The communication system includes the first device and the second device in the foregoing aspects.

## BRIEF DESCRIPTION OF DRAWINGS

FIG. 1 is a schematic diagram of an architecture of a communication system to which an embodiment of this application is applicable;
FIG. 2 is an example diagram of a communication system to which an embodiment of this application is applicable;
FIG. 3 is an example diagram of another communication system to which an embodiment of this application is applicable;

FIG. 4 is a schematic flowchart of a signal transmission method according to this application;

FIG. 5 is a schematic flowchart of another signal transmission method according to this application;

FIG. 6 is a schematic diagram of a relationship between a preamble and a preamble symbol according to this application;

FIG. 7 is a schematic diagram of another relationship between a preamble and a preamble symbol according to this application;

FIG. 8 is a schematic diagram of a structure of a communication apparatus according to this application; and

FIG. 9 is a schematic diagram of a structure of another communication apparatus according to this application.

## DESCRIPTION OF EMBODIMENTS

In the descriptions of this application, unless otherwise specified, "/" represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural.

In the descriptions of this application, unless otherwise specified, "a plurality of" means two or more than two. "At least one of the following items (pieces)" or a similar expression thereof means any combination of these items, including any combination of singular or plural items (pieces). For example, at least one item (piece) of a, b, or c may represent a, b, c, a and b, a and c, b and c, or a, b, and c. Herein, a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference. In addition, in embodiments of this application, words such as "example" or "for example" are used to represent giving an example, an illustration, or a description. Any embodiment or design described as an "example" or "for example" in embodiments of this application should not be explained as being more preferred or having more advantages than another embodiment or design. Exactly, use of the words such as "example" or "for example" is intended to present a related concept in a specific manner for ease of understanding.

It may be understood that "an embodiment" mentioned in the entire specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the foregoing processes do not mean execution sequences in various embodiments of this application. The execution sequences of the processes should be determined based on functions and internal logic of the processes, and should not be construed as any limitation on implementation processes of embodiments of this application.

It may be understood that, in this application, "when", "if", and another similar description mean that corresponding processing is performed in an objective situation, and are not intended to limit time. The terms do not mean that a determining action is required during implementation, and do not mean any other limitation.

It may be understood that the preconfiguration in this application may be understood as definition, predefinition, storage, pre-storage, pre-negotiation, solidification, or pre-burning.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the apparatus provided in embodiments of this application may also correspondingly implement these features or functions. Details are not described herein.

In this application, unless otherwise specified, for same or similar parts of embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

To facilitate understanding of technical solutions in embodiments of this application, technologies related to this application are first briefly described below.

First, periodic autocorrelation feature:

For a preamble $\mathbf{a} = [a_1, a_2,..., a_N]$, periodic autocorrelation of the preamble is defined as the following formula (1):

$$\phi_{aa}\left(\tau\right) = \sum_{n=1}^{N} a_n a_{n+\tau}, \qquad \tau = 0, 1, 2, ..., N-1 \tag{1}$$

It can be learned from formula (1) that, a maximum periodic autocorrelation value is obtained when the preamble is fully aligned (that is, $\tau = 0$). In UWB ranging, because a receive end apparatus needs to determine a signal transmission delay based on a maximum periodic autocorrelation peak, to reduce a ranging error, it is required that there is an autocorrelation side lobe (side lobe) that is as small as possible when $\tau$ is set to another value (that is, $\tau = 1, 2, ..., N-1$). Particularly, if $\tau = 1, 2, ..., N-1$, $\phi_{aa}(\tau) = 0$, and the preamble $\mathbf{a}$ is referred to as a perfect periodic autocorrelation code.

Second, periodic cross-correlation feature:

For preambles $\mathbf{a} = [a_1, a_2,..., a_N]$ and $b = [b_1, b_2,..., b_N]$, periodic cross-correlation of the preambles is defined as the following formula (2):

$$\phi_{ab}\left(\tau\right) = \sum_{n=1}^{N} a_n b_{n+\tau}, \qquad \tau = 0, 1, 2, ..., N-1 \tag{2}$$

Because a case in which a plurality of apparatuses perform synchronous ranging by using different preambles in a same group may occur on a same channel, interference is generated between the preambles. To reduce an interference level, a good periodic cross-correlation property is required between the preambles. To be specific, $\phi_{ab}(\tau)$ is limited to a low level in a full periodicity ($\tau = 0, 1, 2, ..., N-1$).

Third, ambiguity function feature:

For a preamble $\mathbf{a} = [a_1, a_2,..., a_N]$, an ambiguity function of the preamble is defined as the following formula (3):

$$\chi\left(n, v\right) = \left[a\left(n \bmod N\right) \exp\left(2j\pi vn\right)\right] \otimes a\left(n\right) \tag{3}$$

exp is an exponential function with a natural constant e as a base, and $\otimes$ represents convolution. The ambiguity function mainly describes impact of carrier frequency offset (carrier frequency offset, CFO) on a preamble autocorrelation feature. Because the CFO exists, a periodic autocorrelation property of the preamble deteriorates. Usually, an ambiguity function property of the preamble is measured by using a ratio of a maximum side lobe of autocorrelation to a main lobe under the impact of the CFO, and is expressed as the following formula (4):

$$p\left(v\right) = \frac{\max\limits_{n=1,2,...,N} \left|\chi\left(n, v\right)\right|}{\left|\chi\left(0, v\right)\right|} \tag{4}$$

A smaller value of $p(v)$ indicates a better ambiguity function property of the preamble.

Fourth, spectral peak to average ratio feature:

For a preamble $\mathbf{a} = [a_1, a_2,..., a_N]$, a spectral peak to average ratio (spectral peak to average ratio, SPAR) of the preamble is defined as the following formula (5):

$$SPAR_a = 10 \log_{10}\left(\frac{\max\left(\psi\left(\mathbf{a}\right)\right)^2}{avg\left(\psi\left(\mathbf{a}\right)\right)^2}\right) \tag{5}$$

$\psi(\mathbf{a})$ represents Fourier transform of $\mathbf{a}$. The SPAR mainly describes impact of the preamble on power spectral density (power spectral density, PSD) of a ranging signal. A smaller value of $SPAR_a$ indicates a better SPAR property of the preamble.

As described in the background, based on a definition of an existing standard, a plurality of apparatuses cannot be supported in performing synchronous ranging. IEEE 802.15.4 and 802.15.4z standards stipulate a method of time division multiplexing (time division multiplexing, TDM). To be specific, preambles in a same group are multiplexed at different times to implement ranging of a plurality of apparatuses. However, this method reduces efficiency of ranging and increases power consumption of a ranging apparatus. Therefore, a current preamble design cannot meet a requirement of synchronous ranging for a plurality of apparatuses in most scenarios.

Based on this, this application provides a signal transmission method, to improve a preamble capacity of ranging on a same channel, so that synchronous ranging of more apparatuses may be supported.

It may be understood that the synchronous ranging for a plurality of apparatuses described in this application may be understood as: separately measuring distances between the plurality of apparatuses and a specific apparatus at the same time.

The technical solutions provided in this application may be applied to various communication systems. The communication system may be a third generation partnership project (third generation partnership project, 3GPP) communication system, for example, a long term evolution (long term evolution, LTE) system, a new radio (new radio, NR) system, a vehicle to everything (vehicle to everything, V2X) system, an LTE-NR hybrid networking system, or a device-to-device (device-to-device, D2D) communication system, a machine-to-machine (machine, M2M) communication system, an Internet of Things (Internet of Things, IoT) system, and another next-generation communication system. Alternatively, the communication system may be a non-3GPP communication system. This is not limited.

The technical solutions provided in this application may be applied to UWB one-to-many synchronous ranging in various communication scenarios, for example, may be applied to one or more of the following communication scenarios: enhanced mobile broadband (enhanced mobile broadband, eMBB), ultra-reliable low latency communication (ultra-reliable low latency communication, URLLC), machine type communication (machine type communication, MTC), massive machine type communications (massive machine type communications, mMTC), D2D, V2X, IoT, and another communication scenario.

The communication system and the communication scenarios applicable to this application are merely examples for description. The communication system and the communication scenarios applicable to this application are not limited thereto. This is uniformly described herein. Details are not described below again.

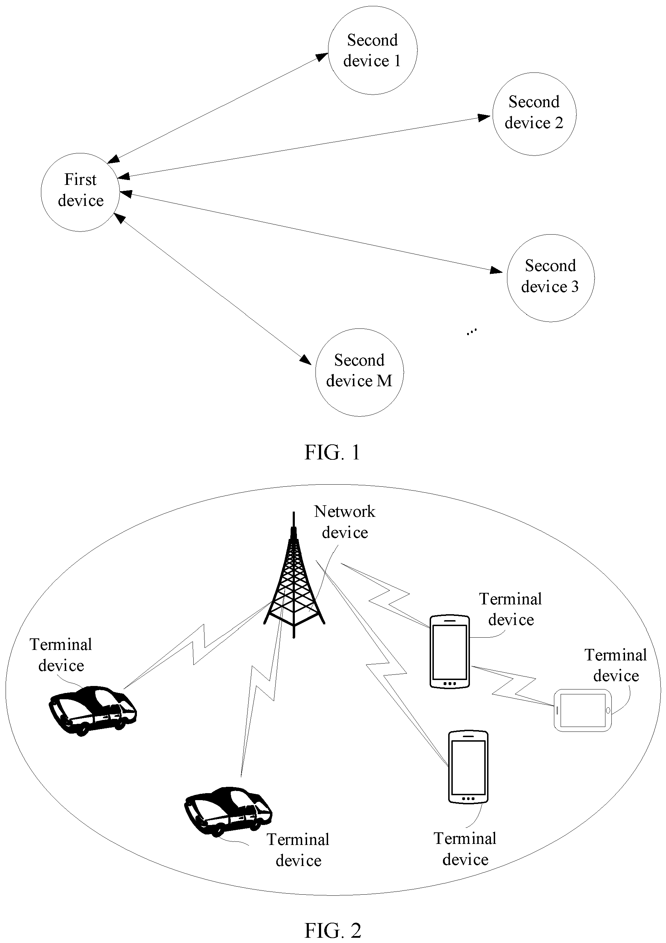

FIG. 1 shows a communication system according to an embodiment of this application. The communication system 10 includes a first device and M second devices, where M is a positive integer greater than 1. In this embodiment of this application, an example in which the first device needs to synchronously obtain distances between the first device and the M second devices is used for description. To be specific, synchronous ranging needs to be performed on the M second devices.

Optionally, the M second devices work on a same channel that is on an ultra-wideband (ultra-wideband, UWB) frequency band. Alternatively, the M second devices support a same working frequency on a UWB frequency band.

Optionally, the first device may be referred to as a ranging center apparatus or a ranging initiator (initiator). The second device may be referred to as a to-be-ranged apparatus or a ranging responder (responder).

In some embodiments, the first device and the second device may be devices of different types. For example, as shown in FIG. 2, the first device may be a network device, and the second devices may be terminal devices.

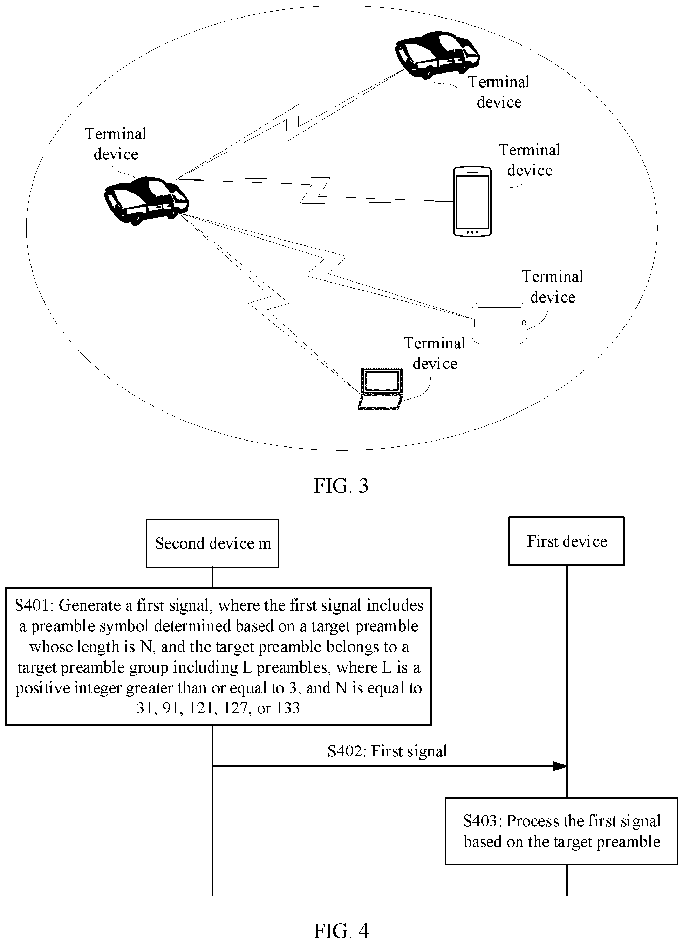

In some other embodiments, the second device and the second device may be devices of a same type. For example, as shown in FIG. 3, the first device and the second device may be terminal devices.

Optionally, the terminal device may be a device configured to implement a communication function. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a wireless terminal in IoT, V2X, D2D, M2M, a 5th generation (5th generation, 5G) network, or a future evolved public land mobile network (public land mobile network, PLMN). The wireless terminal may be a device with wireless receiving and transmitting functions. The wireless terminal may be deployed on land, and includes an indoor device or an outdoor device, a hand-held device, or a vehicle-mounted device. Alternatively, the wireless terminal may be deployed on water (for example, a ship). Alternatively, the wireless terminal may be deployed in air (for example, an airplane, a balloon, or a satellite).

For example, the terminal device may be an uncrewed aerial vehicle, an IoT device (for example, a sensor, an electricity meter, or a water meter), a V2X device, a station (station, STA) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a hand-held device with a wireless communication function, a computing device or another processing device connected to a wireless modem, a vehicle-mounted device, a wearable device (which may also be referred to as a wearable intelligent device), a tablet computer or a computer with wireless receiving and transmitting functions, a virtual reality (virtual reality, VR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent networked vehicle, an uncrewed aerial vehicle having an uncrewed aerial vehicle to uncrewed aerial vehicle (UAV to UAV, U2U) communication capability, and the like. The terminal may be mobile or fixed. This is not specifically limited in this application.

Optionally, the network device is a device that assesses a terminal device to a wireless network, and may be an evolved NodeB (evolutional NodeB, eNB or eNodeB) in an LTE or LTE-Advanced (LTE-Advanced, LTE-A) system, for example, a conventional macro base station eNB and a micro base station eNB in a heterogeneous network scenario; may be a next generation NodeB (next generation NodeB, gNodeB or gNB) in a 5G system; may be a transmission reception point (transmission reception point, TRP); may be a base station in a future evolved PLMN; may be a broadband network service gateway (broadband network gateway, BNG), an aggregation switch, or a non-3GPP access device; may be a radio controller in a cloud radio access network (cloud radio access network, CRAN); may be an access point (access point, AP) in a Wi-Fi system; may be a wireless relay node or a wireless backhaul node; or may be a device that implements a base station function in IoT, V2X, D2D, or M2M. This is not specifically limited in this embodiment of this application.

Optionally, the base station in this embodiment of this application may include base stations in various forms, for example, a macro base station, a micro base station (which is also referred to as a small cell), a relay station, and an access point. This is not specifically limited in this embodiment of this application.

With reference to the accompanying drawings, the following describes in detail the method provided in embodiments of this application by using interaction between the first device and the second device as an example.

FIG. 4 is a schematic flowchart of a signal transmission method according to this application. The signal transmission method includes the following steps.

S401: A second device m generates a first signal.

The first signal includes a preamble symbol. The preamble symbol may be determined based on a target preamble whose length is N, and the target preamble belongs to a target preamble group including L preambles, where L is a positive integer greater than or equal to 3.

Optionally, the L preambles included in the target preamble group may be used for synchronous ranging of a plurality of apparatuses on a specific UWB channel.

Optionally, preambles in the target preamble group are perfect periodic autocorrelation codes, and lengths of the preambles are equal. In addition, the preambles in the target preamble group have a low periodic cross-correlation level. Therefore, when the target preamble group is used for synchronous ranging, intra-channel interference may be reduced.

Optionally, the first signal may be a UWB signal. The first signal may also be referred to as a ranging response signal, and the first signal and the ranging response signal may be replaced with each other. This is not specifically limited in this application.

Optionally, a value of m may be 1, 2,...,*M*. To be specific, M second devices in a communication system to which this application is applicable may perform actions related to the second device in this embodiment of this application, to implement functions related to the second device. Target preambles used by different second devices are different preambles in a same target preamble group. For example, a preamble used by a second device 1 is a preamble p1 in the target preamble group, and a generated first signal is a first signal 1; a preamble used by a second device 2 is a preamble p2 in the target preamble group, and a generated first signal is a first signal 2; ...; and a preamble used by a second device M is a preamble pM in the target preamble group, and a generated first signal is a first signal M.

S402: The second device m sends the first signal to a first device. Correspondingly, the first device receives the first signal from the second device m.

Optionally, the M second devices may separately send first signals generated by the M second devices to the first device. Correspondingly, the first device receives the first signals from the M second devices.

S403: The first device processes the first signal based on the target preamble.

Optionally, the first device may obtain a preamble (referred to as a receiving preamble below) in the first signal through decoding; or may sample the first signal to obtain a preamble in the first signal. Due to a transmission delay, there is a cyclic shift in the receiving preamble relative to the target preamble used in step S401 when the first signal is generated. For example, the target preamble is $\mathbf{a} = [a_1, a_2,..., a_N]$, and the receiving preamble may be $\mathbf{a'} = [a_N, a_1, a_2,..., a_{N-1}]$.

Optionally, after obtaining the receiving preamble, the first device may perform a cyclic shift autocorrelation operation on the receiving preamble and a target preamble corresponding to the receiving preamble, determine a moment corresponding to a maximum autocorrelation peak value, and determine a distance between the first device and the second device m based on the moment.

For example, the cyclic shift autocorrelation operation performed on the receiving preamble and the target preamble may be represented as the following formula (5):

$$\phi_{aa'}(\tau) = \sum_{n=1}^{N} a_n a'_{(n+\tau)\bmod N}, \qquad \tau = 0, 1, 2, \ldots, N-1 \qquad (5)$$

Optionally, the target preamble corresponding to the receiving preamble obtained by decoding the first signal is: a target preamble used when the second device generates the first signal. For example, based on the assumption in step S401, when the first signal is the first signal 1, a target preamble corresponding to a receiving preamble obtained by decoding the first signal 1 is the preamble p1 in the target preamble group; when the first signal is the first signal 2, a target preamble corresponding to a receiving preamble obtained by decoding the first signal 2 is the preamble p2 in the target preamble group; ...; and when the first signal is the first signal M, a target preamble corresponding to a receiving preamble obtained by decoding the first signal M is the preamble pM in the target preamble group.

Based on this solution, the target preamble used by the first signal belongs to the target preamble group, and the target preamble group includes three or more preambles. In other words, the preamble group provided in this application includes at least three preambles. Therefore, when preambles in a same preamble group are used for synchronous ranging on a same channel, synchronous ranging of at least three apparatuses on the same channel can be supported, thereby increasing a quantity of apparatuses that can perform synchronous ranging on the same channel. In addition, compared with a method of ranging a plurality of apparatuses by using time division multiplexing, the method of this application can reduce a ranging delay.

The foregoing describes an overall procedure of the signal transmission method provided in this application. The following describes in detail the preamble and the preamble group provided in this application.

The length N of the target preamble is equal to 31, 91, 121, 127, or 133. The following separately describes preambles with different lengths.

In some embodiments, when N is equal to 31, the target preamble group includes at least one of four preambles, and the four preambles are as follows:

    1st: +0000-0++0-0+000+-+0++++-00-00-;
    2nd: -0-00+000+0++-++0+-00+-0000++0;
    3rd: 0+0++00++-+-000++0+--0+0-0000-0; and
    4th: 0++-00+-0---++0+000+00+0+0-+000.

For ease of description, in this application, the four preambles are denoted as a first preamble set, and the four preambles and the first preamble set may be replaced with each other. It should be noted that a sequence of the four preambles in the first preamble set is merely described herein as an example. In actual application, there may be another arrangement sequence. This is not specifically limited in this application.

Optionally, in this embodiment, the target preamble group is one of a first preamble group and a second preamble group. The first preamble group includes at least one of first two preambles in the first preamble set and at least one of the following preambles:

    -0000-0+0--+0++000-+-++00++0+00;
    0+0-0+++0+-000+-+++00-+0-00-000;
    00+0+-0+0+000-++0-+-00+00++00; and
    0000+-0+0+00+000+0++---0-+00-++.

The second preamble group includes at least one of last two preambles in the first preamble set and at least one of the following preambles:

    0-00-0+-00+++-+000-+0+++0-0+000;
    -00-00-++++0+-+000+0-0++0-0000+;
    000++00+00-+-0++-000+0+0-+0+0; and
    ++0000--+00-+0++-++0+000+00-0-0.

It should be noted that the first two preambles and the last two preambles in the first preamble set herein are first two preambles and last two preambles in the arrangement sequence in the foregoing example. In conclusion, in the groups provided in this application, the first preamble group includes at least one of +0000-0++0-0+000+-+0++++-00-00- and -0-00+000+0++-++0+-00+--0000++0, and does not include first two preambles in any arrangement sequence; and the second preamble group includes at least one of 0+0++00++-+-000++0+--0+0-0000-0 and 0++-00+-0---++0+000+00+0+0-+000, and does not include last two preambles in any arrangement sequence. For example, if an arrangement sequence of the four preambles included in the first preamble set is as follows:

1st: 0+0++00++-+-000++0+--0+0-0000-0;
2nd: 0++-00+-0---++0+000+00+0+0-+000;
3rd: +0000-0++0-0+000+-+0++++-00-00-; and
4th: -0-00+000+0++-++0+-00+--0000++0.

In this example, the first preamble group includes last two preambles in the first preamble set, and the second preamble group includes first two preambles in the first preamble set.

In an embodiment, a universal set of preambles included in the first preamble group and the second preamble group may be shown in Table 1. + represents 1, and - represents -1. The preambles in Table 1 may be understood as zero-equalized preambles.

**Table 1**

| Preamble group | Preamble index | Preamble |
|---|---|---|
| First preamble group | 1 | -0000-0+0--+0++000-+-++00++0+00 |
| | 2 | 0+0-0+++0+-000+-+++00-+0-00-000 |
| | 3 | +0000-0++0-0+000+-+0++++-00-00- |
| | 4 | 00+0+-0+0+000-++0-+---00+00++00 |
| | 5 | 0000+-0+0+00+000+0++---0-+00-++ |
| | 6 | -0-00+000+0++-++0+-00+--0000++0 |
| Second preamble group | 1 | 0+0++00++-+-000++0+--0+0-0000-0 |
| | 2 | 0-00-0+-00+++-+000-+0+++0-0+000 |
| | 3 | -00-00-++++0+-+000+0-0++0-0000+ |
| | 4 | 000++00+00---+-0++-000+0+0-+0+0 |
| | 5 | 0++-00+-0---++0+000+00+0+0-+000 |
| | 6 | ++0000--+00-+0++-++0+000+00-0-0 |

It should be noted that preamble indexes in Table 1 are merely examples. In actual implementation, indexes of preambles may be alternatively represented in another form. For example, the indexes of the preambles are numbered from 0, and indexes of preambles in each group are 0 to 5. Alternatively, preambles in different groups may be consecutively numbered. For example, indexes of preambles in the first preamble group and the second preamble group are 1 to 12, preambles whose indexes are 1 to 6 belong to the first preamble group, and preambles whose indexes are 7 to 12 belong to the second preamble group. Alternatively, indexes of preambles in the first preamble group and the second preamble group are 0 to 11. This is not specifically limited in this application.

Optionally, a differential set mapping method may be used to generate a plurality of zero-equalized ternary sequences whose lengths are 31. A cross-correlation feature is used as a primary constraint, and a sequence ambiguity function feature and an SPAR feature are used as secondary constraints. 12 sequences (as shown in Table 1) with good properties in the sequences are selected as preambles in the preamble group.

Optionally, as shown in Table 1, there is a low periodic cross-correlation between preambles whose indexes are 2, 3, and 4 in the first preamble group and between preambles whose indexes are 2, 3, and 4 in the second preamble group. When a quantity of apparatuses that need to perform synchronous ranging is less than or equal to 3, the preambles whose indexes are 2, 3, and 4 may be preferentially used. The preambles may be referred to as preferred preambles.

In some embodiments, when N is equal to 31, the target preamble group includes at least three of 20 preambles, and the 20 preambles are as follows:

1st: -+0--+-++00+---++-++++-+0+++0-0;

2nd: ++-+++--0+++0+0-+0++-+--00--+-+;
3rd: +-+++--+0+-+----0+++-++0+0-+00+;
4th: 0-++-+++-+0-++++--0-+---+0+0++0;
5th: 00++--0-+++++-+++-0++-0--+-+-0+;
6th: 0+00+-++0+-+-+++++--0--+0--+++-;
7th: 00++0--++-0-0-+-+0-++++++-+-++;
8th: +++++0+0-+0+-++-+-+-++00+-0;
9th: +++-0---0+-++-0+-+-+++--+++00+0;
10th: 00+0+-+-0++-0+-+++0-++++-++----;
11th: 00++-+-++++++-0+-+-0-0-++-0++;
12th: -+00++--+-+-++--+0+---0+0+++++0;
13th: 0+00+++-+++-+-+0-++-+0-0-+++;
14th: ----++-++++-0+++-+0-++0-+-+0+00;
15th: -0+++0+-+++++-++ +00++-+--0+-0;
16th: +-+-00-+-++0+-0+0+++0-+++-++;
17th: -+++--0+--0--+++++-+-+0++-+00+0;
18th: 00+0-+-+--0-+++0-+++-+++++-0--++;
19th: ++0+0+---+-0--++++-0+-+++-++-00; and
20th: +00+-0+0++-+++0----+-+0+--+++-+.

For ease of description, in this application, the 20 preambles are denoted as a second preamble set, and the 20 preambles and the second preamble set may be replaced with each other. It should be noted that a sequence that is of the 20 preambles included in the second preamble set and that is in the second preamble set is merely described herein as an example. In actual application, there may be another arrangement sequence. This is not specifically limited in this application.

Optionally, in this embodiment, the target preamble group is one of a first preamble group and a second preamble group. The first preamble group includes at least three of first 10 preambles in the second preamble set, and the second preamble group includes at least three of last 10 preambles in the second preamble set.

It should be noted that the first 10 preambles and the last 10 preambles in the second preamble set herein are first 10 preambles and last 10 preambles in the arrangement sequence in the foregoing example. For details, refer to related descriptions of the first preamble set. Details are not described herein again.

In an embodiment, a universal set of preambles included in the first preamble group and the second preamble group may be shown in Table 2. The preambles in Table 2 may be understood as zero-fewer preambles.

**Table 2**

| Preamble group | Preamble index | Preamble |
|---|---|---|
| First preamble group | 1 | -+0--+-++00+---++-++++-+0+++0-0 |
| | 2 | ++-+++--0+++0+0-+0++-+--00--+-+ |
| | 3 | +-+++--+0+-+----0+++-++0+0-+00+ |
| | 4 | 0-++-+++-+0-++++--0-+---+0+0++0 |
| | 5 | 00++--0-+++++-+++-0++-0--+-+-0+ |
| | 6 | 0+00+-++0+-+-+++++--0--+0--+++- |
| | 7 | 00++0--++-0-0-+-+0-++++++--+++ |
| | 8 | ++++0+0---+0+--++-+-+--++00+-0 |
| | 9 | +++-0---0+-++-0+-+-+++--+++00+0 |
| | 10 | 00+0+-+-0++-0+-+++0-++++-++---- |

(continued)

| Preamble group | Preamble index | Preamble |
|---|---|---|
| Second preamble group | 1 | 00++-+--++++++-0+-+-0-0-++--0++ |
| | 2 | -+00++-+-+-++--+0+----0+0+++++0 |
| | 3 | 0+00+++--+++-+-+0-++-+0---0-+++ |
| | 4 | ++-+++++-0+++-+0-++0-+-+0+00 |
| | 5 | -0+++0+-++++-++---+00++-+--0+-0 |
| | 6 | +-+--00-+-++0+-0+0+++0-+++-++ |
| | 7 | -+++--0+--0--++++++-+-+0++-+00+0 |
| | 8 | 00+0-+-+--0-++0-+++-+++++-0--++ |
| | 9 | ++0+0+---+-0--++++-0+-+++-++-00 |
| | 10 | +00+-0+0++-+++0----+-+0+--+++-+ |

It should be noted that the preamble indexes in Table 2 are merely examples. For details, refer to related descriptions of the preamble indexes in Table 1. Details are not described herein again.

Optionally, a differential set mapping method may be used to generate a plurality of zero-fewer ternary sequences whose lengths are 31. A cross-correlation feature is used as a primary constraint, and a sequence ambiguity function feature and an SPAR feature are used as secondary constraints. 20 sequences (as shown in Table 2) with good properties in the sequences are selected as preambles in the preamble group.

Optionally, as shown in Table 2, there is a low periodic cross-correlation between preambles whose indexes are 2, 3, 9, and 10 in the first preamble group and between preambles whose indexes are 2, 3, 5, and 10 in the second preamble group. When a quantity of apparatuses that need to perform synchronous ranging is less than or equal to 4, the preambles whose indexes are 2, 3, 9, and 10 in the first preamble group may be preferentially used, or the preambles whose indexes are 2, 3, 5, and 10 in the second preamble group may be preferentially used. The preambles may be referred to as preferred preambles.

Optionally, the first preamble group and the second preamble group may be used for K channels, where K is a positive integer greater than or equal to 2. The K channels may be K channels on an ultra-wideband frequency band. Each of the K channels corresponds to one preamble group, and preambles in the preamble group are used to perform synchronous ranging on the channel. Particularly, adjacent channels correspond to different preambles, and non-adjacent channels may correspond to same preambles or different preambles.

Optionally, when K is equal to 3, the first preamble group may be used for a first channel and a third channel that are on an ultra-wideband frequency band, the second preamble group may be used for a second channel that is on an ultra-wideband frequency band, where the first channel and the third channel are not adjacent.

For example, a center frequency of the first channel may be 7488.0 megahertz (MHz), and a bandwidth is 499.2 MHz. A center frequency of the second channel may be 7987.2 MHz, and a bandwidth is 499.2 MHz. A center frequency of the third channel may be 8486.4 MHz, and a bandwidth is 499.2 MHz. Alternatively, a center frequency of the first channel is 8486.4 MHz, a center frequency of the third channel is 7488.0 MHz, and bandwidths of both the first channel and the third channel are 499.2 MHz.

In some embodiments, when N is equal to 91, the target preamble group includes at least one of 10 preambles, and the 10 preambles are as follows:

1st: +0+-+-+-+++++-+++----0+--+-++0++-++++-0-++++-++---+--+--++-0+-+++----0-+0+--+++-++-00-++0;
2nd: ++-00-++-+++--+0+-0----+++-+0---++--+--+---++-++++-0-++++-++0++-+--+0----+++-+++++-+-+-+0+0;
3rd: -+-+0++-++--+0+0--+-0+-+---+-+---++-+--++++++-+++0------+-+++-++--00++0-++--+++0++-+-+++++0-;
4th: -++0--0+++-+++--++-0-+-0+-+-00++--++-+---+++++++++++--+--++-++-+-0+0-+-++++----0-++--0-+-+;
5th: +-+----0+-++-++------0+-+++-+++-+++++0+-+-0-+-+++---+++++-+-++-++--00-++0--0++--+++-+0+0-;
6th: -+--++-+-+++++++---+-+0++---+-+-+0-+------+0--+++00++-+--++++++-++-+0--0+0+-++++-0+++0-+---++-;
7th: +++++++-0+-+-++0--+-0-+-+---+++--+++0++-0--+-++---00+0-+++-0---++++-+--+-+-++0++-++-+--+++;
8th: 0--0--+++--++++++0+--0+--+00+-++-+++++++--++---+-++++-+--+-++++0-0+++-+-++--+0+-+-+-0----+-+;
9th: +++++--+++-+---++-+--+0-+++++++-----++-++00++0--++-+--0-+-++-+-+-0++---0+---++-0-0-+-+0+++-++; and
10th: +0+++---+--0+-0+-++-+++-+00++-0-0++++-++-+--+-+--+++0+-+0+-+---++0--+-+----++-+++--+++++.

For ease of description, in this application, the 10 preambles are denoted as a third preamble set, and the 10 preambles and the third preamble set may be replaced with each other. It should be noted that a sequence that is of the 10 preambles included in the third preamble set and that is in the third preamble set is merely described herein as an example. In actual application, there may be another arrangement sequence. This is not specifically limited in this application.

Optionally, in this embodiment, the target preamble group is one of a first preamble group, a second preamble group, and a third preamble group. The first preamble group includes at least one of first four preambles in the third preamble set and at least one of the following preambles:

-0+++++-+-++0+++--++-0++00--++--+++-+------0+++-+++++--+-++---+-+---+-+0-+--0+0+-++-++0+-+-; and
+-+-0---++-0----+++++-+-0+0-+-++-++--+--+++++++++++---+-++--++00-+-+0-+-0-++--+++-+++0--0++-.

The second preamble group includes at least one of a fifth preamble, a sixth preamble, or a seventh preamble in the third preamble set, and at least one of the following preambles:

+++--+--++-++0++-+-+--+--+++---0-+++-0+00---++-+--0-++0+++--+++---+-+-0-+--0++-+-+0-+++++++;
-0+0+-+++--++0--0++-00--++-++-+--+++++---+++-+-0+-+-+0+++++-+++-+++-+0------++-++-+0----+-+; and
-+++---+-0+++0-++++-+0+0--0+-++-+++++++--+-++00+++--0+-----+-0+-+-+---++0+-+---+++++-+-++--+-.

The third preamble group includes at least one of last three preambles in the third preamble set and at least one of the following preambles:

+-+----0-+-+-+0+--++-+-+++0-0++++--+--+-++++-+---++--++++++-++-+00+--+0--+0+++++--+++--0--0;
++-+++0+-+-0-0-++---+0---++0-+-+-++-+-0--+-++--0++00++-++-+++++-0+-+-++--+-+++--+++++; and
+++++--+++-++---+-+--0++---+-+0+-----+0+++--+-+--+-++-++++0-0-++00+-+++-++-+0-+0--+---+++0+.

It should be noted that the first four preambles, the fifth preamble, the sixth preamble, or the seventh preamble, and the last three preambles in the third preamble set herein are sequence numbers in the arrangement sequence in the foregoing example. For details, refer to related descriptions of the first preamble set. Details are not described herein again.

In an embodiment, a universal set of preambles included in the first preamble group, the second preamble group, and the third preamble group may be shown in Table 3.

**Table 3**

| Preamble group | Preamble index | Preamble |
|---|---|---|
| First preamble group | 1 | -0+++++-+-++0+++--++-0++00++--+++-+------0+++-+++++---+-++---+-+---+-+0-+--0+0+-++-++0+-+- |
| | 2 | +-+-0---++-0----+++++-+-0+0-+-++-++--+--+++++++++++--+-++--++00-+-+0-+-0-++--+++-+++0--0++- |
| | 3 | +0+-+-+-+++++-+++----0+--+-++0++-++++-0-++++-++---+-+--++---0+-+++----0-+0+--+++-++-00-++0 |
| | 4 | ++-00-++-+++--+0+-0----+++-+0---++--+--+---++-++++-0-++++-++0++-+--+0----+++-+++++-+-+-+0+0 |
| | 5 | -+-+0++-++-+0+0--+-0+-+----+-+---++-+-+++++-+++0---+-+++--++--00++0-++--+++0++-+-+++++0- |
| | 6 | -++0--0+++-+++--++-0-+-0+-+-00++--++-+-+++++++++++--+--++-++-+-0+0-+----0-++---0-+-+ |

(continued)

| Preamble group | Preamble index | Preamble |
|---|---|---|
| Second preamble group | 1 | +-+----0+-++-++------0+-+++-+++-+++++0+-+-+0-+-+++--+++++--+-++-++--00-++0--0++--+++-+0+0- |
| | 2 | +++--+-++-++0++-+-+--+-+++---0-+++-0+00---++-+--0-++0+++--+++---+-+-0-+--0++-+-+0-+++++++ |
| | 3 | -0+0+-+++--++0--0++-00--++-++-+--+++++---+++-+-0+-+-+0+++++-+++-+++-+++-+0--------++-++-+0-+-+ |
| | 4 | -+--++-+-+++++---+-+0++---+-+-+0-+-----+0--+++00++-+--+++++++-++-+0--0+0+-++++-0+++0-+---++- |
| | 5 | -++---+-0+++0-++++-+0+0--0+-++-+++++++--+-++00+++-0+------+-0+-+-+---++0+-+---+++++-+-++--+- |
| | 6 | +++++++-0+-+-++0--+-0-+-+---+++--+++0++-0--+-++-00+0-+++-0---+++--+--+--+-++0++-++-+--+++ |
| Third preamble group | 1 | +-+----0-+-+-+0+--++-+-+++0-0+++--+--+-++++-+---++-++++++-++-+00+--+0--+0+++++--+++--0--0 |
| | 2 | 0--0--++--++++++0+--0+--+00+-++-+++++-++---+-+++-+--+--++++0-0+++-+-++--+0+-+-+-0----+-+ |
| | 3 | +++++--+++-+--++-+-+0-++++++-----++-++00++0--++-+-0-+-++-+-+-0++---0+---++-0-0-+-+0+++-++ |
| | 4 | +0+++---+--0+-0+-++-+++--+00++-0-0++++-++-+--+-+-+++0++0+-+-++0--+-+---++-+++--+++++ |
| | 5 | ++-+++0+-+-0-0-++---+0---++0-+-+-++-+-0--+-++-0++00++-++----++++++-0+---+-++--+-+++--+++++ |
| | 6 | +++++--+++-++---+-+--0++----+--+0+-----+0+++--+-+--+-++-++++0-0-++00+-+++-++-+0-+0--+---+++0+ |

It should be noted that the preamble indexes in Table 3 are merely examples. For details, refer to related descriptions of the preamble indexes in Table 1. Details are not described herein again.

Optionally, a differential set mapping method may be used to generate a plurality of ternary sequences whose lengths are 91. A cross-correlation feature is used as a primary constraint, and a sequence ambiguity function feature and an SPAR feature are used as secondary constraints. 18 sequences (as shown in Table 3) with good properties in the sequences are selected as preambles in the preamble group.

Optionally, as shown in Table 3, there is a low periodic cross-correlation between preambles whose indexes are 1, 4, and 6 in the first preamble group, between preambles whose indexes are 1, 4, and 6 in the second preamble group, and between preambles whose indexes are 1, 4, and 6 in the third preamble group. When a quantity of apparatuses that need to perform synchronous ranging is less than or equal to 3, the preambles whose indexes are 1, 4, and 6 in the first preamble group, the second preamble group, or the third preamble group may be preferentially used. The preambles may be referred to as preferred preambles.

In some embodiments, when N is equal to 121, the target preamble group includes at least three of 42 preambles, and the 42 preambles are as follows:

1 st:   +0+-000-0+++00++--++-+-+--+0---++0+-0++-0-0+---+-0000-+0-+-+++0+-000-+00-0-0+0++++00-++0++-0+0+++-0-00-0--0++-+-000++0+;

2nd:   -0+00+0-0++0++00-++--000+0-000++0+0+--+-0-+0+-0+-++-+-00++0+0+0++--+----++0---0--0-++000-+0+-++000+-0-00++-+++-00+++-+-;

3rd:   0+-+-+0-0+-0-0+0+-+0+00-+0-+00+0-0+0+++-0++++--++--00-++0++++--0-000-+00+-+--0+++0+--0+++00++-+0-+0-----+-00+---0+00000;

4th:   --++-00---+0-+-++-00++0---00--+++++00+-0+0++0+00+0+-++--000+0+0  0+0+-0++00+++-00-000+-0-+-+-+-+0++--++-+-0-+0-000++0+0+;

5th: -0+0--++-0-00+++++-+0-0-0-+++00-0-+--0++0-+00-+-0-----0+-00-++0++++-+00++0-+-+++0-+-+000+-+0++-0+++-+0-+0+000000-0+00+-;

6th: 0+000-++++0+-+++-++00--+-0-0-++0++-+---0++--+0+0-0-0--+-+-0—00++-0+00—+0++++00000++-++—0++-0-+-0+-+—-+00++00++0-00-0;

7th: -000++0+00+0-+-0+---++++00-000-0-+00-+---0--+00+0--0+++-0++00+++0-0+00--++-0-0-0++-+-++0+-+-0-++-++--0+-0+0+++++-+0000+-;

8th: +000++00+++00+0+0+-+--++-0--0+++-0000+--0+0+0++00----+00-0+-0+0-+++--+0++-+----0-++00+0++-+-+-0-+00-00-0-+-++--00-+-00++0;

9th: ++0--0++-00+0—0-+-++000-+++++----0000+-+000-0-+--0-00-+++-+++-++0-0++0-+0++-0-+-++0++-+0+0+00-++-0+-+0-0-00+0+00++00;

10th: -+--0++-000++00+-+0+0+0--0-0+0++-+0+0+++--00-++-+++-0000-+0-00-+00++++---+0--0+-0-----+0-+++-+0+--+0++0+-0+0+-0++00000+-+;

11th: ----00++-000++0--++-0-+0---0+0000+--+0+-+00-00--+00+++++-+0++-+---+++0+++-0+-0-00+-+-+0-0+--0+-++-++000+0+0++00+0--0-0+0+;

12th: -000+000+++-0--+0--+-0+00+0+-0+++-++---+-+0-0++-+-+++0+00--0-0+++00+0+-00++-+0++++-+0-0-0+--+0+-000-0-00+-000++-+0-+;

13th: -00000+++---0-++--0+000+---+0-0-0+00+++00--0+++0+++-+000++0+-0+-0+00-+0++0-++-0++++-+-+----+0-0-+0+00+-+-0+-00+-+0+0+;

14th: -0000++0-+++++0+0+0-+0++0+-++--+-00++0-0++++000+-+-+0+-+--+0+0-0+0+-00+--+00-0+-+0+++----00++0--+-0-00-00++-0+-000;

15th: --+0--++000+--0-+-++-+++00-0+0000+++-0--0+0----+-00+-+-+0+0-+++--+++++0+--0++00+-0+0+++0+0+00--0-+0+-+-0-+00+0+--+000-00;

16th: ++++-0-0—++00++0-0++00-+-000+—0—0+++0+0000+0—+00+-00++++++--+0+++-+++-0+-0-+--0+-+-0+00+00-0-++-+-++---000--+-0-0-0+0-;

17th: +-+00-0--+++0000++0-+--+0++++-+-+++--0+0-+++++0--0-0+00-+0-0-0-+0+--++-+-0-+00+--00--0--00++-++0+-+0+00+000-0+++-0++-000-;

18th: +00+++0+--++0+0-+++-0--0--+--+00+0+0+++++----0+++-+--000+-00+0-0++--+-0+00-++0-0-+---00++-0+-0-+0--+-+-+0000+000++00+-+0;

19th: +0+0-0--0+00++0+0+000++-++-+0--+0-0+-+-+00-0-+0-+++0+++---+-++0+-++++++00+-00-00+-+0+--+0000+0---0+-0--++--0++000-++00----;

20th: -0+00++00-00++++++-0-++--0+++000+-0+-++0+-+0--0+----0--0-0++-+--+00+0-+00-++00+-+-+0+++--+---+-000+0+0++-0+0-0-+0+0000++-;

21st: ---0+0-0-0-+--000---++-+-++-0-00+00+0-+-+0--+-0-+0-+++-+++0+ +++++00-+00+--0+0000+0+++0--0--+000-+-00++0-+0++00++--0-0++++;

22nd: +--0++00+++---+----0-0+++++-00+0+0++-+00+---0+-+0-0-+0--++-0+-0---00++-0-000+0-++-+--++0++-0-0+00+00--+000+-++0000++0+-+-+0;

23rd: 0+-+-+0++0000++-+000+-00+00+0-0+++++--+-++-0+000-0-++00---0-+0-++--0+-0-0+-+0---+00+-++0+0+00-+++++0-0----+---+++00++0--+;

24th: -++0000+0+-0-0+0-++0+0+000-+---+--+++0+-+-00++-00-+0+00--+-++0-0--0----+0--0+-+0++-+0-+000+++0---++-0-+++++00-00++00+0-;

25th: ++000-0+0+++-0+-+-+0+-++00+00+--+-00----+-++--+0+0-+0-0+-0+000+-+0-0++-++++++0---0--+00--+++--0-+0000++00-+0++0+0+00-0-+;

26th: +-+00++000+0000+-+-+0--0+-0-+0-++00---+-0-0++-00+0-+--++0-0+00-+000--+-+++0----+++++0+0+00+--+-0--0-+++-0+0++--+0+++00+0;

27th: -000-++0-+++0-000+00+0+-+0++-++00--0---00--+00+-0+-++--+0+-0-0-0+-00+0-0--0+++++-0+0--+++-+-++++0+--+-0++0000+++--0-00+-+;

28th: --000+--+0+00+-0+-+0+0-0--00+0+0+++0+0-+00++0--+-0+++++--+++     0+0+-+-+00-+----0+0--0-+++0000+0-00+++-++-+--0--+000++--0+--00;

29th: -++0+00-0-++++++-0+00-+0+0+-0+-+-+-+00++0-0+-+0   000+++-+---++----0+-+-0++000-00+0+0-+-00+0-++000+++-00+0-0+++----00-+0;

30th: +-0-00+0+0++0+-00++0000+-0--+++--00+--0---0+++++--++0-0+-+000+0--+0--0+-0+0+--++-+----00-+--+00+00++-+0+-+-0-+++0+0-000++;

31st: 0++00-+-00--++-+0-00-00+-0-+-++0+00++-0----+-++0--+++-0+0--+0-00+----0++0+0+0--+0000-+++0-0-++--+-++0+0+00+++00++000+;

32d: -0-00+00-+00-0--+0-00-+0-0+00+--+++0-00000+---0-+-0+-+++++0++-+0-0+0-+0+--+++-00+---00+++000--0++++0-++-+-+0-++++0+0-+-+;

33rd: -0-0-000-++0-+0-00++--0+++++00---+++-00+--0-0++0+0+0-+0-0—00+++-++-+++-+0+0+00-00+—+-++-+-+0++00+-+—+0000-++00—0;

34th: +0---00+-+00-00+-++000++0-+--+-0+-++00---0--++-++0+-0-++++-0+-+00-0+0-0-00+0+++++-0+++-+--0+00++0+-++++-0000-0-+00-0+--0;

35th: +-00--+00+0+0++0000+00+++-+0-00+-+--+-0+-0-+++-+0++-0-0++00++0--00+++-++-0+++--0-0-0+---+00---00+0++--+---+-+0+000++0+0-;

36th: +0+0+-+00--+0-+-+00+0+-0-0+-----+--+-++++0-++-0++0+-00+0-+0--+-0++000+-+++0+++0--00+++00+0-0-0+---+000+0--++-0---+++00000;

37th: +0++000-+-++0—0-00-0-+++0+0-++0+-00++++0+0-0-00+-000-0+++---+-0+-0000-+----+0-0-++0-+0++---0+--+-+-++--++00+++0-000-+0+;

38th: -+-+++00-+++-++00-0-+000++-+0+-000++-000++-0---0---0++-++0+0+0++00—+-++-+0-+0+-0-+—-+0+0++000-0+000—-++-00++0++0-0+00+0-;

39th: 00-00-0++00++00+--+0-+0-0-++0--++-++00000++++0+--00+0-++00-0-+-+--0-0-0-+0+0+--++0---+-++0++-0-0-+--00++-+++-+0++++-000+;

40th: +000--00--++++0+-0++00+-++-+-0-+0++--0-0++-+++-++0++-0--+0+-0000+++-+000-00-0+00-+++0++-+-0-+++-000+0--0+0-0+0+-0+----0--;

41st: +000+0+0-+-00-0----++0+0---++-+-+-+-0--0+++-+00++-0+-+++000++0+0++0--0-++-00+0+++00+---++0-++00-00+--+000-00-+0--+--+++0+0; and

42nd: 00++00+0+00-0-0+-+0-++-00+-0+0-++0++-+-0-++0+-0++0-0++-+++-+++----00-0--+-0-000+-+0000----+++++-000++-+-0--0+00-++0+--0++.

For ease of description, in this application, the 42 preambles are denoted as a fourth preamble set, and the 42 preambles and the fourth preamble set may be replaced with each other. It should be noted that a sequence that is of the 42 preambles included in the fourth preamble set and that is in the fourth preamble set is merely described herein as an example. In actual application, there may be another arrangement sequence. This is not specifically limited in this application.

Optionally, in this embodiment, the target preamble group is one of a first preamble group, a second preamble group, and a third preamble group.

The first preamble group includes at least three of first 14 preambles in the fourth preamble set; the second preamble group includes at least three of middle 14 preambles in the fourth preamble set; and the third preamble group includes at least three of last 14 preambles in the fourth preamble set.

It should be noted that the first 14 preambles, the middle 14 preambles, and the last 14 preambles in the fourth preamble set herein are sequence numbers in the arrangement sequence in the foregoing example. For details, refer to related descriptions of the first preamble set. Details are not described herein again.

In an embodiment, a universal set of preambles included in the first preamble group, the second preamble group, and the third preamble group may be shown in Table 4.

**Table 4**

| Preamble group | Preamble index | Preamble |
|---|---|---|
| First preamble group | 1 | +0+-000-0+++00++--++-+-+--+0---++0+-0++-0-0+---+-0000-+0-+---+++0+-000-+00-0+0+++00-++0++-0+0+++-0-00-0-0++-+-000++0+ |
| | 2 | -0+00+0-0++0++00-++--000+0-000++0+0+--+-0-+0+-0+-++-+--00++0+0+0++--+----++0---0---0-++000-+0+-++000+-0-00++-+++-00+++-+- |
| | 3 | 0+-+-+-0-0+-0-0-0+0+-+0+00-+0-+00+0+-0+0+++-0++++--++-00--++0++++--0-000-+00+-+--0+++0+--0+++00++-+0-+0 +-00+---0+00000 |
| | 4 | -++-00---+0-++--00++0---00--+++++00+-0+0++0+00+0+-++-000+0+0-0+0+-0++00+++--00-000+--0--+-+-+-+0++---++-+-0-+0-000++0+0+ |
| | 5 | -0+0--++-0-00+++++-+0-0-0-+++00-0-+--0++0-+00-+-0-0+-00-++0++++--+00++0-+-+++0-+-+000+--+0++-0+++-+0-+0+000000-0+00+- |
| | 6 | 0+000-++++0+-+++-++00--+-0-0-++0++-+---0++--+0+0+-0-0-0--+-+-0--00++-0+00--+0++++00000++-++--0++-0-0+-0+-+00++00++0-00-0 |
| | 7 | -000++0+00+0-+-0+---++++00-000-0-+00-+---0--+00+-0-0+++-0++00+++0-0+00--++-0-0-0++-+-++0+-+-0-++-++--0+-0+0++++-+0000+- |
| | 8 | +000++00+++00+0+0++-+--++-0--0+++-0000+--0+0+0++0-+00-0+--0+0-+++--+0++-+----0-++00+0++-+-0-+00-00-0+-++--00-+-00++0 |
| | 9 | ++0--+0++-00+0--0-+-+-++000-+++++----0000+-+000-0+--0-00----+++-+++-++0-0++0-+0++-0-+-++0++-+0+0-+00-++-0++-+0-0-00+0+00++00 |
| | 10 | -+--0++-000++00+-+0+0+0-0-0+0++-0+0+++--00-++-+++-0000-+0-00-+00++++---+0---0+-0-----+0-+++-+0+--+0++0+-0+0+-0++00000+-+ |
| | 11 | ----00++-000++0--++-0-+0---0+0000+--+0+-+00-00-+00+++++-+0++-+---+++0+++-0+-0-00+-+-+0-0+--0+-++-++000+0+0++00+0--0-0+0+ |
| | 12 | 000+000+++-0--+0--+-0+00+0+-0+++-++---+-+0-0++-+-+++0+00--0-0+++00+0+-00++--+0++++--+0+0-0+-+0+-000--0--00+----000++-+0-+ |
| | 13 | -00000+++---0-++--0+000+---+0-0-0+00+++00--0+++0+++-+000+++0-+-0+-0+00-+0++0-++-0++++ +--+-----+0-0-+0+00+-+-0+--00+-+0+0+ |
| | 14 | --0000++0-+++++0+0+0-+0++0+-++--+-+--00++0-0++++000+--+-+0+-+-+0+0-0+0+-00+-+00-0+-+0+++--00++0-+-0-00-00++-0+-000 |
| Second preamble group | 1 | --+0--++000+--0--+-++-+++00-0+0000+++-0--0+0 +-00+-+-+0+0-+++--+++++0-+--0++00+-0+0+++0+0+00--0-+0+-+0-+00+0+--+000-00 |
| | 2 | +++++0-0--++00++0+-0++00-+-000+--0--0+++0+0000+0--+00+-00+++++--+0+++-+++-0+-0-+--0+-+-0+00+00-0-++-+-++-000--+-0-0-0+0- |
| | 3 | +-+00-0--+++0000++0-+--+0++++-+-+++--0+0-+++++0--0-0+00-+0-0-0-+0+--++-+0-+00+--00--0--00++-++0+-+0+00+000-0+++-0++-000- |
| | 4 | +00+++0+--++0+0-+++-0--0--+--+00+0+0+++++----0+++-+-000+-00+0-0++--+-0+00-++0-0-+---00++-0+-0-+0--0+-+-+0000+000++00+-+0 |
| | 5 | +0+0-0-0+00++0+0+000++-++-+0-+0-0+-+-+00-0-+0-+++0+++---+-++0+-+++++00+-00-00+-+0+-+0000+0---0+-0-++--0++000-++00---- |
| | 6 | -0+00++00-00+++++-0-++---0+++000+-0+-++0+-+0--0+----0--0-0++-+--+00+0-+00-++00+-+-+0+++--+----+-000+0+0++-0+0-0-+0+0000++- |

(continued)

| Preamble group | Preamble index | Preamble |
|---|---|---|
| | 7 | -0+0-0-0-+--000---++-+-++-0-00+00+0-+-+0--+-0-+0-+++-+++0+--+++++00-+00+--0+0000+0+++0--0--+00--+-00++0-+0++00++--0-0++++ |
| | 8 | +--0++00+++---+----0-0+++++-00+0+0++-+00+---0+-+0-0-+0--++-0+-0---00++-0-000+0-++-+--++0++0-0+00+00-+000+-++0000++0+-+--+0 |
| | 9 | 0+-+-+0++0000++-+000+-00+00+0-0++0++--+-++-0+000-0-++00---0-+0-++--0+-0-0+-+0---+00+-++0+0+00-+++++0-0--+---+++00++0--+ |
| | 10 | -++0000+0+-0-0+0-++0+0+000-+---+--+++0+-+-+00++-00+-0+00+--+-++0-0--0----+0--0+-+0++-+0-+000+++0---++-0-+++++00-00++00+0- |
| | 11 | ++000-0+0+++-0+-+-+0+-++00+00+-+-00--+-++-+0+0-+0--0+--0+000+--+0-0++-+++++0---0--+00--+++--0-+0000++00-+0++0+0+00-0-+ |
| | 12 | +-+00++000+0000+-+-+0--0+-0-+0-++00---+-0-0++-00+0-+-++0-0+00-+000--+-+++0----+++++0+0+00+--+--0--+++-0+0++--+0+++00+0 |
| | 13 | -000-++0-+++0-000+00+0+-+0++-++00--0---00--+00+-0+-++--+0+-0-0-0+-00+0--0+++++-0+0--+++-+-+++0+--+-0+++0000+++--0-00+-+ |
| | 14 | -000+--+0+00+-0+-+0+-0--00+0+0+++0+0-+00++0--+-0+++++--+++-0+0+-+-+00-+----0+0--0-+++0000+0-00+++-++-+--0-+000++--0+--00 |
| Third preamble group | 1 | -++0+00+-0+++++-0+00-+0+0-0+--+-+-+00++0-0+-+0-000+++-+---++----0+-+-0++000-00+0+0-+-00+0-++000+++-00+0-0++----00-+0 |
| | 2 | +-0-00+0+0++0+-00++0000+-0--+++--00+--0--0+++++-++0-0+-+000+0--+0--0+-0+0+--++-+----00-+--+00+00++-+0+-+-+0-+++0+0-000++ |
| | 3 | 0++00-+-00--++-+0-00-00+-0-+-+-++0+00++-0----+-++0+-+++-0+0--+0-00+----0++0+0+0--+0000-+++0--0-++--+- |

(continued)

| Preamble group | Preamble index | Preamble |
|---|---|---|
| | | ++0+0+00+++00++000+ |
| | 4 | -0-00+00-+00-0--+0--00-+0-0+00+--+++0-00000+---0-+-0+-+++++0++-+0-0+0-+0+--+++-00+---00+++000--0++++0-++-+-+0-++++0+0-+-+ |
| | 5 | -0-0-0-000-++0-+0-00++--0+++++00---+++-00+--0-0++0+0+0-+000+0--00+++-++-+++-+0++0+00-00+--+-++-+-+0++00+-+---+0000-++00--0 |
| | 6 | +0---00+-+00-00+-++000++0-+---+-0+-++00---0--++-++0+-0-++++--0+-+00-0+0-0-00+0+++++-0+++-+--0+00++0+-++++-0000-0-+00-0+--0 |
| | 7 | +-00--+00+0+0++0000+00+++-+0-00+-+--+-0+-0-+++-+0++-0-0++00++0--00+++-++-0+++--0-0-0+---+00---00+0++-+---+-+0+000++0+0- |
| | 8 | +0+0+-+00--+0-+-+00+0+-0-0+----+--+-+++++0-++-0++0+-00+0-+0-+-0++000+-+++0+++0--00+++00+0-0-0+---+000+0-++-0---+++00000- |
| | 9 | +0++000-+-++0-0-00-0-+++0+0-++0++-00++++0+0-0-00+-000-+0+++---+-0+-0000-+---+0-0-++0-+0++---0+--+-+-++-++00+++0-000-+0+ |
| | 10 | -+-+++00-+++-++00-0-+000++-+0+-000++-0 0 0++ +--++0+0+0++00--+-++-+0-+0+-0-+--+0+0++000-0+000--++-00++0++0-0+00+0- |
| | 11 | 00-00-0++00++00+--+0-+0-0-++0--++-++00000++++0+--00+0-++00--0-+-+--0-0-0-+0+0+--++0---+-++0++-0-0-+--00++-+++-+0++++-000+ |
| | 12 | +000--00--++++0+-0++00+-++-+-0-+0++--0-0++-+++-++0++-0--+0+-0000+++-+000-00-0+00-+++0++-+-0-+++-000+0--0+0-0+0+-0+----0-- |
| | 13 | +000+0+0-+-00-0----++0+0---++-+-+-+-0--0+++-+00++-0+-++000++0+0++0--0-++-00+0+++00+---++0-++00-00+--+000-00-+0--+--+++0+0 |
| | 14 | 00++00+0+00-0-0+-+0-++-00+-0+0-++0++-+-0-++0+-0++0- |
| | | 0++-+++-+++----00-0--+-0-000+-+0000----+++++-000++-+-0--0+00-++0+--0++ |

It should be noted that the preamble indexes in Table 4 are merely examples. For details, refer to related descriptions of the preamble indexes in Table 1. Details are not described herein again.

Optionally, a differential set mapping method may be used to generate a plurality of ternary sequences whose lengths are 121. A cross-correlation feature is used as a primary constraint, and a sequence ambiguity function feature and an SPAR feature are used as secondary constraints. 42 sequences (as shown in Table 4) with good properties in the sequences are selected as preambles in the preamble group.

Optionally, as shown in Table 4, there is a low periodic cross-correlation between preambles whose indexes are 4, 6, 11, and 12 in the first preamble group, between preambles whose indexes are 1, 8, 9, and 14 in the second preamble group, and between preambles whose indexes are 1, 6, 10, and 14 in the third preamble group. When a quantity of apparatuses that need to perform synchronous ranging is less than or equal to 4, the preambles whose indexes are 4, 6, 11, and 12 in the first preamble group may be preferentially used, the preambles whose indexes are 1, 8, 9, and 14 in the second preamble group may be preferentially used, or the preambles whose indexes are 1, 6, 10, and 14 in the third preamble group may be preferentially used.

Optionally, as shown in Table 4, there is a low periodic cross-correlation between preambles whose indexes are 1, 4, 5, 6, 8, and 11 in the first preamble group, between preambles whose indexes are 1, 2, 7, 8, 9, and 14 in the second preamble group, and between preambles whose indexes are 1, 6, 9, 10, 13, and 14 in the third preamble group. When a quantity of apparatuses that need to perform synchronous ranging is less than or equal to 6, the preambles whose indexes are 1, 4, 5, 6, 8, and 11 in the first preamble group, the preambles whose indexes are 1, 2, 7, 8, 9, and 14 in the second preamble group, or the preambles whose indexes are 1, 6, 9, 10, 13, and 14 in the third preamble group may be preferentially used. The preambles may be referred to as preferred preambles.

In some embodiments, when N is equal to 127, the target preamble group includes at least one of 14 preambles, and the 14 preambles are as follows:

1st: -00000-++0-0000-00-+-000--0-00+00+0++-0-+0++-00--0++00+0+0-+0-0+-+-+0++++0000-+000+000-0+00--00++--0+0-0+000+-+++++00-000000-0+;

2nd: ++0+0000-00+++000++0+00+00-0+-0-+0-+-00-0+-00-0+0-+0+0+-+-0++--0000+-000+000-0+00++00-+--0+0-0-000++++-+-00+000000+0--00000+;

3rd: -+00000+0-000-+0++0-000000++0000+00+00+++++-+0+---+000+--0-0-0+00-0+0++--0-00+-00+-+00+-0-0+-000+000+0++-0--00-0000-++-00+0++0-;

4th: +00-00+-++0-0+00000-0-+-+00--0-+++0+-00+0-+000-+00+-0++0+000+--+-0000++-000+0+00++000000++0-0--+0-00+0-0+0++0+--00+0000+000;

5th: 0-+0+00000+--+-0+++000000-0+0-+0----+--00++0+-0+0-0+000+00-00++00+--+000-+-0---0+0-+-+0+00+0+-00+0-00+++00-000++000+0+++0000-000;

6th: 0000++0000-0-000-+-+00-000+0--00--+0+0+00--++-0+0000+-+000+00+00--0--0-0+-0-+++0-+000++0+00-0--+0++-00++00-0+0+0-++-+++000000+0;

7th: +0000+00--+0++0+0-0+00-0+-0-0-0+++000000++00+0+000-++0000-+-+000+0++0-+00+-000+-0+00-+0+++----0---00+-+-0-00000+0-0++-+00-00+000;

8th: 0-000+-000-0--+0000+0000+-0+00000+++--0++000000+0+0++0+++-00-+0+-0+0-0+000-00+00-+00++-+000+++0+--0-0-+-+0-00-0+-00+0-00++-0;

9th: ----+-0-0+0-00+-00--++0---0+00+0-+000+-0++++0+-0-0-+0++00-00+000--+0000+0-+--+00+0+0+++00++0-0-000-00+--+000+0+0000+-00000+000000+

10th: +00+-000-0-+-0-0++0-+00000--00--0+0-00+-+00+++-0+-0+0000+0+0-0----+0+00-0-000++0+-+000++---++0000+++0+--+00+0-+00+00+000000+000;

11th: +000+0---0+0+-0+++00000-+00--0-0-00-++00++--0++0+0000-0-0+0+-++0+00-0-000-+0+-+000-++-++0000+++0-+-+00+0++00+00+000000-000-00-;

12th: 00-++00-0+00-+0-00-0+-+-0-0--+0+++000-+++00+-00+00-000+0-0+0-+0+-00----+++0++0+0+000000++0--+++00000+0-+0000+0000+--0-000-+000-;

13th: -+0+-00+0000--++00-0++0--+00000-0-000-+0-+0-000000+-0000+00+00+++-++-0+++--000+++0+0-0-00-0-0++++0+00-+00+-+00--0-0+-000-000+0+;  and

14th: -0+0++0+++00+0000-000+00-00—++0+0+00000-0-+++00—+0-+—+—0-+00-0+-000--00++0-+0+000+-+-+0000+++000-0+00-+000000++0-0+--+0-00-0.

For ease of description, in this application, the 14 preambles are denoted as a fifth preamble set, and the 14 preambles and the fifth preamble set may be replaced with each other. It should be noted that a sequence that is of the 14 preambles included in the fifth preamble set and that is in the fifth preamble set is merely described herein as an example. In actual application, there may be another arrangement sequence. This is not specifically limited in this application.

Optionally, in this embodiment, the target preamble group is one of a first preamble group, a second preamble group, and a third preamble group. The first preamble group includes at least one of first six preambles in the fifth preamble set and at least one of the following preambles:

+00+00+-0+00++--0+++0000+++----000+++0+-000+0+00+0+-++-0-0-0-0000+0-+0+-++00+--00+0-0++00-+00000+-0-+0-0+-+0-000--00-000-000000;

+0+0+-0-000++-+00000+00--0+-0000-0-000000+--0-+0+--++00-++0+00+00+0-0-+-0-0+0+00+++000++00+0-+00-000-0++-+0--+00+000+0000+; and

+000000++0+0-+-0-00-0+0+0++0+--00+0000-000+00+00-+++0-0+00000+0++-+00++-0+-+++--0--00-0--000+-00+-0-+0+000++---0000++-000-0+00-.

The second preamble group includes at least one of a seventh preamble and an eighth preamble in the third preamble set and at least one of the following preambles:

+-0+00+00+0-00-+++00+000-+0+0-0000+++++-+0+--0+-0++--0-000+0-+00+0+----000-000000-+00+-0++000++-00++-0-0-+-0000+00--00000-0+0+0;

000-000-00--000-0+-+0-0+-0-+-00000+-00++0-0+00—+00++-+0+-0+0000-0-0-0-++-+0+00+0+000-+0+++000----+++0000+++0-++00+0-+00+00+000;

++-00000+-0-000000-00-+-++-+000-0+0+0+++-00--00+0+000+000--0000-++0-++++0-0++0+0-00-+0++00++-0++0+-+0-00+00-0--000-+-00+0000-0;

-00+0-000-++0000---++000+0+-0-+00-+000--0-00--0--+++-+0-++00+-++0+00000+0-0+++-00+00+000-0000+00--+0++0+0+0-00-0-+-0+0++000000+;

0-0000--0+00000+---+0++000000-0+0-+0---+-++00-+0++0+0+0+000-00-00-+00+-++000-+-0-++0-0+++++0-00-0++00+0+00++-00+000+-000-0---+000;

-00+-0-+0-00+0+0000+0+-0000++00+0+++++-+0-0+-0--+0++--000-0+000+0+0-+-000000+-+-0--
00++000-00+00++-00--++-00-00000+000++0-0+0; and

+0000+000+00+--0+-++0-000--00+-0+00++000+++00+0+0-0-+-0-0+00+00+0++----+00++--+0+-0--
+000000-0-0000-+0--00+00000+-++000-0-+0+0+.

The third preamble group includes at least one of last six preambles in the third preamble set and at least one of the following preambles:

0-0000+00-+-000--0-00+00-0+-+0++0-++00++0+-00-0+0++0-0++++-0++-0000--000+000+0+00--00-
+++0+0+0-000+-++-+-00-000000-0-+00000-++;

+---0--000--+000+00--++00+0+00++0--00--0++++0--0++-0--+--000++--+00+--00--00-000+0+0+0++0+-00++-+-
0+-0+0-000000++0+-+00000+0-0000-0000; and

+0+0-00000--00+0000-+-0-0-++00-++000++0-+00+-000000-000----+0+00+-0+000-0—++0-+0—+0+-
+++++0000-0+0+-000+00+++-00-0+00+00+0-+0.

It should be noted that the first six preambles, the seventh preamble, the eighth preamble, and the last six preambles in the fifth preamble set herein are sequence numbers in the arrangement sequence in the foregoing example. For details, refer to related descriptions of the first preamble set. Details are not described herein again.

In an embodiment, a universal set of preambles included in the first preamble group, the second preamble group, and the third preamble group may be shown in Table 5.

**Table 5**

| Preamble group | Preamble index | Preamble |
|---|---|---|
| First preamble group | 1 | +00+00+-0+00++--0+++0000+++---000+++0+-000+0+00+0+-++-0-0-0-0000+0-+0+-++00+--00+0-0+00-+00000+-0-+0-0+-+0-000--00-000-000000 |
| | 2 | -00000-++0-0000-00-+-000--0-00+00+0++-0-+0++-00-0++00+0+0-+0-0+-+-+0++++0000-+000+000-0+00--00++-0+0-0+000+-+++++00-000000-0+ |
| | 3 | ++0+0000-00+++000++0+00+00-0+--0-+0-+-00--0+-00-0+0-+0+0+-+-0++-0000+-000+000-0+00++00-+--0+0-0-0000++++-+-00+000000+0--00000+ |
| | 4 | +0+0+-0-000++-+00000+00--0+-0000-0-000000+--0-+0+-++00+----++0+00+00+0-0-+-0-0+0+00+++000++00+0-+00-000-0++-+0--+00+000+0000+ |
| | 5 | -+00000+0-000-+0++0-000000++0000+00+++++-+0+-+000+--0-0-0+00-0+0++--0-00+-00+-+00+-0-0+-000+000+0++-0--00-0000-++-00+0++0- |
| | 6 | +000000++0+0-+-0-00-0+0+0++0+--00+0000-000+00+00-+++0-0+00000+0++-+00++-0+-+++-0-00-0--000+-00+-0-+0+000++---0000++-000-0+00- |
| | 7 | +00-00+-++0-0+00000-0-+-+00---0----+++0+-00+0-+000-+00+-0++0+000+--+-0000++-000+0+00++000000++0-0--+0-00+0-0+0++0+--00+0000+000 |
| | 8 | 0-+0+00000+--+-0++000000-0+0-+0----+--00++0+-0+0-0+000+00-00++00+--+000-+-0---0+0-+-+0+00+0+-00+0-00+++00-000++000+0+++0000-000 |
| | 9 | 0000++0000-0-000-+-+00-000+0--00--+0+0+00--++-0+0000+-+000+00+00--0--0-0+-0-+++0-+000++0+00-0--+0++-00++00-0+0+0-++-+++000000+0 |
| Second preamble group | 1 | +-0+00+00+0-00-+++00+000-+0+0-0000+++++-+0+--0+-0++-0-000+0-+00+0+----000-000000-+00+-0++000++-00++-0-0-+-0000+00--00000-0+0+0 |

(continued)

| Preamble group | Preamble index | Preamble |
|---|---|---|
| | 2 | 000-000-00--000-0+-+0-0+-0-+00000+-00++0-0+00--+00++-+0+-0+0000-0-0-0-++-+0+00+0+000-+0+++000-+++0000+++0--++00+0-+00+00+000 |
| | 3 | ++-00000+-0-000000-00-+-++-+000-0+0+0+++-00-00+0+000+000--0000--++0-++++0-0++0+0-00-+0++00++-0++0+-+0-00+00-0--000-+-00+0000-0 |
| | 4 | -00+0-000-++0000-++000+0+-0-+00-+000--0-00-0-+++-+0-++00+-++0+00000+0-0+++-00+00+000-0000+00-+0++0+0+0-00-0-+-0+0+++000000+ |
| | 5 | +0000+00--+0++0+0-0+00-0+--0-0+++000000++00+0+000-++0000-+--+000+0++0-+00+-000+-0+00-+0+++----0---00+-+-0-00000+0-0++-+00-00+000 |
| | 6 | 0-000+-000-0--+0000+0000+-0+00000+++-0++000000+0+0++0+++----00-+0+-0+0-0+000-00+00-+00++-+000+++0+--0-0-+-+0-00-0+-00+0-00++-0 |
| | 7 | 0-0000--0+00000+---+0++000000-0+0-+0---+-++00-+0++0+0+0+000-00-00-+00+-++000-+-0-++0-0++++0-00-0++00+0+00++-00+000+-000-0--+000 |
| | 8 | -00+-0-+0-00+0+0000+0+-0000++00+0+++++-+0-0+-0--+0++--000---0+000+0+0-+-000000+-+-0--00++000-00+00++-00-++-00-00000+000++0-0+0 |
| | 9 | +0000+000+00+-0+-++0-000-00-+-0+00++000+++00+0+0-0-+-0-0+00+00+0+++----+00++--+0+-0--+000000-0-0000-+0-00+00000+-++000-0-+0+0+ |
| Third preamble group | 1 | ----+-0-0+0-00+-00-++0---0+00+0-+000-0+++++0+-0-0-+0++00-00+000--+0000+0-+--+00+0+0+++00++0-000-00+-+000+0+0000+-00000+000000+ |
| | 2 | +00+-000-0-+-0-0+++0-+-00000--00--0+0-00+-+00+++-0+-0+0000+0+0-0----+0+00-0-000++0+-+000++---++0000+++0+--+00+0-+00+00+000000+000 |
| | 3 | +000+0---0+0+-0+++00000-+00--0-0-00-++00++--0++0+0000-0-0+0+--++0+00-0-000-+0+-+000--++-++0000+++0-+- |
| | | +00+0++00+00+000000-000-00- |
| | 4 | 0-0000+00-+-000--0-00+00-0+-+0++0-++00++0+-00-0+0++0-0++++-0++--0000--000+000+0+00--00-+++0+0+0-000+-++-+-00-000000-0-+00000-++ |
| | 5 | 00-++00-0+00-+0-00-0+-+-0-0--+0+++000+-++00+-00+00-000+0-0+0-+0+-00----+++0++0+0+000000++0--+++00000+0-+0000+0000+--0-000-+000- |
| | 6 | +--0-000-+000+00-++00+0+00++0-00-0++++0-0++-0-+-000++-+00+-00-00-000+0+0+0++0+-00++-+--0+-0+0-000000++0+---+00000+0--0000-0000 |
| | 7 | -+0+-00+0000--++00-0++0--+00000-0-000-+0-+0-000000+-0000+00+00+++-++-0+++--000+++0+0-0-00-0-0++++0+00-+00+-+00--0-0+-000-000+0+ |
| | 8 | -0+0++0+++00+0000-000+00-00--++0+0+00000-0-+++00--+0-+---+-0-+00-0+-000--00++0-+0+000+-+-+0000+++000-0+00-+000000++0-0+--0+00-0 |
| | 9 | +0+0-00000--00+0000-+-0-0-++00-++000++0-+00+-000000-000----+0+00+-0+000-0--++0-+0--+0+-+++++0000-0+0+-000+00+++-00-0+00+00+0-+0 |

It should be noted that the preamble indexes in Table 5 are merely examples. For details, refer to related descriptions of the preamble indexes in Table 1. Details are not described herein again.

Optionally, a differential set mapping method may be used to generate a plurality of ternary sequences whose lengths are 127. A cross-correlation feature is used as a primary constraint, and a sequence ambiguity function feature and an SPAR feature are used as secondary constraints. 27 sequences (as shown in Table 5) with good properties in the sequences are selected as preambles in the preamble group.

Optionally, as shown in Table 5, there is a low periodic cross-correlation between preambles whose indexes are 1, 4, 5, 7, 8, and 9 in the first preamble group, between preambles whose indexes are 1, 2, 3, 4, 7, and 8 in the second preamble group, and between preambles whose indexes are 1, 4, 6, 7, 8, and 9 in the third preamble group.

When a quantity of apparatuses that need to perform synchronous ranging is less than or equal to 6, the preambles whose indexes are 1, 4, 5, 7, 8, and 9 in the first preamble group, the preambles whose indexes are 1, 2, 3, 4, 7, and 8 in the second preamble group, or the preambles whose indexes are 1, 4, 6, 7, 8, and 9 in the third preamble group may be preferentially used. The preambles may be referred to as preferred preambles.

In some embodiments, when N is equal to 133, the target preamble group includes at least three of 45 preambles, and the 45 preambles are as follows:

1 st:  -+-+--+----0-+--0+-0-++--+++-+-+--++++-+--++0-0-++++-0---0-+++0--+-+++-++-0++-+++++----+-0+-++-++++---++++-+++++++-++--++-+---+-+00+++;

2nd: ++---0+---+-0+++0+0++0-++++++++---+00+-++--+-++-+++----+-+-++0--+--++--++0+++++---+0+++--+-++-+----+-+---+-+0-+-+++-0-+-+----++-+++-;

3rd:  ++-0+++-+-+++0-++++-++-+++-+0-+++00+0-+-+++-+-+-0+-+ +-+++---+-+-++++++-++-+0++--++--+-+-----++-++-+0-++0---+----0-++++++--0--;

4th:       -+--+++++----+-+++++++-++-++----+-+--+++-++-0+0+++0-+-++++-+-+++----0+---0-+--++-+--0-+0--+-+--++--0+++-+++--+-+0++---+00++-+++-+0+--;

5th: -+-+-0-+-+0----++++++++-+-+-++0--++++--+ +0+-----++-+-+-++--------+00+--+-+--++++-+++-+++++-++--++-0+--+++-++0+0+++0--0+-+-+++0++-++;

6th:         +-0++00++++-0+-++-++--+-++-+-++-+-----++0-0++---++++-+-0-+-+--+-+0+-++--++-++--+++-++--0+-++++++++++--++---0-+++0+---+-+-0--+++;

7th:        ++-++0+++-+-+0--0+++0+0++-+++--+0-++---++-++++-++--+++++-+-+--+00+--------++-+-+-++-----+0+---+--++++--0++-+-+-+++++++++----0+-+-0-+--+--;

8th:--+0+-+++-++00+---++0+-+--+++-+++0--++--+-+--0+-0--+-++--+-0--+0----+++-+-++++-+-0+++0+0-++-+++--+--+----++-++-+++++++-+----++++++--+-;

9th: +++++--+++0+00-++-+-+0-+ ++++++++0++ 0--+-0++--++ ++-+----+---++++0+-+-+++0+-+-+-0++----++----+--+++-+---+++-++-+--++-+0-+-0++-;

10th:       +++00+-+-+---+-++--++-+++++++-+++---++++-++-+0-+----++++-++0-++-+++-+--0+++--0---0-++++-0-0++--+-++++--+-+-+++--++-0-+0--+-0----+--+-+-;

11th:       +-0-+0--++--++++-+--++0+0-+++-0-----+-++-++--+-0+++-+++-+++---++--0+++-+---0-+-----+-++0-+++-+--+--+++++---++++-++-+-+-+++00+-+0++-+;

12th:       ++00++0-+-+-++0+-+++-+-0-+++0----+-++-+--++-+-+0-++++----+--++---+--+0+-++++-++-++--+0-+--+++---+-0+0-++ +-+++-+++++-+++---0+++;

13th: +--+-++---+00+-0-+-+++---++0--+-+---++++++++---+-++++--+---+-++-0+-++-+-----+----+-++0+0-+++-+-0-++-+++-0++--0--++-0++++-+0++++-++++-+-+;

14th:  +-0+0-0-+++0-----+0+++-+++--+--++++--+0-+--+----0-+-++-+++++-+00-+-+-+++++-++++-+++++---+++-+-+--+-+++--+0--++-+-0-+-0+---++-++-+++;

15th: +++-++++---+-+--++0--0+ 0 ++---+-++ 00++----+++++++--+-+--+--+++-++-++++-+-0-++-+-+-+---+0++++++--+-+0+-+--+-0-++0--+--+-+0+0+++-++;

16th:  +-+-++--+--0++0+++++++-+--0----0+-++----++++-++--0+++0+0-++-+-+-+-+--+++-+-+++++++-++--+-+++-+-++--0+-+++---00--+-+-0--++-+++-0;

17th:         +++++++++0+--+-+-+---+-++-++-+-++-+++0-+++---+++0+-0--+-+-+----+-++0--+0---+--+---+++-+++--+-0+0++++-+00++--0+-++++++---+0+-+--++----;

18th: +00+-++--------++++++-+-+-+++-0-++++-+ +0-------++-+0++-++-+-+++---+-+--+++0--++--0-+-++-+-+-++++++-+-0+++-++0-++0+0++0-++-++--++--;

19th: ---+-+-+--+++-+++-+0++-+--0-+-++-+0+0+++-+++++-00-+-0+-++--+ ------++0++--++---+-+++-+-+-0-++-+--++-++--++++----+++-0++0--+++0+++----+;

20th:         -++--++-+0--0--++-+++-0+++-++-+++---+-++++----++-++0-++++--------+-+-+-0-+++-+---+-+0-+++00--++-+0+0---+-+-+++++++-++-+-++0++-0+++--+;

21st:  -+++---++++-++00-++++-+-++-+--+-+--++-+++---+-0---+++++-0+0++-0+-0+--++++0+---+--++--0-+-0+--+-+- +-+++-++-+-+0-----+++--+-0++++++++;

22nd:  --++--++-++--0++0+0++-0++-+++0-+-++++++-+-+--++-+-0---++-0+++--+-+----+++-+-++-++0+-++-----0+---+-++++-0-+++-+-+-+++++ ++-+00+;

23rd:  --++--++-++--0++0+0++-0++-+++0-+-++++++-+-+--++-+-0---++-0+++--+-+----+++-+-++-++0+-++-----0+---+-++++-0-+++-+-+-+++++ ++-+00+;

24th: ----++--+-+0+---+++++-+0--++00+-++++0+0-+--+++-+++---+--+-0+--0++-+---+--+-+--0-+0+++---+++-0+++-++-+--++-++-+---+-+-+--+0+++++++++;

25th:  --+++0+00+-+-++--++-+++---+++--0-+-+0--+++-+-+0-+---0--++-+0-+--+++++--+++-+++----+-+++++++--++-+-+++++0+-+0--+++-+-++-+0--+----0--+;

26th: -0+++++-+--++0+++--+++-0-+------++-+-+0+-0--+++---+-+++-+0-++00+-+++0+0-+++++-++-+-++--+-+--++-

+++-++0--+--+-+-+++---++-0+++---+--;

27th: ++--+++0+0+--+--0++-0+-+-+0+-+--++++++0+-+-+-+-++-0-+-++++-++-+++--+--+--+-+++++++----++00--++-+-++-0-+0-0++-+-+-++++-+++;

28th: +-0---++++0+-+-+++-+--+-0++-0-+++-+--+--+-+++++++--++++-++++-+-++--++--0--++++0--+--0++--+----0--+-0-+++++-+-+++--+--++--+-00+0-+++--;

29th: -+---++--0-+++++++---++++-+-+++++-+-+++-0+++-+-+-+--0---+-++-+++-0+00++++--0---++-++-+--0-++---+++-+-++--+0-++0+--+0----+0-+++-+-+-;

30th: -+++-0+00-+-++-+-+++-+-+++++-0-+-0----+--++0--+--0++++-0--++-++-+-++++-++++--++++++-+--+--+-+++0-++0-+--+-+++-+-+0++++---0-+;

31 st: ++0+----0-+-+++00++-0-+-++--+-+++++-+-++-0--0++++---+--+++-+++++++++-+++++----+-+-+0+++ ++--0+--+--+-0+0-+--+-+ +-+-0++++-++--++--;

32nd: +-+-+++++-++++0+-++++0-++--0--++0-+++-++-0-+-+++-0+0++-+-+-----+-++-+0-++-+--+--+++++-+---+++++++---+--0++--+++-+-0-+00+---++-+-+;

33rd: ++--0+--+-+++--+--++-+++-0++++--+-+++-++++-+0+++00+-+-+----+-0-0++-+---0+++-++0+-++-++ +++++++--+--0--++-0-+0-+++--++++-+---+-+--;

34th: -+-+++-++++---+-++-+-+++--0++++-++--+++-++-++++0+0-+---+-0++++---+0++-+0+--++0-----+0+--+---+-+-+--+---++--++++00+-0+-++++-++--0--+---;

3 5th: --0--++++++-0----+---0++-0+-++-++-----+-+---++--++0+-++-++++++-+-+ +++-+----+-+0-+-+-+++-+-0+00+++-0+-+++-++--++++-0+++--+-+++0--++;

36th: ----+-+---+-+++++-+++-0+-0-++--0--+--+++++++-----++-++-+0++-+++0---+--++0-0-+--+-+-+00+++0+-++++-+++-+--++++0-+++-++-+--+++-+--+0-++;

3 7th: --++--++-+++++0-+-+---+--+-+-0+0-+--+--+0--++--++0+-+-+-+++++-+++++++++++--+++--+---++++0--0-++-+-++++-+--++-+-0-++00+++-+-0-+0++;

3 8th: +-++-++-----++00+++0+-+-+-0-+0+++++-++++-++--0+0+++-+0-+++---++----+0-++-+---++-+--+++0+--+-++-0++++--+--+-+0--+--+-+-++++-+++-;

39th: +++-++-++---+0-+-0-+-++--0+--+++-+--+-+-+++---++++-++++-+++++-+-+-00+-++++++-++-+-0---+--+-0+--++++--+--+++-+++0+----0+++--0-0+0-+;

40th: +++0 +++-++++++-+++-+------++-0+0-+---+++-+-0+--++-++-++++-+0+--+---++---+----++++-0+-+-++-+-++-+----0+++-0-+-+++-+0++-+-+-0++00++;

41st: ++0-++---0--+---+---0+---++-+-+++--+0-+++00+0-+++++-+--+0++-++++---+-++-+-++--++++---+0-++-++-+++-+-+-+-+-++++-0--+0++-+----0--+++++;

42nd: ++0--+++++++---+--+0+-0+-+--++-+-+--+0+++++-+-+0+----+-++-0++++++++---++0-+-+-+++-+++++-+0++--++-++-++----+---+-++------+-0+0-++-+00-;

43rd: +++++--0----+-++0+--0-++++-+-+-+-+++-++-++-0+---++++--++-+-++-+---+++++--++0+--+-+++++-0+00+++-0+--+++-+-++---+0---+---+--0---++-0++;

44th: +-++--+++-+0+++-+0+-+-++-++-+-++-+0+-+-+-0+-++0+++---+++-++-+++++0-0++--0-+-++++00++0--++-+--++++++--+-+++-0+----+-+-and

45th: --++++++-+-+-+++--+0+-+-++---+-++-++++++-+-+-+0--0--+-+++++-0-0-++0---+++-++--++++-+--+0-+----0----0++--+--++0-++++-+00+--+-++++++--++.

It should be noted that a sequence that is of the 45 preambles included in a sixth preamble set and that is in the sixth preamble set is merely described herein as an example. In actual application, there may be another arrangement sequence. This is not specifically limited in this application.

Optionally, in this embodiment, the target preamble group is one of a first preamble group, a second preamble group, and a third preamble group. The first preamble group includes at least three of first 15 preambles in the sixth preamble set; the second preamble group includes at least three of middle 15 preambles in the sixth preamble set; and the third preamble group includes at least three of last 15 preambles in the sixth preamble set.

It should be noted that the first 15 preambles, the middle 15 preambles, and the last 15 preambles in the sixth preamble set herein are sequence numbers in the arrangement sequence in the foregoing example. For details, refer to related descriptions of the first preamble set. Details are not described herein again.

In an embodiment, a universal set of preambles included in the first preamble group, the second preamble group, and the third preamble group may be shown in Table 6.

**Table 6**

| Preamble group | Preamble index | Preamble |
|---|---|---|
| First preamble group | 1 | -+-+--+----0-+--0+-0-++--+++-+-+--++++-+--++0-0-++++-0---0--+++0--+-+++-++-0++-++++----+-0+-++-+++-+++-+++++++-++--++-+---+-+00+++ |
| | 2 | ++---0+---+-0+++0+0++0-++++++++---+00+-++--+-++-++++---+-+--++0--+-++--++0+++++---+0+++--+-++-+-+-+---+-+0-+-+++-0-+-+---++-+++- |
| | 3 | ++--0+++-+--+++0-++++--++-+++-+0-+++00+0-+-+++-+-+-0+-+----+-+++---+-+-+++++++-++-+0++--++---+-+-----++-++-+0-++0---+----0-++++++--0-- |
| | 4 | -+--+++++----+-++++++-++-++----+-+-++++++-0+0+++0-+-++++-+-+++----0+-0-+-++-+-0-+0-+-+-++-0+++-+++--+-+0++---+00++-+++-+0+-- |
| | 5 | --+--+-0-+-+0---++++++++-+-+-++0--++++--+-+---+0+-++-+-+-++----+00+--+-+--++++--++-++++-++---++-0+-+++-++0+0+++0--0+-+-+++0++-++ |
| | 6 | +-0++00++++-0+-++-++--+-++-+-++-+-----++0-0++-++++-+-0-----+-+--+-+-+0+-++--++-++---+++-++--0+-+++++++++---++---0-+++0+---+-+-0--+++ |
| | 7 | ++-++0+++-+-+0-0+++0+0++-+++-+0-++--++-++++-++-++++--+-+--+00+----++-+-+-++----+0+---+--++++--0++-+-+-++++++++---0+-+-0-+--+-- |
| | 8 | --+0+-+++-++00+---++0+-+--+++-+++0--++-+-+--0+-0-+-++--+-0---+0----+++-+-++++-+-0+++0+0-++-+++--+-+-- |
| | 9 | +++++--+++0+00+-++0+-+-+0-+--++++++++0++---0--+-0++-++----++-+----+---++++0+-+-+++0+-+-+-0++----++---+-+++-+---+++-++-+--++-+0-+-0++- |
| | 10 | +++00+-+---+-++--++-++++++++-+++---++++-++-+0-+-++++-++0-++-+++-+--0+++--0---0-++++-0-0++--+-++++-+-+-+++--++-0-+0--+-0----+--+-+- |
| | 11 | +-0-+0--++--++++-+-++0+0-+++-0----+-++-++--+0+++-+++-+++----++--0+++-+---0-+-----+-++0-+++-+--+-+++++---++++-++-+-+-+++00+-+0++-+ |
| | 12 | ++00++0-+-+-++0+-+++-+-0-+++0----+-++-+--++-+-+0-++++----+---++--+---+0+-++++-++-++--+0-+--+++---+-0+0-++------+-+++-+++++-+++---0+++ |
| | 13 | +--+-++---+00+-0-+-+++---++0--+---+++++++---+-++++-+---+-++-0+-++-+----+----+-++0+0-+++-+-0-++-+++-0++--0--++-0+++++-+0++++-++++-+-+ |
| | 14 | +--0+0--0--+++0----+0+++-+++--+-+++++-+0-+--+-----0-+-++-+++++-+00-+-+-+++++-++++-++++---+++-+-+--+-+++--+0--++-+-0-+-0+---++-++-+++ |
| | 15 | +++-++++--+-+--++0--0+---0---++--+-++---00++-++++++++-+--+--+--+++-++-++++-+-0-++-+-+-+0++++++--+-+0+-+-+0-++0--+--+0+0+++--++ |
| Second preamble group | 1 | +-+-++-+-0++0++++++-+--0----0+-++----++++-++-0+++0+0+--++-+-+-++-+--+++-+-++++++++--++--+-+++-+-++--0+-+++---00--+-+-0--++----+++-0 |
| | 2 | ++++++++++0+--+-+-+---+-++-++--+-++-+++0-+++---+++0+-0--+-+--+---+-++0--+0---+--+---+++-+++-+-0+0++++-+00++--0+-++++++---+0+-+--++---- |
| | 3 | +00+-++------+++++-+-+-+++-0-++++-+---+0----++-+0++-++-+--+++----+-+--+++0--++---0-+-++--+-+-+++++-+-0+++--++0-++0+0++0-++-++--++-- |
| | 4 | +-+-+--+++-+++-+0++-+--0-+-++-+0+0+++-+++++-00-+-0+-++--+-------++0++--++---+-+++-+-+-0-++-+--++-++-++++----+++-0++0--+++0+++----+ |
| | 5 | -++--++-+0--0--++--+++-0+++-++-+++--+-++++----++-++-+0-++++------+-+-+-0-+++-+--+-+0-+++00--++-+0+0--+-+-+++++++-++-+-++0++-0+++--+ |
| | 6 | -+++---++++-++00-++++-+-++-+--+-+--++-+++---+-0-++++++-0+0++-0+-0+--++++0+---+--++---0-+--0+--+-+-+- |

(continued)

| Preamble group | Preamble index | Preamble |
|---|---|---|
| | | +++-++-+-+----++++--+--0-----++-+--0+++++++ |
| | 7 | --++--++-++-0++0+0++-0++-+++0-+-++++++-+-+--++-+-0--++--0+++--+--+----+++--+-++-++0+-++-----0+---+-++++-0-+++-+-+-+++++------++-+00+ |
| | 8 | --++--++-++-0++0+0++-0++-+++0-+-++++++-+-+--+-+-0--++--0+++--+--+----+++--+-++-++0+-++-----0+---+-++++-0-+++-+-+-+++++------++-+00+ |
| | 9 | ----++--+-+0+---+++++-+0--++00+-++++0+0-+--+++-+++--+--+---0+--0++-+---+--+-+--0-+0+++---+++-0+++-++-+-++-++-+---+-+-+--+0+++++++++ |
| | 10 | --+++0+00+-+-++--++-+++---+++---0-+-+0--+++-+-+0-+--0--++-+0-+--+++++--+++-+++----+-+++++--++-+-+++++0+-+0--++++-+-++-+0--+----0--+ |
| | 11 | -0+++++-+--++0+++-+++-0-+-----++-+-+0+-0--+++---+-+++-+0-++00+-+++0+0-+++++-++-+-++-+--+-+--++-+++-++0--+--+-+++---++-0+++---+----- |
| | 12 | ++--+++0+0+--+--0++-0+-+-+0+-+--++++++0+---+-+-+-++-0-+-++++-++-+++--+--+--+--+++++++----++00---++-+-++---0---+0--0++--+-+--++++-+++ |
| | 13 | +-0---++++0+-+-+++-+--+-0++-0-+++-+--+--+-++++++-++++-++++-+-++--++--0-+++++0--+--0++--+---0--+-0-++++-++++--+-++---+-00+0-+++--- |
| | 14 | -+---++--0-+++++++---++++-+-+++++-+-++++-0+++-+-+-0---+--++-+++-0+00++++--0---++-++-+--0-++---+++-+-++--+0-++0+--+0----+0-+++-+-+- |
| | 15 | --+++-0+00-+---++-+--+++-+-+++++-0-+--0----+---++0-+--0++++--0--++--++-+-++++-++++--++++++-+--+-+-+++-0-++0-+--+-+++-+-+0++++---0-+ |
| Third preamble group | 1 | ++0+----0-+-+++00++-0-+-++-+-++++-+-++-0--0++++-+--+++--+++++++++-+++++----+-+-+0++--++--0+--+--+-0+0-+--+-+---+-+-0++++-++--++-- |
| | 2 | +-+-++++-++++0+-++++0-++--0--++0-+++-++-0-+-+++-0+0++-+---+----+-++-+0-++-+---+--++++-+---+++++++---+--0++---+++-+-0-+00+---++-+--+ |
| | 3 | ++--0+--+-+++--+-++-+++-0++++-+-+++-++++-+0+++00+-+-+--+-0-0++-+---0+++-++0+-++-++-----+++++--+--0-++-0-+0-+++-+++++-+---+-+---- |
| | 4 | -+-+++-++++ +-++-+-+++--0++++-++--+++-++-++++0+0-+---+-0++++---+0++-+0+--++0-----+0+--+--+-+-+-+--++-++++00+-0+-++++-++--0--+---- |
| | 5 | --0--++++++-0----+---0++-0+-++-++-----+-+---++--++0+-++-++++++-+-+---+++-+----+-+0-+-+-+++-+-0+00+++-0+-+++-++--++++-0+++--+-+++0--++ |
| | 6 | ----+-+---+-++++-+++-0+-0-++--0--+--+++++++-----++-++-+0++-+++0---+-++0-0-+---+-+-+00+++0+-+++++-+++-+++++0-+++-++-+--+++-+--+0--++ |
| | 7 | --++--++-++++0-+-+---+-+--+-0+0-+--+--+0--++---++0+-+-+----+++++-+++++++++--+++--+---++++0--0-++-+-++++-+--++-+-0-++00+++-+-0----+0++ |
| | 8 | +-++-++------++00+++0+-+-+-0-+0+++++-++++-++-0+0+++-+0---+++---++----+0-++--+---++-+---+++0+--+-++-0++++--+--+-+0---+--+-+-++++-+++- |
| | 9 | +++-++-++---+0-+-0-+-++--0+--+++-+--+-+-+++-+-+++--++++-+++++-+++++-+-+-00+-++++++-++-+-0-----+---0-+--+++++--+--+++-+++0+-----0+++--0--0+0--+ |
| | 10 | +++0---+++-+++++-+++-+------++-0+0-+--+++-+-0+-++-++-++++-+0+--+--++---+----++++-0+-+-++--+-++-+---0+++-0-+-+++-+0++-+-+-0++00++ |
| | 11 | ++0-++---0--+---+---0+---++-+-+++--+0-+++00+0-+++++-+--+0++-+++++---+-++-+-++--++++---+0-++-++-+++-+-+-+-+-++++-0--+0++-+----0--+++++ |
| | 12 | ++0--+++++++---+--+0+-0+-+--++-+-+--+0+++++-+-+0+-+-++--0++++++++---++0-+-+-+++--++++-+0++--++-++-++-- |

(continued)

| Preamble group | Preamble index | Preamble |
|---|---|---|
| | | --+---+-++------+-0+0-++-+00- |
| | 13 | +++++--0----+-++0+--0-++++-+-+-+-+-+++-++-++-0+-++++--++-+-++-+---<br>++++--++0+--+-+++++-0+00+++-0+-+++-+-++--+0---+---+--0---++-0++ |
| | 14 | +-++--+++---+0+++-+0+-+-++--++-+-----++0+-+-+--+-0+------++0+++--+++-<br>++-+++++0-0++--0-+-+++00++0-++-+--+++++--+-+++-0+----+-+-- |
| | 15 | --++++++-+-+--+++--+0+-+-++---+-++-+++++-+-+-+0--0-+-+++++-0-0-<br>++0---+++-++--++++-+--+0-+----0----0++-+--++0-++++-+00+--++++--++ |

It should be noted that the preamble indexes in Table 6 are merely examples. For details, refer to related descriptions of the preamble indexes in Table 1. Details are not described herein again.

Optionally, a differential set mapping method may be used to generate a plurality of ternary sequences whose lengths are 133. A cross-correlation feature is used as a primary constraint, and a sequence ambiguity function feature and an SPAR feature are used as secondary constraints. 45 sequences (as shown in Table 6) with good properties in the sequences are selected as preambles in the preamble group.

Optionally, as shown in Table 6, there is a low periodic cross-correlation between preambles whose indexes are 1, 4, 7, and 12 in the first preamble group, between preambles whose indexes are 1, 2, 7, and 14 in the second preamble group, and between preambles whose indexes are 1, 2, 6, and 11 in the third preamble group. When a quantity of apparatuses that need to perform synchronous ranging is less than or equal to 4, the preambles whose indexes are 1, 4, 7, and 12 in the first preamble group, the preambles whose indexes are 1, 2, 7, and 14 in the second preamble group, or the preambles whose indexes are 1, 2, 6, and 11 in the third preamble group may be preferentially used.

Optionally, as shown in Table 6, there is a low periodic cross-correlation between preambles whose indexes are 2, 3, 4, 6, 7, 9, 10, 11, and 14 in the first preamble group, between preambles whose indexes are 1, 2, 4, 7, 8, 9, 10, 11, and 14 in the second preamble group, and between preambles whose indexes are 1, 4, 6, 8, 10, 12, 13, 14, and 15 in the third preamble group. When a quantity of apparatuses that need to perform synchronous ranging is less than or equal to 9, the preambles whose indexes are 2, 3, 4, 6, 7, 9, 10, 11, and 14 in the first preamble group, the preambles whose indexes are 1, 2, 4, 7, 8, 9, 10, 11, and 14 in the second preamble group, or the preambles whose indexes are 1, 4, 6, 8, 10, 12, 13, 14, and 15 in the third preamble group may be preferentially used. The preambles may be referred to as preferred preambles.

It may be understood that, in the examples shown in Table 1 to Table 6, different preamble groups also have a low periodic cross-correlation level. In other words, in a plurality of preamble groups, preambles in a group and preambles between groups have a low periodic cross-correlation level. Therefore, when the plurality of preamble groups are used for ranging, intra-channel and inter-channel interference may be reduced. In addition, this application provides at least two preamble groups, to support synchronous ranging of a plurality of apparatuses on at least two different channels.

Optionally, the first preamble group, the second preamble group, and the third preamble group may be used for K channels, where K is a positive integer greater than or equal to 2. The K channels may be K channels on an ultra-wideband frequency band. Each of the K channels corresponds to one preamble group, and preambles in the preamble group are used to perform synchronous ranging on the channel. Particularly, adjacent channels correspond to different preambles, and non-adjacent channels may correspond to same preambles or different preambles.

Optionally, when K is equal to 3, the first preamble group may be used for a first channel; the second preamble group may be used for a second channel; and the third preamble group may be used for a third channel.

For example, center frequencies of the first channel, the second channel, and the third channel may be any combination of the following three: 7488.0 MHz, 7987.2 MHz, and 8486.4 MHz. Bandwidths of the first channel, the second channel, and the third channel may be 499.2 MHz.

Optionally, before step S401, the preamble group provided in this application should be preconfigured in the first device and the second device m, for example, Table 1 to Table 6 are prestored. Alternatively, before step S401, the preamble group provided in this application is preconfigured in the first device, and the first device broadcasts the preamble group to M second devices.

Optionally, a correspondence between the preamble group and the channel may be preconfigured in the first device and the second device m. Based on the correspondence, ranging on a specific channel is performed by using a preamble in a preamble group corresponding to the channel.

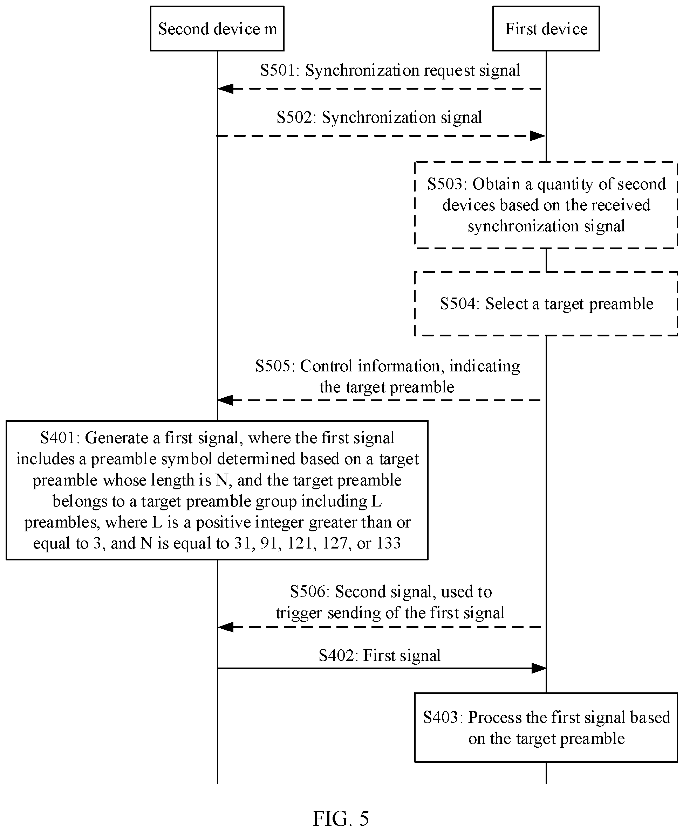

Optionally, in some embodiments, as shown in FIG. 5, before step S401, the signal transmission method provided in this application further includes the following steps.

S501: The first device broadcasts a synchronization request signal. Correspondingly, the second device m receives the synchronization request signal.

S502: The second device m sends a synchronization signal to the first device. Correspondingly, the first device receives the synchronization signal from the second device m.

Optionally, the synchronization signal may include information such as an identifier of the second device m.

S503: The first device obtains a quantity of second devices based on the received synchronization signal.

Optionally, the quantity of second devices is a quantity of synchronization signals received by the first device. The first device may further learn an identifier of the second device and the like through the received synchronization signal. In this application, an example in which the quantity of second devices is equal to M is used for description.

Optionally, the first device may further determine a target channel, where a preamble group corresponding to the target channel is a target preamble group, and a first signal is transmitted on the target channel. To be specific, that the second device m sends the first signal to the first device may include: The second device m sends the first signal to the first device on the target channel. Correspondingly, the first device receives the first signal from the second device m on the target channel. For example, based on the foregoing descriptions, the target channel may be one of a first channel, a second channel, or a third channel.

Optionally, when the second device supports all UWB channels allowed by the regulation, the target channel may be one channel specified by the first device. For example, the first device may specify an idle channel as the target channel. When the second device supports some UWB channels, the target channel may be a channel for transmitting the synchronization signal.

S504: The first device selects a target preamble.

Optionally, the first device may select the target preamble based on a value of M. For example, when M is less than or equal to 6, the first device may randomly select a preamble group that corresponds to the target channel and that is shown in any one of Table 1 to Table 6, and select a preamble in the preamble group as the target preamble. When M is greater than 6 and less than or equal to 9, the first device may randomly select a preamble group that corresponds to the target channel and that is shown in any one of Table 2, Table 4, Table 5, or Table 6, and select a preamble in the preamble group as the target preamble. When M is greater than or equal to 10, the first device may select a preamble group that corresponds to the target channel and that is shown in Table 4 or Table 6, and select a preamble in the preamble group as the target preamble.

Further, when M is small, a preferred preamble in each group may be used as the target preamble. For example, when M is less than or equal to 3, a zero-equalized preferred preamble whose length is 31 or a preferred preamble whose length is 91 may be selected as the target preamble. When M is less than or equal to 4, a zero-fewer preferred preamble whose length is 31, a preferred preamble whose length is 121, or a preferred preamble whose length is 133 may be selected as the target preamble. When M is less than or equal to 6, a preferred preamble whose length is 121 or 127 may be selected as the target preamble. When M is less than or equal to 9, a preferred preamble whose length is 133 may be selected as the target preamble.

Optionally, the target preamble selected by the first device may be an unused preamble in a target preamble group. For example, the first device may perform monitoring on the target channel, determine an unused preamble in the target preamble group, and select the unused preamble as the target preamble. The first device may determine, by performing monitoring on the target channel, whether another ranging group (including a ranging center apparatus and a plurality of to-be-ranged apparatuses) is performing ranging on the target channel. If there is another ranging group performing ranging, a preamble that is in the target preamble group and that is not used by the ranging group is selected as the target preamble. For example, if the target preamble group is the first preamble group shown in Table 2, and the ranging group uses preambles whose indexes are 1 and 2 in the first preamble group, the first device may select a plurality of preambles whose indexes are 3 to 10 in the first preamble group.

Alternatively, optionally, a length of the target preamble selected by the first device is different from a length of a preamble used by another ranging group. For example, a preamble whose length is 127 is used by the ranging group, and the first device may select a preamble whose length is 121 or 133 as the target preamble.

Optionally, the first device may receive a preamble sent by a to-be-ranged apparatus in another ranging group, and perform an autocorrelation operation with a plurality of locally stored preambles, to obtain a plurality of autocorrelation peak values. A local preamble corresponding to a maximum autocorrelation peak value in the plurality of autocorrelation peak values is the preamble used by the ranging group.

S505: The first device sends control information to the second device m. Correspondingly, the second device m receives the control information from the first device.

Optionally, the control information indicates the target preamble. For example, the control information may include at least one of the following: a length of the target preamble, an index of the target preamble, or an index of the target preamble group. Further, the control information may further include the identifier of the second device m.

It may be understood that the first device may send different control information to M second devices, to separately indicate, to the M second devices, different preambles in a same preamble group as target preambles.

Optionally, the control information may be referred to as a ranging control message (ranging control message, RCM), and the control information and the ranging control message may be replaced with each other. This is not limited.

Optionally, after step S505, the second device m may perform step S401.

S401: The second device m generates the first signal.

Optionally, after receiving the control information, the second device m may determine the target preamble based on the control information, to generate the first signal based on the target preamble. To be specific, step S401 may include: generating the first signal based on the control information.

Optionally, after determining the target preamble, the first device may add 0 to an end of each element of the target preamble, to obtain a preamble symbol.

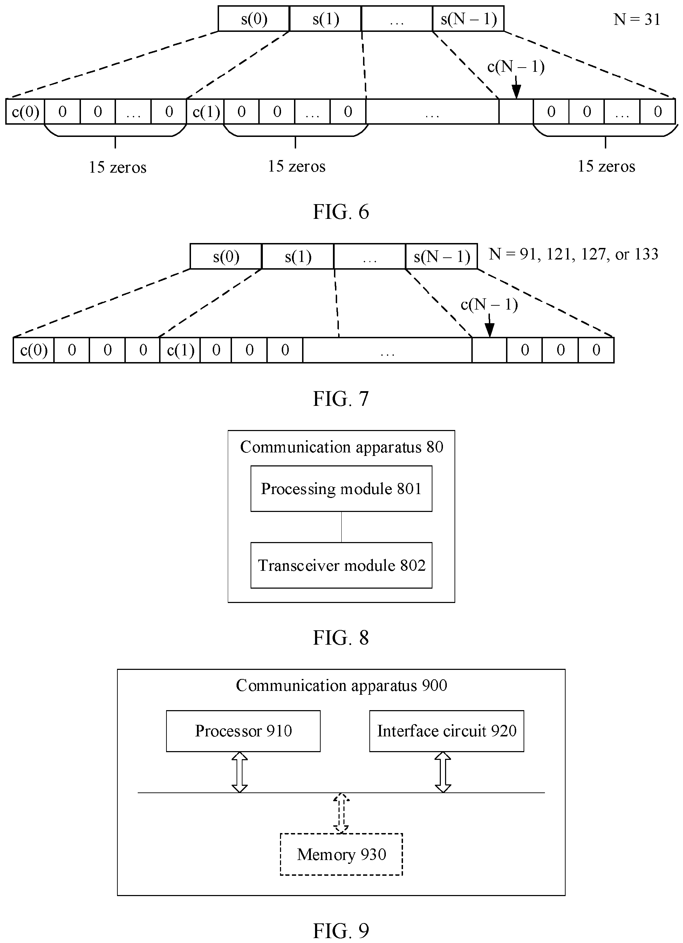

For example, as shown in FIG. 6, when a length of the target preamble is 31, a plurality of (for example, 15) zeros may be added after each element of the target preamble, to obtain the preamble symbol. s(n) represents a preamble symbol, and c(n) represents a preamble. As shown in FIG. 7, when a length of the target preamble is 91, 121, 127, or 133, a plurality of (for example, three) zeros may be added after each element of the target preamble, to obtain a preamble symbol.

Optionally, after step S505, the first device may further perform the following step S506.

S506: The first device sends a second signal. Correspondingly, the second device m receives the second signal from the first device.

Optionally, the second signal is used to trigger sending of the first signal. Optionally, that the first device sends a second signal may be: The first device broadcasts the second signal at a first moment $t_{I,0}$.

Optionally, the second signal may also be referred to as a ranging initiation message (ranging initiation message, RIM), and the second signal and the ranging initiation message may be replaced with each other. This is not specifically limited in this application.

Optionally, after the second signal, the second device m may record a second moment $t_{Rm,0}$, and perform step S402. The second moment is a moment at which the second device m receives the second signal.

Optionally, there is no necessary sequence between step S506 and step S401. Step S506 may be performed first, and then step S401 is performed; step S401 may be performed first, and then step S506 is performed; or step S506 and step S401 may be simultaneously performed. This is not specifically limited in this application.

S402: The second device m sends the first signal to the first device.

Optionally, that the second device m sends the first signal to the first device may include: sending the first signal to the first device based on the second signal. For example, the second device m may send the first signal at a third moment, where a time interval between the third moment and the second moment is $t_{reply}$. In addition, time intervals corresponding to different second devices may be the same or may be different. This is not limited in this embodiment of this application.

Optionally, based on steps S501 to S506, in step S403, a distance between the first device and the second device m may be represented as the following formula (6):

$$ s = \frac{c\left(t_{Rm,1} - t_{I,0} - t_{reply}\right)}{2} \tag{6} $$

$s$ is the distance between the first device and the second device m, $c$ is a speed of light, and $t_{Rm,1}$ is a moment corresponding to the maximum autocorrelation peak value after a cyclic shift autocorrelation operation is performed on a receiving preamble of the second device m and a target preamble corresponding to the receiving preamble.

In this case, the first device may obtain distances between the first device and a plurality of second devices, so that subsequent processing may be performed based on the distances.

It may be understood that, in the foregoing embodiments, the methods and/or steps implemented by the first device may also be implemented by a component (for example, a processor, a chip, a chip system, a circuit, a logic module, or software) of the first device; and the methods and/or steps implemented by the second device may also be implemented by a component (for example, a processor, a chip system, a circuit, a logic module, or software) of the second device.

The foregoing mainly describes the solutions provided in this application from the perspective of interaction between devices. Correspondingly, this application further provides a communication apparatus. The communication apparatus is configured to implement the foregoing methods. The communication apparatus may be the first device in the foregoing method embodiments, an apparatus including the first device, or a component that can be used in the first device. Alternatively, the communication apparatus may be the second device in the foregoing method embodiments, an apparatus including the second device, or a component that can be used in the second device.

It may be understood that, to implement the functions in the foregoing embodiments, the first device and the second device include a corresponding hardware structure and/or software module for performing each function. A person skilled in the art should be easily aware that the units and the steps of the method in the examples described with reference to embodiments disclosed in this application may be implemented in a form of hardware or a combination of hardware and computer software in this application. Whether a function is performed by hardware or hardware driven by computer software depends on a particular application scenario and a design constraint of the technical solutions.

FIG. 8 and FIG. 9 are schematic diagrams of structures of possible communication apparatuses according to embodiments of this application. These communication apparatuses may be configured to implement the functions of the first device or the second device in the foregoing method embodiments, and therefore can also achieve the beneficial effects of the foregoing method embodiments. In embodiments of this application, the communication apparatus may be the second device shown in FIG. 1, may be the first device shown in FIG. 1, or may be a module (for example, a chip) used in the first device or the second device.

As shown in FIG. 8, a communication apparatus 80 includes a processing module 801 and a transceiver module 802. The communication apparatus 80 is configured to implement a function of the first device or the second device m in the method embodiment shown in FIG. 4 or FIG. 5.

When the communication apparatus 80 is configured to implement the function of the second device in the method embodiment shown in FIG. 4 or FIG. 5, the processing module 801 is configured to generate a first signal. The first signal includes a preamble symbol determined based on a target preamble whose length is N, and the target preamble belongs to a target preamble group including L preambles, where L is a positive integer greater than or equal to 3, and N is equal to 31, 91, 121, 127, or 133.

Optionally, the transceiver module 802 is further configured to receive control information from the first device, where the control information indicates the target preamble, and the control information includes at least one of the following: a length of the target preamble, an index of the target preamble, or an index of the target preamble group. That the processing module 801 is configured to generate a first signal includes: The processing module 801 is configured to generate the first signal based on the control information.

Optionally, that the transceiver module 802 is configured to send the first signal to the first device includes: The transceiver module 802 is configured to receive a second signal from the first device, and send the first signal to the first device based on the second signal.

Optionally, that the transceiver module 802 is configured to send the first signal to the first device includes: The transceiver module 802 is configured to send the first signal to the first device on a target channel, where the target preamble group is a preamble group corresponding to the target channel, and the target preamble is an unused preamble in the target preamble group.

When the communication apparatus 80 is configured to implement the function of the first device in the method embodiment shown in FIG. 4 or FIG. 5, the transceiver module 802 is configured to receive a first signal from the second device. The first signal includes a preamble symbol determined based on a target preamble whose length is N, and the target preamble belongs to a target preamble group including L preambles, where L is a positive integer greater than or equal to 3, and N is equal to 31, 91, 121, 127, or 133. The processing module 801 is configured to process the first signal based on the target preamble.

Optionally, the transceiver module 802 is further configured to send control information to the second device, where the control information indicates the target preamble, and the control information includes at least one of the following: the length N of the target preamble, an index of the target preamble, or an index of the target preamble group.

Optionally, the transceiver module 802 is further configured to send a second signal, where the second signal is used to trigger sending of the first signal.

Optionally, that the transceiver module 802 is configured to receive a first signal from the second device includes: The transceiver module 802 is configured to receive the first signal from the second device on a target channel.

Optionally, the processing module 801 is further configured to perform monitoring on the target channel, and determine an unused preamble in the target preamble group, where the target preamble is one preamble in the unused preamble.

For more detailed descriptions of the processing module 801 and the transceiver module 802, directly refer to related descriptions in the method embodiment shown in FIG. 4 or FIG. 5. Details are not described herein again.

As shown in FIG. 9, a communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions to be executed by the processor 910, store input data required by the processor 910 to run instructions, or store data generated after the processor 910 runs instructions.

When the communication apparatus 900 is configured to implement the foregoing method shown in FIG. 4 or FIG. 5, the processor 910 is configured to implement the function of the processing module 801, and the interface circuit 920 is configured to implement the function of the transceiver module 802.

When the communication apparatus is a chip used in a first device, the chip implements the function of the first device in the foregoing method embodiments. The chip receives information from another module (for example, a radio frequency module or an antenna) of the first device, where the information is sent by a second device to the first device. Alternatively, the chip sends information to another module (for example, a radio frequency module or an antenna) of the first device, where the information is sent by the first device to a second device.

When the communication apparatus is a chip used in a second device, the chip implements the function of the second device in the foregoing method embodiments. The chip receives information from another module (for example, a radio frequency module or an antenna) of the second device, where the information is sent by a first device to the second device. Alternatively, the chip sends information to another module (for example, a radio frequency module or an antenna) of the second device, where the information is sent by the second device to a first device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

Optionally, the memory in embodiments of this application may be an apparatus having a storage function. For example, the memory may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a Blu-ray disc, and the like), a magnetic disk storage medium or another magnetic storage device, or any other medium that can be used to carry or store expected program code in a form of an instruction or a data structure and that can be accessed by a computer. However, this is not limited herein.

This application further provides a computer-readable storage medium. The computer-readable storage medium stores computer programs or instructions. When the computer programs or instructions are executed by a computer, functions in any foregoing method embodiment are implemented.

This application further provides a computer program product. When the computer program product is executed by a computer, functions in any one of the foregoing method embodiments are implemented.

All or some of the foregoing embodiments may be implemented through software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium accessible by a computer, or include one or more data storage devices such as a server and a data center that can be integrated with a medium. The available medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the apparatus described above.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, the term "comprising" (comprising) does not exclude another component or another step, and "a" or "one" does not exclude a case of a plurality of objects. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is obvious that various modifications and combinations may be made to them without departing from the spirit and scope of this application. Correspondingly, the specification and accompanying drawings are merely example description of this application defined by the appended claims, and are considered as any of or all modifications, variations, combinations, or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A signal transmission method, wherein the method comprises:

   receiving a first signal from a second device, wherein the first signal comprises a preamble symbol determined based on a target preamble whose length is N, and the target preamble belongs to a target preamble group comprising L preambles, wherein L is a positive integer greater than or equal to 3, and N is equal to 31, 91, 121, 127, or 133; and
   processing the first signal based on the target preamble, wherein
   when N is equal to 31, the target preamble group comprises at least one of four preambles, and the four preambles are as follows:

   +0000-0++0-0+000+-+0++++-00-00-;
   -0-00+000+0++-++0+-00+—0000++0;
   0+0++00++-+-000++0+—0+0-0000-0; and
   0++-00+-0 ++0+000+00+0+0-+000; or

   when N is equal to 31, the target preamble group comprises at least three of 20 preambles, and the 20 preambles are as follows:

   -+0--+-++00+---++-++++-+0+++0-0;
   ++-+++--0+++0+0-+0++-+--00--+-+;
   +-+++--+0+-+----0+++-++0+0-+00+;
   0-++-+++-+0-++++--0-+---+0+0++0;
   00++--0-+++++-+++-0++-0--+-+-0+;
   0+00+-++0+-+-+++++--0--+0--+++-;
   00++0--++-0-0-+-+0-++++++--+-++;
   +++++0+0---+0+--++-+-+--++00+-0;
   +++-0---0+-++-0+-+-+++--+++00+0;
   00+0+-+-0++-0+-+++0-++++-++----;
   00++-+--++++++-0+-+-0-0-++--0++;
   -+00++--+-+-++--+0+---0+0+++++0;
   0+00+++--+++-+-+0-++-+0---0-+++;
   ----++-++++-0+++-+0-++0-+-+0+00;
   -0+++0+-+++++-++---+00++-+--0+-0;
   +-+--00--+-++0+-0+0+++0--+++-++;
   -+++--0+--0--+++++-+-+0++-+00+0;
   00+0-+-+--0-++0-+++-+++++-0--++;
   ++0+0+---+-0--++++-0+-+++-++-00; and
   +00+-0+0++-+++0----+-+0+--+++-+, wherein
   + represents 1, and - represents -1.

2. The method according to claim 1, wherein before the receiving a first signal from a second device, the method further comprises:
   sending control information to the second device, wherein the control information indicates the target preamble, and the control information comprises at least one of the following: the length N of the target preamble, an index of the target preamble, or an index of the target preamble group.

3. The method according to claim 1 or 2, wherein the target preamble group is a preamble corresponding to a target channel; and the method further comprises:
   performing monitoring on the target channel, and determining an unused preamble in the target preamble group, wherein the target preamble is one preamble in the unused preamble.

4. A signal transmission method, wherein the method comprises:

generating a first signal, wherein the first signal comprises a preamble symbol determined based on a target preamble whose length is N, and the target preamble belongs to a target preamble group comprising L preambles, wherein L is a positive integer greater than or equal to 3, and N is equal to 31, 91, 121, 127, or 133; and
sending the first signal, wherein
when N is equal to 31, the target preamble group comprises at least one of four preambles, and the four preambles are as follows:

+0000-0++0-0+000+-+0++++-00-00-;
-0-00+000+0++-++0+-00+—0000++0;
0+0++00++-+-000++0+—0+0-0000-0; and
0++-00+-0 ++0+000+00+0+0-+000; or

when N is equal to 31, the target preamble group comprises at least three of 20 preambles, and the 20 preambles are as follows:

-+0--+-++00+---++-++++-+0+++0-0;
++-+++—0+++0+0-+0++-+—00—+-+;
+-+++--+0+-+-----0+++-++0+0-+00+;
0-++-+++-+0-++++--0-+---+0+0++0;
00++--0-+++++-+++-0++-0--+-+-0+;
0+00+-++0+-+-+++++--0--+0--+++-;
00++0--++-0-0-+-+0-++++++--+-++;
+++++0+0---+0+--++-+-+--++00+-0;
+++-0---0+-++-0+-+-+++--+++00+0;
00+0+-+-0++-0+-+++0-++++-++----;
00++-+--++++++-0+-+-0-0-++--0++;
-+00++--+-+-++--+0+---0+0+++++0;
0+00+++--+++-+-+0-++-+0---0-+++;
----++-++++-0+++-+0-++0-+-+0+00;
-0+++0+-++++-++---+00++-+--0+-0;
+-+--00--+-++0+-0+0+++0--+++-++;
-+++--0+--0--+++++-+-+0++-+00+0;
00+0-+-+--0-++0-+++-+++++-0--++;
++0+0+-+-0--++++-0+-+++-++-00; and
+00+-0+0++-+++0----+-+0+--+++-+, wherein
+ represents 1, and - represents -1.

5. The method according to claim 4, wherein the method further comprises:

receiving control information from a first device, wherein the control information indicates the target preamble, and the control information comprises at least one of the following: a length of the target preamble, an index of the target preamble, or an index of the target preamble group; and
the generating a first signal comprises:
generating the first signal based on the control information.

6. The method according to any one of claims 1 to 5, wherein the target preamble group is one of a first preamble group and a second preamble group, wherein

the first preamble group comprises at least one of first two preambles in the four preambles and at least one of the following preambles:

-0000-0+0--+0++000-+-++00++0+00;
0+0-0+++0+-000+-+++00-+0-00-000;
00+0+-0+0+000-++0-+---00+00++00; and
0000+-0+0+00+000+0++---0-+00-++;

the second preamble group comprises at least one of last two preambles in the four preambles and at least one of the following preambles:

0-00-0+-00+++-+000-+0+++0-0+000;
-00-00-++++0+-+000+0-0++0-0000+;
000++00+00---+-0++-000+0+0-+0+0; and
++0000--+00-+0++-++0+000+00-0-0; or

the first preamble group comprises at least three of first 10 preambles in the 20 preambles, and the second preamble group comprises at least three of last 10 preambles in the 20 preambles.

7. The method according to any one of claims 1 to 5, wherein N is equal to 91, the target preamble group comprises at least one of 10 preambles, and the 10 preambles are as follows:

+0+-+-+-+++++-+++----0+--+-++0++-++++-0-++++-++---+--+--++---0+-+++---0-+0+--+++-++-00-++0;
++-00-++-+++--+0+-0----+++-+0---++--+--+---++-++++-0-++++-++0++-+-+0----+++-+++++-+-+-+0+0;
-+-+0++-++-+0+0--+-0+-+---+-+----++-+-++++++-+++0-------+-+++--++-00++0-++--+++0++-+-+++++0-;
-++0--0+++-+++--++-0-+-0+-+-00++--++-+---+++++++++++--+--++-++-+-0+0-+-++++----0-++---0-+-+;
+-+----0+-++-++ 0+-+++-+++-+++++0+-+-+0-+-+++---+++++--+-++-++-00-++0--0++--+++-+0+0-;
-+--++-+-++++++---+-+0++---+-+-+0-+-----+0--+++00++-+--++++++-++-+0-0+0-+++++-0+++0-+---++-;
+++++++-0+-+-++0--+-0-+-+---+++--+++0++-0--+-++--00+0-+++-0---+++-+--+-+-++0++-++--+--+++;
0--0--+++--+++++0+--0+--+00+-++-++++++--++---+-++++-+---+--++++0-0+++-+-++--+0+-+-+-0----+-+;
+++++--+++-+--++-+--+0-++++++------++-++00++0--++-+--0-+-++-+-+-0++-0+---++-0-0-+-+0+++-++; and
+0+++---+--0+-0+-++-+++-+00++-0-0++++-++-+--+-+--+++0+-----+0+-+-++0--+-+---++-+++--+++++.

8. The method according to claim 7, wherein the target preamble group is one of a first preamble group, a second preamble group, and a third preamble group, wherein

the first preamble group comprises at least one of first four preambles in the 10 preambles and at least one of the following preambles:

-0++++++-+-++0+++--++-0++00--++--+++-+------0+++-+++++--+--++---+-+-+-+0-+--0+0+-++-++0+-+-; and
+-+-0---++-0----++++-+-0+0-+-++-++--+--+++++++++++---+-++--++00-+-+0-+-0-++--+++-+++0--0++-;

the second preamble group comprises at least one of a fifth preamble, a sixth preamble, or a seventh preamble in the 10 preambles, and at least one of the following preambles:

+++--+--++-++0++-+-+--+--+++---0-+++-0+00---++-+--0-++0+++--+++---+-+-0-+--0++-+-+0-+++++++;
-0+0+-+++--++0--0++-00--++-++-+-+++++---+++-+-0+-+-+0+++++-+++-+++-+0------++-++-+0+----+; and
-++---+-0+++0-++++-+0+0--0+-++-++++++--+-++00+++--0+-----+-0+-+-+-++0+-+---+++++-+-++--+-; and

the third preamble group comprises at least one of last three preambles in the 10 preambles and at least one of the following preambles:

+-+----0-+-+-+0+--++-+-+++0-0++++--+--+-+++-+---++--++++++-++-+00+-+0--+0+++++--+++--0--0;
++-+++0+-+-0-0-++----+0---++0-+-+-++-+-0--+-++--0++00++-++-----++++++-0+--+-++--+-+++--+++++; and
+++++--+++-++---+-+--0++---+-+0+-----+0+++--+-+--+-++-++++0-0-++00+-+++-++-+0-+0--+---+++0+.

9. The method according to any one of claims 1 to 5, wherein N is equal to 121, the target preamble group comprises at least three of 42 preambles, and the 42 preambles are as follows:

+0+-000-0+++00++--++-+-+--+0---++0+-0++-0-0+---+-0000-+0-+---+++0+-000-+00-0-0+0++++00-++0++-0+0+++-0-00-0--0++-+-000++0+;
-0+00+0-0++0++00-++--000+0-000++0+0+--+-0-+0+-0+-++-+--00++0+0+0++--+----++0---0---0-++000-+0+-++000+-0-00++-+++-00+++-+-;
0+-+-+0-0+-0-0+0+-+0+00-0-+00+0+-0+0+++-0++++--++--00--++0++++--0-000-+00+-+--0+++0+--0+++00++-+0-+0-----+-00+---0+00000;
-++-00---+0-++--00++0---00--+++++00+-0+0+0+00+0+-++--000+0+0-0+0+-0++00+++--00-000+--0--+-+-+-

EP 4 387 180 A1

+0++---++-+-0-+0-000++0+0+;

-0+0--++-0-00+++++-+0-0-0-+++00-0-+--0++0-+00-+-0-----0+-00-++0++++-+00++0-+-+++0-+-+000+--+0++-0+++-+0-+0+000000-0+00+-;

0+000-++++0+-+++-++00-+-0-0-++0++-+--0++-+0+0-0-0-0-+-+-0-00++-0+00--+0++++00000++-++--0++-0-0+-0+-+--+00++00++0-00-0;

-000++0+00+0-+-0+---++++00-000-0-+00-+---0--+00+0--0+++-0++00+++0-0+00--++-0-0-0++-+-++0+-+-0-++-++--0+-0+0+++++-+0000+-;

+000++00+++00+0+0++-+--++-0--0+++-0000+--0+0+0++0----+00-0+--0+0-+++-+0++-+----0-++00+0++-+-+-0-+00-00-0+-++--00-+-00++0;

++0--+0++-00+0--0-+-+-++000-+++++----0000+-+000-0-+--0-00----+++-+++-++0-0++0-+0++-0-+-++0++-0+0-+00-++-0+-+0-0-00+0+00++00;

-+--0++-000++00+-+0+0+0--0-0+0++-0+0+++--00-++-+++-0000-+0-00-+00++++---+0---0+-0-----+0-+++-+0+---+0++0-+0+0+-0++00000+-+;

----00++-000++0--++--0-+0---0+0000+--+0+-+00-00--00+++++-+0++-+-+++0+++-0+-0-00+-+-+0-0+--0+-++-++000+0+0++00+0--0-0+0+;

000+000+++-0--+0--+-0+00+0+-0+++-++---+-+0-0++-+-+++0+00--0-0+++00+0+-00++----+0++++----+0+0-0+-+0+-000--0--00+ 000++-+0-+;

-00000+++---0-++--0+000+---+0-0-0+00+++00--0+++0+++-+000++0-+-0+-0+00-+0++0-++-0++++-+--+-----+0-0-+0+00+-+-0+--00+-+0+0+;

--0000++0-+++++0+0+0-+0++0+-++--+--+--00++0-0++++000+---+-+0+-+--+0+0-0+0+-00+--+00-0+-+0+++----00++0--+-0-00-00++-0+-000;

--+0--++000+--0--+-++-+++00-0+0000+++-0--0+0+0----+-00+-+-+0+0-+++-++++++0-+--0++00+-0+0+++0+0+00--0-+0+-+0-+00+0+--+000-00;

++++0-0--++00++0+-0++00-+-000+--0--0+++0+0000+0--+00+-00+++++--+0+++-+++-0+-0-+--0+-+-0+00+00-0-++-+-++---000--+-0-0-0+0-;

+--+00-0--+++0000++0-+--+0++++-+-+++--0+0-+++++0--0-0+00-+0-0-0-+0+-++-+0-+00+--00---0--00++-++0+-+0+00+000-0+++-0++-000-;

+00+++0+--++0+0-+++-0--0--+--+00+0+0+++++----0+++-+--000+-00+0-0++--+-0+00-++0-0-+---00++-0+-0-+0--0+-+-+0000+000++00+-+0;

+0+0-0--0+00++0+0+000++-++-+0--+0-0+-+-+00-0-+0-+++0+++---+-++0+-+++++00+-00-00+-+0+---+0000+0---0+-0--++-0++000-++00----;

-0+00++00-00+++++-0-++---0+++000+-0+-++0+-+0-0+----0--0-0++-+--+00+0-+00-++00+-+-+0+++--+---+-000+0+0++-0+0-0-+0+0000++-;

-0+0-0-0-+--000---++-+-++-0-00+00+0-+-+0-+-0-+0-+++-+++0+--+++++00-+00+—0+0000+0+++0—0—+000-+-00++0-+0++00++—0-0++++;

+--0++00+++---+----0-0+++++-00+0+0++-+00+---0+-+0-0-+0--++-0+-0-00++-0-000+0-++-+--++0++0-0+00+00--+000+-++0000++0+-+-+0;

0+-+-+0++0000++-+000+-00+00+0-0++0+--+-++-0+000-0-++00---0-+0-++--0+-0-0+-+0---+00+-++0+0+00--++++++0-0----+---+++00++0--+;

-++0000+0+-0-0+0-++0+0+000-+---+--+++0+-+-+00++-00+-0+00+--+-++0-0--0----+0--0+-+0++-+0-+000+++0---++-0-+++++00-00++00+0-;

++000-0+0+++-0+-+-+0+-++00+00+-+-00--+-++-+0+0-+0-0+-0+000+-+0-0++-+++++0---0--+00--+++--0-+0000++00-+0++0+0+00-0-+;

+-+00++000+0000+-+-+0--0+-0-+0-++00---+-0-0++-00+0-+--++0-0+00-+000--+-+++0----+++++0+0+00+--+-0--0-+++-0+0++--+0+++00+0;

-000-++0-+++0-000+00+0+-+0++-++00--0---00--+00+0-+-++--+0+-0-0-0+-00+0-0--0+++++-0+0--+++-+-++++0+--+-0++0000+++--0-00+-+;

-000+--+0+00+-0+-+0+0--00+0+0+++0+0-+00++0--+-0+++++--+++-0+0+-+-+00-+-----0+0--0-+++0000+0-00+++-++-+--0--+000++--0+--00;

-++0+00+-0+++++0+00-+0+0-0+--+-+-+00++0-0+-+0----000+++-+---++-0-+-0++000-00+0+0-+-00+0-++000+++-00+0-0-++----00-+0;

+-0-00+0+0++0+-00++0000+-0--+++--00+--0---0+++++-++0-0+-+000+0--+0-0+0+0+--++-+----00-+--+00+00++-+0+-+-+0-+++0+0-000++;

0++00-+-00--++-+0-00-00+-0-+-+-++0+00++-0----+-++0+--+++-0+0--+0-00+—-0++0+0+0—+0000-+++0—0-++—+-++0+0+00+++00++000+;

-0-00+00-+00-0--+0--00-+0-0+00+--+++0-00000+---0-+-0+-+++++0++-+-0-0+0-+0+--+++-00+---00+++000--0++++0-++-+-+0-++++0+0-+-+;

-0-0-0-000-++0-+0-00++--0+++++00---+++-00+--0-0++0+0+0-+0--+0--00+++-++-+++-+0++0+00-00+--+-++-

+-+0++00+-+--+0000-++00--0;

+0---00+-+00-00+-++000++0-+--+-0+-++00---0--++-++0+-0-++++--0+-+00-0+0-0-00+0+++++-0+++-+--0+00++0+-++++-0000-0-+00-0+--0;

+-00--+00+0+0++0000+00+++-+0-00+-+--+-0+-0-+++-+0++-0-0++00++0--00+++-++-0+++--0-0-0+---+00---00+0++--+---+-+0+000++0+0--;

+0+0+-+00--+0-+-+00+0+-0-0+-----+--+-++++0-++-0++0-00+0-+0-+-0++000+-+++0+++0--00+++00+0-0-0+---+000+0--++-0---+++00000-;

+0++000-+-++0--0-00-0-+++0+0-++0++-00++++0+0-0-00+-000-0+++---+-0+-0000-+---+0-0-++0-+0++---0+---+-+-++--++00+++0-000-+0+;

-+-+++00-+++-++00-0-+000++-+0+-000++-0---0--0++----+--++0+0+0++00--+-++-+0-+0+-0-+-- +0+0++000-0+000--++-00++0++0-0+00+0-;

00-00-0++00++00+--+0-+0-0-++0-++-++00000++++0+--00+0-++00--0-+-+--0-0-0-+0+0+--++0---+-++0++- 0-0-+--00++-+++-+0++++-000+;

+000--00--+++0+-0+00+-++-+-0-+0++--0-0++-+++-++0++-0--+0+-0000+++-+000-00-0+00-+++0++-+-0-+++-000+0--0+0-0+0+-0+----0--;

+000+0+0-+-00-0----++0+0---++-+-+-+-0--0+++-+00++-0+-++000++0+0++0--0-++-00+0+++00+---++0-++00-00+--+000-00-+0--+--+++0+0; and

00++00+0+00-0-0+-+0-++-00+-0+0-++0++-+-0-++0+-0++0-0++-+++-+++-----00-0--+-0-000+-+0000----+++++-000++-+-0--0+00-++0+--0++.

10. The method according to claim 9, wherein the target preamble group is one of a first preamble group, a second preamble group, and a third preamble group, wherein
the first preamble group comprises at least three of first 14 preambles in the 42 preambles; the second preamble group comprises at least three of middle 14 preambles in the 42 preambles; and the third preamble group comprises at least three of last 14 preambles in the 42 preambles.

11. The method according to any one of claims 1 to 5, wherein N is equal to 127, the target preamble group comprises at least one of 14 preambles, and the 14 preambles are as follows:

-00000-++0-0000-00-+-000--0-00+00+0++-0-+0++-00--0++00+0+0-+0-0+-+-+0++++0000-+000+000-0+00--00++--0+0-0+000+-+++++00-000000-0+;

++0+0000-00+++000++0+00+00-0+—0-+0-+-00—0+-00-0+0-+0+0+-+—0++—    0000+-000+000-0+00++00-+--0+0-0-0000++++-+-00+000000+0--00000+;

-+00000+0-000-+0++0-000000++0000+00+00+++++-+0+---+000+--0-0-0+00-0+0++--0-00+-00+-+00+-0-0+- 000+000+0++-0--00-0000-++-00+0++0-;

+00-00+-++0-0+00000-0-+-+00---0----+++0+-00+0-+000-+00+-0++0+000+--+-0000++- 000+0+00++000000++0-0--+0-00+0-0+0++0+--00+0000+000;

0-+0+00000+--+-0++000000-0+0-+0----+--00++0+-0+0-0+000+00-00++00+-+000-+-0---0+0-+-+0+00+0+- 00+0-00+++00-000++000+0+++0000-000;

0000++0000-0-000-+-+00-000+0--00--+0+0+00--++-0+0000+-+000+00+00--0--0-0+-0-+++0-+000++0+00-0-- +0++-00++00-0+0+0-++-+++000000+0;

+0000+00--+0++0+0-0+00-0+--0-0++000000++00+0+000-++0000-+--+000+0++0-+00+-000+-0+00- +0+++----0---00+-+-0-00000+0-0++-+00-00+000;

0-000+-000-0--+0000+0000+-0+00000+++--0++000000+0+0++0+++----00-+0+-0+0-0+000-00+00-+00++- +000+++0+--0-0-+-+0-00-0+-00+0-00++-0;

----+-0-0+0-00+-00-++0---0+00+0-+000+-0++++0+-0-0-+0++00-00+000-+0000+0-+-- +00+0+0+++00++0-000-00+--+000+0+0000+-00000+000000+;

+00+-000-0-+-0-0++0-+00000--00--0+0-00+--+00+++-0+-0+0000+0+0-0-+0+00-0-000++0+-+000++---- ++0000+++0+--+00+0-+00+00+000000+000;

+000+0---0+0+-0++00000-+00--0-0-00-++00++--0++0+0000-0-0+--++0+00-0-000-+0+-+000--++- ++0000+++0-+-+00+0++00+00+000000-000-00-;

00-++00-0+00-+0-00-0+-+-0-0--+0+++000+-++00+-00+00-000+0-0+0-+0+-00-+++0++0+0+000000++0-- +++00000+0-+0000+0000+--0-000-+000-;

-+0+-00+0000--++00-0+0--+00000-0-000-+0-+0-000000+-0000+00+00+++-++-0+++-- 000+++0+0-0-00-0-0++++0+00-+00+-+00--0-+-000-000+0+; and

-0+0++0+++00+0000-000+00-00--++0+0+00000-0-+++00--+0-+--+--0-+00-0+-000--00++0-+0+000+-+- +0000+++000-0+00-+000000++0-0+--0+00-0.

**12.** The method according to claim 11, wherein the target preamble group is one of a first preamble group, a second preamble group, and a third preamble group, wherein

the first preamble group comprises at least one of first six preambles in the 14 preambles and at least one of the following preambles:

+00+00+-0+00++--0+++0000+++----000+++0+-000+0+00+0+-++-0-0-0-0000+0-+0+-++00+--
00+0-0+++00-+00000+-0-+0-0+-+0-000--00-000-000000;
+0+0+-0-000++-+00000+00--0+-0000-0-000000+--0-+0+--++00+-++0+00+00+0-0-+-
0-0+0+00+++000++00+0-+00—000-0++-+0—+00+000+0000+; and
+000000++0+0-+-0-00-0+0+0++0+--00+0000-000+00+00-+++0-0+00000+0++-+00++-0+-+++--0--00-0--
000+-00+-0-+0+000++---0000++-000-0+00-;

the second preamble group comprises at least one of a seventh preamble and an eighth preamble in the 14 preambles and at least one of the following preambles:

+-0+00+00+0-00-+++00+000-+0+0-0000+++++-+0+--0+-0+++--0-000+0-+00+0+        -000-000000-+00+-
0++000++-00++-0-0-+-0000+00--00000-0+0+0;
000-000-00--000-0+-+0-0+-0-+00000+-00++0-0+00--+00++-+0+-0+0000-0-0-0-++-+0+00+0+000-
+0+++000----+++0000+++0--++00+0-+00+00+000;
++-00000+-0-000000-00-+-++-+000-0+0+0+++-00--00+0+000+000--0000--++0-++++0-0++0+0-00-
+0++00++-0++0+-+0-00+00-0—000-+-00+0000-0;
-00+0-000-++0000---++000+0+-0-+00-+000--0-00--0--+++-+0-++00+-++0+00000+0-0+++-
00+00+000-0000+00--+0++0+0+0-00-0-+-0+0++000000+;
0-0000--0+00000+---+0++000000-0+0-+0---+-++00-+0++0+0+0+000-00-00-+00+-++000-+-0-
++0-0++++0-00-0+00+0+00++-00+000+-000-0--+000;
-00+-0-+0-00+0+0000+0+-0000++00+0+++++-+0-0+-0--+0++--000---0+000+0+0-+-000000+-+-0--
00++000-00+00++-00--++-00-00000+000++0-0+0; and
+0000+000+00+--0+-++0-000--00+-0+00++000+++00+0+0-0-+-0-0+00+00+0++-+00++--+0+-0--
+000000-0-0000-+0--00+00000+-++000-0-+0+0+; and

the third preamble group comprises at least one of last six preambles in the 14 preambles and at least one of the following preambles:

0-0000+00-+-000--0-00+00-0+-+0++0-++00++0+-00-0+0++0-0++++-0++--0000-000+000+0+00--00-
+++0+0+0-000+-++-+-00-000000-0-+00000-++;
+--0-000-+000+00-++00+0+00++0-00-0++++0-0++-0-+-000++-+00+-00-00-000+0+0+0++0+-00++-+-0+-
0+0-000000++0+-+00000+0-0000-0000; and
+0+0-00000--00+0000-+-0-0-++00-++000++0-+00+-000000-000----+0+00+-0+000-0—++0-+0—+0+-
+++++0000-0+0+-000+00+++-00-0+00+00+0-+0.

**13.** The method according to any one of claims 1 to 5, wherein N is equal to 133, the target preamble group comprises at least three of 45 preambles, and the 45 preambles are as follows:

-+-+--+----0-+--0+-0-+--+++-+-+--++++-+--++0-0-++++-0---0--+++0--+-+++-++-0++-++++----+-0+-++-+++++---
+++-+++++++-++--++-+---+-+00+++;
++---0+---+-0+++0+0++0-+++++++++---+00+-++--+-++-++++---+-+-++0--+-++--++0+++++---+0+++--+-++-+----
+-+---+-+0-+-+++-0-+-+----++-+++-;
++--0+++-+--+++0-++++--++-+++-+0-+++00+0-+-+++-+-+-0+-+----+-+++---+-+-+++++++-++-+0++--++---+-+-----
++-++-+0-++0---+----0-++++++--0--;
-+--+++++----+-+++++++-++-++---+-+--+++-++-0+0+++0-+-++++-+-+++  0+---0-+--++-+--0-+0--+-+--++--0+++-
+++--+-+0++---+00++-+++-+0+--;
--+--+-0-+-+0----++++++++-+-+-++0--++++-+----+0+----++-+-+-++-+00+---+-+--++++-++-+++++-++----++-0+--
+++-++0+0+++0--0+-+-+++0++-++;
+-0++00++++-0+-++-++--+-++-+-++-+-----++0-0++---++++-+-0-----+-+--+-+-+0+-++-++-++--+++-++--0+-
++++++++++--++---0-+++0+---+-+-0--+++;
++-++0+++-+-+0--0+++0+0++-+++--+0-++---++-++++-++--++++--+-+--+00+----++-+-+-++----+0+---+--++++--
0++-+-+-++++++++----0+-+-0-+--+--;

--+0+-+++-++00+---++0+-+--+++-+++0--++--+-+--0+-0--+-++--+-0---+0-+++-+-++++-+-0+++0+0-++-+++--+-+---++-++-+++++-+----+++++--+-;

+++++--+++0+00+-++-+-+0-+---+++++++0++---0--+-0++--++----++-+----+-++++0+-+-+++0+-+-+-0++----++----+--+++-+---+++-++-+--++-+0-+-0++;

+++00+-+---+-++--++-+++++++-+++---++++-++-+0-+----++++-++0-++-+++-+--0+++-0---0-++++-0-0++--+-++++--+-+-+++--++-0-+0--+-0----+--+-+-;

+-0-+0--++--++++-+--++0+0-+++-0-----+-++--++--+-0+++-+++-+++----++-0+++-+---0-+          +-++0-+++-+--+--++++++---++++-++-+-+-+++00+-+0++-+;

++00++0-+-+-++0+-+++-+-0-+++0----+-++--+-++--+-+0-++++----+--++----+-+0+-+++++-++-++--+0-+--+++---+-0+0-++------+-+++-+++++-+++---0+++;

+--+-++---+00+-0-+-+++---++0--+---++++++++--+-++++--+----+-++-0+-++-+------+----+-++0+0-+++-+-0-++-+++-0++--0--++-0++++-+0+++-+++-+-+;

+--0+0-0--+++0-----+0+++-+++-+--+-++++--+0-+--+----0-+-++-+++++-+00-+-+-++++++-+++++-++++----+++-+-+--+-+++--+0--++-+-0-+-0+---++-++-+++;

+++-++++—-+-+—++0—0+ 0 ++—-+-++ 00++ +++++++—+—+—+— +++-++-++++-+-0-++-+-+-+---+0+++++++--+-+0+-+-+0-++0--+--+0+0+++--++;

+-+-++--+--0++0+++++++-+--0----0+-++----++++-++--0+++0+0+--++-+-+--++-+--+++-+-++++++--++-+-+++-+-++--0+-+++---00--+-+-0--++----+++-0;

++++++++++0+--+-+-+---+-++-++-+-++-+++0-+++---+++0+-0--+-+--+---+-++0--+0---+--+---+++-+++--+-0+0++++-+00++--0+-++++++---+0+-+-++----;

+00+-++------++++-+-+-+++-0-++++-+--+0-----++-+0++-++-+-+++----+-+--+++0--++--0-+-++-+-+-++++++-+-0+++-++0-++0+0++0-++-++--++--;

+-+-+-+++-+++-+0++-+--0-+-++-+0+0+++-+++++-00-+-0+-++--+      ++0++--++---+-+++-+-0-++-+--++-++--++++----+++-0++0--+++0+++----+;

-+++--++-+0--0--++--+++-0+++-++-+++---+-++++----++-++0-++++  +-+-+-0-+++-+--+-+0-+++00--++-+0+0---+-+-+++++++-++-+-++0++-0+++--+;

-+++---++++-++00-++++-+-++-+--+-+--++-+++---+-0---+++++-0+0++-0+-0+-+++++0+---+--++---0-+--0+-+-+-+-+++-++-+-+0----+++-+--0++++++++;

--++-++-++-0++0+0++-0++-+++0-+-+++++++-+-+--++-+-0---++--0+++--+-+--+++-+-++-++0+-++-----0+---+-++++-0-+++-+-+-+++++-------++-+00+;

--++-++-++-0++0+0++-0++-+++0-+-+++++++-+-+--++-+-0---++--0+++--+-+--+++-+-++-++0+-++-----0+---+-++++-0-+++-+-+-+++++-------++-+00+;

----++--+-+0+---+++++-+0--++00+-++++0+0-+--+++-+++----+--+---0+--0++-+---+--+-+--0-+0+++---+++-0+++-++-+--++-++-+---+-+-+--+0+++++++++;

--+++0+00+-+-++--++-+++---+++---0-+-+0--+++-+-+0-+---0--++-+0-+-+++++--+++-+++----+-+++++++--++-+-+++++0+-+0--++++-+-++-+0--+----0--+;

-0+++++-+--++0+++-+++-0-+-----++-+-+0+-0--+++---+-+++-+0-++00+-+++0+0-+++++-++-+-++-+--+-+--++-+++-++0--+-+-+++---++-0+++---+-----;

++--+++0+0+--+--0++-0+-+-+0+-+--++++++0+---+-+-+-++-0-+-++++-++-+++-+--+--+-++++++++----++00---++-+--++---0---+0--0++--+-+-++++-+++;

+-0---++++0+-+-+++-+--0++-0-+++-+--+--+-+++++++-++++-++++-+-++-++--0--++++0--+--0++--+----0--+-0-+++++-+-+++--+-++---+-00+0-+++--;

-+---++--0-+++++++---++++-+-+++++-+++++-0+++-+-+--0---+--++-+++-0+00++++--0---++-++-+--0-++---+++-+-+++--+0-++0+--+0----+0-+++-+-+-;

--+++-0+00-+---++-+-+++-+-+++++-0-+--0----+--++0--+--0+++++-0--++-++-+-++++-++++-+++++++++-+-+-+-+++-0-++0-+--+-+++-+-+0++++---0-+;

++0+----0-+-+++00++-0-+-++-+-+++-+-++-0--0+++++---+--+++-++++++++++-+++++----+-+-+0++      ++—0+—+—+-0+0-+—+-+ +-+-0++++-++—++—;

+-+-++++-++++0+-++++0-++--0-++0-+++-++-0-+-+++-0+0++-+-----+-----+-++-+0-++-+---+--++++-+---++++++++---+--0++---+++-+-0-+00+---++-+--+;

++--0+--+-+++--+-++-+++-0++++--+-+++-++++-+0+++00+-+-+---+-0-0++-+-0+++-++0+-++-++  ++++++--+--0--++-0-+0-+++--+++++-+---+-+----;

-+-++++-++++---+-++-+-+++--0++++-++--+++-++-++++0+0-+--+-0++++-+0++-+0+--++0-----+0+--+--+-+-+-+---++--++++00+-0+-++++-++--0--+----;

--0--++++++-0----+---0++-0+-++-++-----+-+---++--++0+-++-++++++++-+-+-+++-+----+-+0-+-+-+++-+-0+00+++-0+-+++-++--++++-0+++-+-+++0--++;

----+-+---+-++++--+++-0+-0-++--0-+--++++++   ++-++-+0++-+++0---+-++0-0-+---+-+-+00+++0+-++++-+++-+--++++0-+++-++-+--+++-+--+0--++;

--++--++-++++0-+-+---+-+--+-0+0-+--+--+0--++---++0+-+-+----+++++-+++++++++--+++--+---++++0--0-++-+-
++++-+--++-+-0-++00+++-+-0----+0++;

+-++-++-----++00+++0+-+-+-0-+0+++++-+++++-++--0+0+++-+0---+++---++--+0-++--+---++-+---+++0+--+-++-
0++++--+--+-+0---+--+-+-++++-+++-;

+++-++-++---+0-+-0-+-++--0+--+++-+--+-+-+++---++++-++++-+++++-+-+-00+-+++++-++-+-0----+--+-0+--
++++-+--++-+++0+-----0+++--0--0+0--+;

+++0---+++-+++++-+++-+------++-+0+0-+--+++-+-0+-++-++-++++-+0+-+--++---+----++++-0+-+-++-+-++-+----
0+++-0-+-+++-+0++-+-+-0++00++;

++0-++---0--+---+---0+---++-+-+++--+0-+++00+0-++++++-+--+0++--++++-+-++-+-++--++++---+0-++-++-+++-+-
+-+-+-++++-0--+0++-+----0--+++++;

++0--+++++++---+--+0+-0+-+--++-+-+--+0+++++-+-+0+----+-++--0+++++++++--++0-+-+-+++--++++-+0++--++-
++-++----+---+-++------+-0+0-++-+00-;

++++++--0----+-++0+--0-++++-+-+-+-+++-++-++-0+---++++--++-+-++-+-++++--++0+--+-+++++-0+00+++-0+--
+++-+-++---+0---+--+--0---++-0++;

+-++--+++---+0+++-+0+-+-++--++-+----++-+0+-+-+-0+-------++0+++-+++-++-+++++0-0++—0-+-
++++00++0—++-+--+++++++—+-+++-0+---+-+--; and

--+++++++-+-+--+++--+0+-+-+-++--+-++-+++++-+-+-+0--0--+-+++++-0-0-++0--+++-++--++++-+--+0-+----0----
0++--+--++0-++++-+00+--+-+++++--++.

14. The method according to claim 13, wherein the target preamble group is one of a first preamble group, a second preamble group, and a third preamble group, wherein
the first preamble group comprises at least three of first 15 preambles in the 45 preambles; the second preamble group comprises at least three of middle 15 preambles in the 45 preambles; and the third preamble group comprises at least three of last 15 preambles in the 45 preambles.

15. The method according to claim 6, wherein the first preamble group and the second preamble group are used for K channels, wherein K is a positive integer greater than or equal to 2.

16. The method according to claim 15, wherein K is equal to 3, the first preamble group is used for a first channel and a third channel, the second preamble group is used for a second channel, and the first channel and the third channel are not adjacent.

17. The method according to any one of claims 8, 10, 12, and 14, wherein the first preamble group, the second preamble group, and the third preamble group are used for K channels, wherein K is a positive integer greater than or equal to 2.

18. A communication apparatus, comprising a processing module and a transceiver module, wherein

the processing module is configured to generate a first signal, wherein the first signal comprises a preamble symbol determined based on a target preamble whose length is N, and the target preamble belongs to a target preamble group comprising L preambles, wherein L is a positive integer greater than or equal to 3, and N is equal to 31, 91, 121, 127, or 133; and
the transceiver module is configured to send the first signal to a first device, wherein
when N is equal to 31, the target preamble group comprises at least one of four preambles, and the four preambles are as follows:

+0000-0++0-0+000+-+0++++-00-00-;
-0-00+000+0++-++0+-00+—0000++0;
0+0++00++-+-000++0+—0+0-0000-0; and
0++-00+-0 ++0+000+00+0+0-+000; or

when N is equal to 31, the target preamble group comprises at least three of 20 preambles, and the 20 preambles are as follows:

-+0--+-++00+---++-++++-+0+++0-0;
++-+++—0+++0+0-+0++-+—00—+-+;
+-+++--+0+-+----0+++-++0+0-+00+;
0-++-+++-+0-+++++--0-+---+0+0++0;
00++--0-++++++-+++-0++-0--+-+-0+;

0+00-++0+-+-+++++--0--+0--+++-;
00++0--++-0-0-+-+0-++++++--+-++;
+++++0+0---+0+--++-+-+--++00+-0;
+++-0---0+-++-0+-+-+++--+++00+0;
00+0+-+-0++-0+-+++0-++++-++----;
00++-+--++++++-0+-+-0-0-++--0++;
-+00++--+-+-++--+0+---0+0+++++0;
0+00+++--+++-+-+0-++-+0---0-+++;
----++-++++-0+++-+0-++0-+-+0+00;
-0+++0+-++++-++---+00++-+--0+-0;
+-+--00-+-++0+-0+0+++0--+++-++;
-+++--0+--0--++++++-+-+0++-+00+0;
0+00-+-+--0-++0-+++-+++++-0--++;
++0+0+-+-0--++++-0+-+++-++-00; and
+00+-0+0++-+++0----+-+0+--+++-+, wherein

+ represents 1, and - represents -1.

19. The communication apparatus according to claim 18, wherein the transceiver module is further configured to send control information to the second device, wherein the control information indicates the target preamble, and the control information comprises at least one of the following: the length N of the target preamble, an index of the target preamble, or an index of the target preamble group.

20. The communication apparatus according to claim 18 or 19, wherein the target preamble group is a preamble corresponding to a target channel; and
the processing module is further configured to perform monitoring on the target channel, and determine an unused preamble in the target preamble group, wherein the target preamble is one preamble in the unused preamble.

21. A communication apparatus, comprising a processing module and a transceiver module, wherein

the transceiver module is configured to receive a first signal from a second device, wherein the first signal comprises a preamble symbol determined based on a target preamble whose length is N, and the target preamble belongs to a target preamble group comprising L preambles, wherein L is a positive integer greater than or equal to 3, and N is equal to 31, 91, 121, 127, or 133; and
the processing module is configured to process the first signal based on the target preamble, wherein
when N is equal to 31, the target preamble group comprises at least one of four preambles, and the four preambles are as follows:

+0000-0++0-0+000+-+0++++-00-00-;
-0-00+000+0++-++0+-00+—0000++0;
0+0++00++-+-000++0+—0+0-0000-0; and
0++-00+-0 ++0+000+00+0+0-+000; or

when N is equal to 31, the target preamble group comprises at least three of 20 preambles, and the 20 preambles are as follows:

-+0--+-++00+---++-++++-+0+++0-0;
++-+++—0+++0+0-+0++-+—00—+-+;
+-+++--+0+-+----0+++-++0+0-+00+;
0-++-+++-+0-++++--0-+---+0+0++0;
00++--0-++++++-+++-0++-0--+-+-0+;
0+00-++0+-+-+++++--0--+0--+++-;
00++0--++-0-0-+-+0-++++++--+-++;
+++++0+0---+0+--++-+-+--++00+-0;
+++-0---0+-++-0+-+-+++--+++00+0;
00+0+-+-0++-0+-+++0-++++-++----;
00++-+--++++++-0+-+-0-0-++--0++;
-+00++--+-+-++--+0+---0+0+++++0;
0+00+++--+++-+-+0-++-+0---0-+++;

----++-++++-0+++-+0-++0-+-+0+00;
-0+++0+-++++-++---+00++-+--0+-0;
+-+--00--+-++0+-0+0+++0--+++-++;
-+++--0+--0--+++++-+-+0++-+00+0;
00+0-+-+--0-++0-+++-+++++-0--++;
++0+0+-+-0--++++-0+-+++-++-00; and
+00+-0+0++-+++0----+-+0+--+++-+, wherein
+ represents 1, and - represents -1.

**22.** The communication apparatus according to claim 21, wherein the transceiver module is further configured to receive control information from the first device, wherein the control information indicates the target preamble, and the control information comprises at least one of the following: the length of the target preamble, an index of the target preamble, or an index of the target preamble group; and
that the processing module is configured to generate the first signal comprises:
the processing module is configured to generate the first signal based on the control information.

**23.** A communication apparatus, comprising at least one processor, wherein
the processor is configured to execute a computer program or instructions, so that the method according to any one of claims 1 to 17 is performed.

**24.** A computer-readable storage medium, wherein the computer-readable storage medium stores a computer program or instructions, and when the computer program or instructions are run on a communication apparatus, the method according to any one of claims 1 to 17 is performed.

**25.** A computer program product, wherein when the computer program product is run on a communication apparatus, the method according to any one of claims 1 to 17 is performed.

FIG. 1

FIG. 2

FIG. 3

Second device m

S401: Generate a first signal, where the first signal includes a preamble symbol determined based on a target preamble whose length is N, and the target preamble belongs to a target preamble group including L preambles, where L is a positive integer greater than or equal to 3, and N is equal to 31, 91, 121, 127, or 133

S402: First signal

First device

S403: Process the first signal based on the target preamble

FIG. 4

| Second device m | | First device |
| --- | --- | --- |

S501: Synchronization request signal

S502: Synchronization signal

S503: Obtain a quantity of second devices based on the received synchronization signal

S504: Select a target preamble

S505: Control information, indicating the target preamble

S401: Generate a first signal, where the first signal includes a preamble symbol determined based on a target preamble whose length is N, and the target preamble belongs to a target preamble group including L preambles, where L is a positive integer greater than or equal to 3, and N is equal to 31, 91, 121, 127, or 133

S506: Second signal, used to trigger sending of the first signal

S402: First signal

S403: Process the first signal based on the target preamble

FIG. 5

s(0) | s(1) | ... | s(N − 1)

N = 31

c(0) | 0 | 0 | ... | 0 | c(1) | 0 | 0 | ... | 0 | ... | 0 | 0 | ... | 0

c(N − 1)

15 zeros

15 zeros

15 zeros

FIG. 6

s(0) | s(1) | ... | s(N − 1)

N = 91, 121, 127, or 133

c(0) | 0 | 0 | 0 | c(1) | 0 | 0 | 0 | ... | 0 | 0 | 0

c(N − 1)

FIG. 7

Communication apparatus 80

Processing module 801

Transceiver module 802

FIG. 8

Communication apparatus 900

Processor 910

Interface circuit 920

Memory 930

FIG. 9

## INTERNATIONAL SEARCH REPORT

| International application No. |
|---|
| **PCT/CN2022/118178** |

**A. CLASSIFICATION OF SUBJECT MATTER**

H04L 27/26(2006.01)i

According to International Patent Classification (IPC) or to both national classification and IPC

**B. FIELDS SEARCHED**

Minimum documentation searched (classification system followed by classification symbols)

H04L; H04B

Documentation searched other than minimum documentation to the extent that such documents are included in the fields searched

Electronic data base consulted during the international search (name of data base and, where practicable, search terms used)

CNPAT, CNKI, WPI, EPODOC, 3GPP, IEEE: 同时, 同步, 前导, 前导码, 测量, 长度, 距离, 测距, 同步测距, uwb, simultaneous, synchroniz+, preamble, measur+, length, distance, 805.15.4

**C. DOCUMENTS CONSIDERED TO BE RELEVANT**

| Category* | Citation of document, with indication, where appropriate, of the relevant passages | Relevant to claim No. |
|---|---|---|
| A | LAN/MAN STANDARDS COMMITTEE OF THE IEEE COMPUTER SOCIETY. "IEEE Standard for Low-Rate Wireless Networks" *IEEE Std 802.15.4™-2020,* 06 May 2020 (2020-05-06), section 15.2.6 | 1-25 |
| A | CN 111684732 A (DECAWAVE LTD.) 18 September 2020 (2020-09-18) entire document | 1-25 |
| A | US 2020363524 A1 (SAMSUNG ELECTRONICS CO., LTD.) 19 November 2020 (2020-11-19) entire document | 1-25 |
| A | US 2021076163 A1 (APPLE INC.) 11 March 2021 (2021-03-11) entire document | 1-25 |
| A | US 2008259896 A1 (SAHINOGLU, Zafer et al.) 23 October 2008 (2008-10-23) entire document | 1-25 |

☐ Further documents are listed in the continuation of Box C.    ☑ See patent family annex.

| * Special categories of cited documents: |
|---|
| "A" document defining the general state of the art which is not considered to be of particular relevance |
| "E" earlier application or patent but published on or after the international filing date |
| "L" document which may throw doubts on priority claim(s) or which is cited to establish the publication date of another citation or other special reason (as specified) |
| "O" document referring to an oral disclosure, use, exhibition or other means |
| "P" document published prior to the international filing date but later than the priority date claimed |

| "T" later document published after the international filing date or priority date and not in conflict with the application but cited to understand the principle or theory underlying the invention |
|---|
| "X" document of particular relevance; the claimed invention cannot be considered novel or cannot be considered to involve an inventive step when the document is taken alone |
| "Y" document of particular relevance; the claimed invention cannot be considered to involve an inventive step when the document is combined with one or more other such documents, such combination being obvious to a person skilled in the art |
| "&" document member of the same patent family |

| Date of the actual completion of the international search | Date of mailing of the international search report |
|---|---|
| **09 November 2022** | **25 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/118178**

| Patent document cited in search report | | | Publication date (day/month/year) | Patent family member(s) | | | Publication date (day/month/year) |
|---|---|---|---|---|---|---|---|
| CN | 111684732 | A | 18 September 2020 | JP | 2021506167 | A | 18 February 2021 |
| | | | | WO | 2019110833 | A1 | 13 June 2019 |
| | | | | KR | 20200096803 | A | 13 August 2020 |
| | | | | EP | 3659265 | A1 | 03 June 2020 |
| | | | | US | 2020348409 | A1 | 05 November 2020 |
| | | | | GB | 201811245 | D0 | 29 August 2018 |
| | | | | GB | 201720550 | D0 | 24 January 2018 |
| US | 2020363524 | A1 | 19 November 2020 | EP | 3932006 | A1 | 05 January 2022 |
| | | | | KR | 20200130920 | A | 23 November 2020 |
| | | | | WO | 2020231044 | A1 | 19 November 2020 |
| US | 2021076163 | A1 | 11 March 2021 | US | 2021337360 | A1 | 28 October 2021 |
| US | 2008259896 | A1 | 23 October 2008 | JP | 2009505060 | A | 05 February 2009 |
| | | | | WO | 2007021292 | A2 | 22 February 2007 |

Form PCT/ISA/210 (patent family annex) (January 2015)

**REFERENCES CITED IN THE DESCRIPTION**

**Patent documents cited in the description**

- CN 202111113069

- CN 202111204080